# EUROPEAN PATENT APPLICATION

(11) **EP 1 666 221 A1**
(43) Date of publication of application: **07.06.2006**
(21) Application number: 04788121.4
(22) Date of filing: 24.09.2004
(51) Int. Cl.: B28D 5/00, C03B 33/033

(54) **SUBSTRATE DICING SYSTEM, SUBSTRATE MANUFACTURING APPARATUS, AND SUBSTRATE DICING METHOD**

(30) Priority: 24.09.2003 JP 2003332416
(71) Applicant: Mitsuboshi Diamond Industrial Co., Ltd., Suita-city, Osaka Pref. 564-0044 (JP)
(72) Inventor: NISHIO, Yoshitaka, MITSUBOSHI DIAMOND IND. CO., Suita-city, Osaka 5640044 (JP); OKAJIMA, Yasutomo, MITSUBOSHI DIAMOND IND. CO., Suita-city, Osaka 5640044 (JP); OSHIMA, Yukio, MITSUBOSHI DIAMOND INDUSTRIAL CO., Suita-city, Osaka 5640044 (JP); ONARI, Hiroyuki, MITSUBOSHI DIAMOND INDUSTRIAL CO., Suita-city, Osaka 5640044 (JP); YOSHIMOTO, Kazuhiro, MITSUBOSHI DIAMOND IND. CO., Suita-city, Osaka 5640044 (JP)
(74) Representative: TBK-Patent
(86) International application number: PCT/JP2004/013962
(87) International publication number: WO 2005/028172

(57) **Abstract**

The objective of the present invention is to make an entire system compact and provide a substrate cutting system capable of efficiently cutting a variety of substrates. A substrate cutting system according to the present invention includes: pair of scribing line forming means arranged facing each other; pair of scribing devices for supporting the pair of scribing forming line means such that one of the pair of scribing forming line means moves on a first surface of a substrate in an X axial direction and the other of the pair of scribing forming means moves on a second surface of the substrate in the X axial direction; a scribing device guide body for supporting the pair of scribing devices such that the pair of scribing devices moves in a Y axial direction; and a substrate supporting means for supporting the substrate in an X-Y plane such that the pair of scribing forming line means scribes the first surface of the substrate and the second surface of the substrate.

## Description

### TECHNICAL FIELD

The present invention relates to a substrate cutting system and a substrate cutting line system used for cutting a mother substrate made of a variety of materials including a mother substrate (e.g., a glass substrate used as a display panel for a liquid crystal display device, etc). In particularly, the present invention relates to a substrate cutting system, a substrate manufacturing apparatus and a substrate cutting method preferably used for cutting a bonded mother substrate for which a pair of brittle material substrates is bonded to each other.

### BACKGROUND ART

Normally, a display panel for a liquid crystal display device, etc is formed with a glass substrate which is a brittle material substrate. In the liquid crystal display device, the display panel is fabricated by bonding a pair of glass substrates with an appropriate space formed therebetween and thereafter, injecting a liquid crystal in the space therebetween.,

When such a display panel is fabricated, a bonded mother substrate for which a pair of mother substrates is bonded to each other is cut so as to retrieve a plurality of display panels from the bonded mother substrate. A scribing device used for cutting the bonded mother substrate is disclosed in Japanese Utility Model Publication for Opposition No. 59-22101 (Reference 1).

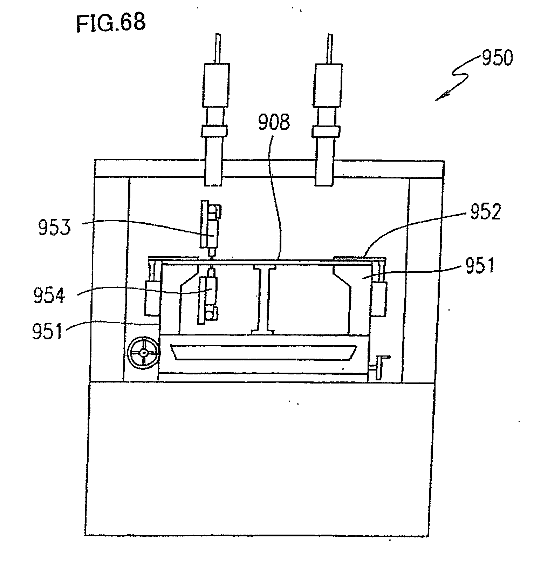

Figure **68** shows a view schematically showing the scribing device in Reference 1. The scribing device **950** includes tables **951** having side edges on both sides of a bonded mother substrate **908** mounted thereon, respectively. A clamp member **952** is attached to the table **951** for clamping each side edge of the bonded mother substrate **908.** The scribing device **950** includes a pair of cutter heads **953** and **954.** The cutter heads **953** and **954** are provided above and below the bonded mother substrate **908** respectively. The cutter heads **953** and **954** are in a state of facing each other with the bonded mother substrate **908** therebetween.

For example, a cutter wheel (disclosed in Patent Document No. 3074143) is used for the cutter heads **953** and **954,** which forms a deep vertical crack on a surface of the substrate.

In the scribing device **950** having such a structure, when the bonded mother substrate **908** is fixed to each table **951** by each clamp member **952,** a top surface and a bottom surface of the bonded mother substrate **908** are simultaneously scribed, respectively, by the pair of cutter heads **953** and **954,** and scribing lines are formed.

Reference 1: Japanese Utility Model Publication for Opposition No. 59-22101

### DISCLOSURE OF THE INVENTION

However, the scribing device **950** requires a breaking device, separately, for cutting the bonded mother substrate **908** on which the scribing lines have been formed. Also, when the bonded mother substrate **908** is cut by the breaking device, it is necessary to invert the bonded mother substrate **908** (inverting such that the upper surface of the bonded mother substrate **908** becomes the lower surface) in order to cut the mother substrate on the other side of the bonded mother substrate **908** after the mother substrate on one side of the bonded mother substrate **908** is cut. Thus, in order to cut display panels from the bondedmother substrate **908,** a complex line system has to be constructed.

In order to cut display panels from the bonded mother substrate **908** by using the scribing device **950**, a complex line system has to be constructed. The complex system has a footprint area several times larger than the scribing device **950**, which is one of the reasons of the manufacturing cost of display panel increases.

The scribing device **950** shown in Figure **68** simultaneously scribes the top and bottom surfaces of the bonded mother substrate **908** for which a pair of mother substrate is bonded. However, the direction of scribing is limited to only one direction and therefore, a cross scribing (scribing in a direction perpendicular to a scribing line) can not be performed.

Accordingly, another scribing device is further required in order to perform a cross scribing. Therefore, a problem exists that the efficiency of scribing the bonded mother substrate **908** is extremely poor.

Even when a variety of mother substrates are simultaneously cut from the top and bottom surfaces of the substrate by using a device similar to the aforementioned scribing device **950**, there is a problem that with one setting for a substrate, a process can not be performed in two directions perpendicular to each other.

The present invention is made to solve the aforementioned problems. The objective thereof is to reduce the footprint area so as to be compact and to provide a substrate cutting system, a substrate manufacturing apparatus and a substrate cutting method capable of cutting a variety of mother substrates efficiently.

A substrate cutting system according to the present invention includes: a pair of scribing line forming means arranged facing each other; a pair of scribing devices for supporting the pair of scribing forming line means such that one of the pair of scribing forming line means moves on a first surface of a substrate in an X axial direction and the other of the pair of scribing forming means moves on a second surface of the substrate in the X axial direction; a scribing device guide body for supporting the pair of scribing devices such that the pair of scribing devices moves in a Y axial direction; and a substrate supporting means for supporting the substrate in an X-Y plane such that the pair of scribing forming line means scribes the first surface of the substrate and the second surface of the substrate, thereby the objective described above being achieved.

The substrate supporting means may include: a substrate supporting device being supporting by the scribing device guide body and moving together with the pair of scribing devices in the Y axial direction; and a fixing device for fixing the substrate in the X-Y plane.

The substrate supporting device may support the substrate such that the substrate supporting device does not rub the substrate or exert any force on the substrate when the pair of scribing devices and the scribing device guide body move in the Y axial direction.

The substrate supporting device may include: a first substrate supporting section being provided on one side of the substrate supporting device with respect to a moving direction of the scribing device guide body.

The first substrate supporting section may include a plurality of first substrate supporting units, the plurality of first substrate supporting units moving in parallel along the moving direction of the scribing device guide body, and the plurality of first substrate supporting units moves together with the scribing device guide body along with the movement of the scribing device guide body.

The first substrate supporting unit may include a substrate supporting means for supporting the substrate.

The substrate supporting section may be a plurality of cylindrical rollers.

The substrate cutting system may include at least one rotation transmission means for rotating the plurality of cylindrical rollers in accordance with the movement of the scribing device guide body.

The substrate cutting system may include a control section for rotating the plurality of cylindrical rollers in accordance with the movement of the scribing device guide body.

The substrate supporting means may be a plurality of belts.

The substrate cutting system may include at least one rotation transmission means for circling the plurality of belts in accordance with the movement of the scribing device guide body.

The substrate cutting system may include a control section for circling the plurality of belts using a motor in accordance with the movement of the scribing device guide body.

The substrate supporting device may include : a second substrate supporting section being provided on another side of the substrate supporting device with respect to a moving direction of the scribing device guide body.

The second substrate supporting section may include a plurality of second substrate supporting units, the plurality of second substrate supporting units moving in parallel along the moving direction of the scribing device guide body.

The second substrate supporting unit may include a substrate supporting means for supporting the substrate.

The substrate supporting section may be a plurality of cylindrical rollers.

The substrate cutting system may include at least one rotation transmission means for rotating the plurality of cylindrical rollers in accordance with the movement of the scribing device guide body.

The substrate cutting system may include a control section for rotating the plurality of cylindrical rollers in accordance with the movement of the scribing device guide body.

The substrate supporting means may be a plurality of belts.

The substrate cutting system may include at least one rotation transmission means for circling the plurality of belts in accordance with the movement of the scribing device guide body.

The substrate cutting system may include a control section for circling the plurality of belts using a motor in accordance with the movement of the scribing device guide body.

The pair of scribing devices may include a cutter head for transmitting a pressing force of the scribing forming means onto the substrate using a servo motor.

The substrate cutting system may include a steam unit section for spraying steam onto the first surface and the second surface of the substrate.

A substrate drying means may be provided in the steam unit section, the substrate drying means being for drying the first surface and the second surface of the substrate.

The substrate drying means may include: at least one air knife body having a slit section formed thereon, the slit section capable of discharging a pressurized gas; an air knife supporting section for supporting the at least one air knife body such that a fluid lead-in path is formed between the at least one air knife body and a main surface of the substrate in a substrate transportation path, the at least one air knife body and the substrate move relative to each other in the substrate transportation path, the fluid lead-in path having approximately a uniform shape in a direction perpendicular to the relative moving direction; and a wall face, arranged facing the at least one air knife body in the relative moving direction, for constituting a fluid lead-out path, the fluid lead-out path leading out the dry gas such that the dry gas, which has been discharged from the slit section and passed through the fluid lead-in path, moves away from the main surface of the substrate.

The wall face may be arranged at a position facing the at least one air knife unit body such that a fluid-sectional area of the fluid lead-out path is larger than fluid-sectional area of the fluid lead-in path.

The air knife supporting section may include a clearance adjustment means for adjusting a clearance between the at least one air knife body and the main face of the substrate using the Venturi effect which occurs when the dry gas passes through the fluid lead-in path.

The clearance adjustment means may include: an elastic member for supporting the at least one air knife body between the elastic member and the main surface of the substrate in an oscillating manner; and a laminar flow forming face for passing the dry gas between the laminar flow forming face and the main surface of the substrate in a laminar flow state, the laminar flow forming face being formed on one side surface of the at least one air knife body, the one side surface facing the main surface of the substrate and forming a portion of the fluid lead-in path.

Each side of the at least one pair of air knife bodies on which the slit section is formed may be arranged facing each other.

The substrate cutting system may include a substrate carry-out device for retrieving the substrate cut by the steam unit section.

The substrate carry-out device may include a carry-out robot, the carry-out robot including: a substrate holding means for holding the substrate; a substrate rotating means for rotating the substrate holding means, having the substrate supported thereby, around a first axis vertical to the substrate; and a substrate circling means for circling the substrate rotating means around a second axis, the second axis being different from the first axis vertical to the substrate held by the substrate holding means.

The circling of the substrate holding means by the substrate circling means may be transmitted to the substrate rotating means by a dynamic power transmission mechanism which results in the rotation of the substrate rotating means to rotate.

The rotating direction of the substrate holdingmeans by the substrate rotating means may be opposite to the circling direction of the substrate holding means by the substrate circling means.

The rotating angle of the substrate holding means by the substrate rotating means may be twice the circling angle of the substrate holding means by the substrate circling means.

The rotating drive of the substrate holding means by the substrate rotating means and the circling drive of the substrate holding means by the substrate circling means may be independent from each other.

The dynamic power supply of the substrate rotating means and the dynamic power supply of the substrate circling means may be independent from each other.

The substrate cutting system may further include a substrate inversion device for inverting the top and bottom surfaces of the substrate transported by the substrate transportation device.

The substrate cutting system may include a positioning unit section for positioning the substrate.

The positioning unit section may include a plurality of vacuum adsorption heads for holding the substrate.

The substrate holding means may be a plurality of vacuum adsorption heads for holding the substrate.

The vacuum adsorption head may include: a vacuum adsorption pad for vacuum-adsorbing the substrate; a suction shaft for holding the suction pad and having an exhaust hole provided thereon, the exhaust hole for exhausting air into the adsorption pad; a casing section for regulating the moving range of the suction shaft to hold the suction shaft such that the suction shaft is slightly movable; and an elastic supporting member for elastically holding the suction shaft such that the suction shaft is slightly movable within the casing section in its axial direction and in a direction oblique to the axial direction.

The suction shaft includes the step section in a shape of flange provided at approximately in the middle of the casing section, the casing section may include: a cylindrical section having a space therewithin, the space for holding the elastic supporting member such that the elastic supporting member is deformable; an upper casing plate for closing an upper end of the cylindrical section with a first opening remaining open; and a lower casing plate for closing a lower end of the cylindrical section with a second opening remaining open, the elastic supporting section including: an upper spring held between the upper casing plate and the step section; a lower spring held between the lower casing plate and the step section.

The plurality of vacuum adsorption heads may include a plurality of adsorption pads for holding the substrate by suction or causing compressed air to gush so as to float the substrate, and the plurality of vacuum adsorption heads positions the substrate in a state in which a laminar flow is formed between each of the plurality of adsorption pads and the substrate.

The substrate cutting system may include a removal means for removing an unnecessary portion of the cut substrate.

The plurality of belts may be wound around between a frame on a carry-in side of the substrate and a frame on a carry-out side of the substrate, and the plurality of belts may lower below the scribing device guide body or may emerge above the scribing device guide body from under the scribing device guide body while the first substrate supporting section is moving.

The plurality of belts may be wound around between a frame on a carry-in side of the substrate and a frame on a carry-out side of the substrate, and the plurality of belts may lower below the scribing device guide body or may emerge above the scribing device guide body from under the scribing device guide body while the second substrate supporting section is moving.

The substrate may be a bonded mother substrate for which a pair of mother substrates is bonded to each other.

A substrate manufacturing apparatus may include: a substrate cutting system according to claim 1; and a chamfering system for chamfering an edge face of a cut substrate, wherein the substrate cutting system is connected to the chamfering system.

The substrate manufacturing apparatus may include: a substrate cutting system according to claim 1; and an inspection system for inspecting the function of a cut substrate, wherein the substrate cutting system is connected to the inspection system.

The substrate manufacturing apparatus may further include an inspection system for inspecting the function of the cut substrate.

A method according to the present invention for cutting a plurality of unit substrates from a mother substrate includes: a forming step of forming scribing lines on a first surface of the mother substrate and a second surface of the mother substrate by a pair of scribing line forming means, the forming step includes the step of forming, on the mother substrate, a first scribing line fox cutting a first unit substrate from the mother substrate and a second scribing line for cutting a second unit substrate from the mother substrate by moving the pressure onto the mother substrate by each of the pair of scribing line forming means such that the pressure onto the mother substrate is not interrupted, thereby the objective described above being achieved.

The forming step may further include the step of forming number N scribing line for cutting number N unit substrate from the mother substrate by moving the pressure onto the mother substrate such that the pressure onto the mother substrate is not interrupted, and N is an integer which is larger- than or equal to 3.

The forming step may include the steps of: (1) forming the scribing line on the mother substrate by moving the pressure onto the mother substrate along the outside' side of the first unit substrate and the outside' side of the second unit substrate: (2) forming the scribing line on the mother substrate by moving the pressure onto the mother substrate on an edge of an outer circumference of the mother substrate; and (3) forming the scribing line on the mother substrate by moving the pressure onto the mother substrate along the inside' side of the first unit substrate and the inside' side of the second unit substrate.

The inside' side of the second unit substrate faces the inside's side of the first unit substrate, the step (3) may include the steps of: (3a) forming the scribing line on the mother substrate bymoving the pressure onto the mother substrate along the inside' side of the first unit substrate; (3b) after performing (3a), forming the scribing line on the mother substrate by moving the pressure onto the mother substrate on an edge of an outer circumference of the substrate; (3c) after performing (3b), forming the scribing line on the mother substrate by moving the pressure onto the mother substrate along the inside' side of the second unit substrate; (3d) after performing (3c), forming the scribing line on the mother substrate by moving the pressure onto the mother substrate on an edge of an outer circumference of the substrate;

The forming step further includes the step of reducing the pressure onto the mother substrate.

The forming step may include the steps of: forming the scribing line along a first direction; and moving the pressure onto the mother substrate such that a scribing line formed along the first direction and a scribing line to be formed along a second direction are connected to each other by a curve, the second direction being different from the first direction.

A method according to the present invention for cutting a brittle material substrate, the brittle material substrate being cut by a device, the device including: a substrate supporting device for supporting a lower surface of the brittle material substrate and fixing at least one end of the brittle material substrate: and a pair of scribing line forming means arranged on both sides of the brittle material substrate's surface, the pair of scribing forming section facing each other with the brittle material substrate therebetween, the substrate supporting device has a space in the center of the substrate supporting device, the pair of scribing line forming means is arranged in the space in the middle of the substrate supporting device, the method including the step of: moving the pair of scribing line forming means in at least one direction of an X axial direction and a Y axial direction and further moving the substrate supporting device in at least one direction of the X axial direction and the Y axial direction so as to cut the brittle material substrate, thereby the objective described above being achieved.

The substrate supporting device may support the brittle material substrate so as not to rub the substrate or exert any force on the brittle material substrate.

Hereinafter, the function of the present invention will be described.

According to the substrate cutting system of the present invention, a substrate supporting means supports a substrate such that a space is movable on an X-Y plane surface, the space between which each scribing line forming means from one main surface side and the other main surface side faces each other. Therefore, each scribing line forming means respectively can scribe the substrate in accordance with undulations and bendings of the substrate such that each of the scribing line forming means balances the load applied to each of the scribing line forming means facing each other, respectively. As a result, the scribing lines formed on the substrate have an excellent quality. When the substrate is cut along the scribing lines, the cut face of the substrate has an extremely excellent quality.

Furthermore, according to the substrate cutting system, a space is provided between the scribing device guide body and the substrate supporting device. The space can be moved in the Y direction and the substrate can be fixed by a fixation device, thereby preventing the substrate being shifted from a predetermined position when the space is moved or both main surfaces of the substrate are scribed

According to the substrate cutting system, when a substrate supporting device moves in the Y axis direction, the substrate supporting device does not rub the substrate and supports the substrate or does not exerts any force on the substrate. Thus, when the scribing line forming means generates a vertical crack into the substrate, there is no possibility that an undesired crack will result from the cutter wheel.

Furthermore, according to the substrate cutting system, a space is provided between the scribing device guide body and the first substrate supporting section. The space is moved in the Y direction. When the space is moved or both main surfaces are scribed, the first substrate supporting section does not rub the substrate or does not exert any force on the substrate. Therefore, when a vertical crack is created within the substrate by the scribing line forming means, there is no possibility that an undesired crack will result from scribing line forming means.

Furthermore, according to the substrate cutting system, with a structure such that a space is provided between the scribing device guide body and the first substrate supporting unit, the space is moved in the Y direction, and the substrate is fixed by the fixation device, when the space is moved or scribing is performed on both mains surfaces of the substrate, the first substrate supporting unit does not rub the substrate or does not exert any force on the substrate. As a result, when a vertical crack is created within the substrate by the scribing line forming means, there is no possibility that an undesired crack will result from the scribing line forming means.

Furthermore, according to the substrate cutting system of the present invention, when the substrate supporting means moves in the Y direction, the first substrate supporting means does not rub the substrate or does not exert any force on the substrate 90. As a result, when a vertical crack is created within the substrate by the scribing line forming means, there is no possibility that an undesired crack will result from the scribing line forming means.

Furthermore, according to the substrate cutting system, the first substrate supporting means is include a plurality of cylindrical rollers. Thus, the substrate is firmly supported.

Furthermore, according to the substrate cutting system of the present invention, a rotation transmission means can select the direction of rotation or stop the rotation of the plurality of cylindrical rollers in accordance with the movement of the space. In this case, when the clamping of the substrate by the fixation device is released, the substrate supporting device can be used for transporting the substrate.

Furthermore, according to the substrate cutting system of the present invention, the outer circumferential speed of the plurality of cylindrical rollers is controlled so as to match the moving speed of the scribing device guide body in the Y direction. Therefore, when the plurality of cylindrical rollers moves in the Y direction, the plurality of cylindrical rollers does not rub the substrate or does not exert any force on the substrate. As a result, when a vertical crack is created within the substrate by the scribing line forming means, there is no possibility that an undesired crack will result from scribing line means.

Furthermore, according to the substrate cutting system of the present invention, the substrate supporting means is a plurality of belts, the surface of the substrate is supported on a surface of the belt compared to when a cylindrical roller is used. As a result, the substrate is stably supported.

Furthermore, according to the substrate cutting system of the present invention, the rotation transmission means can select the direction of the circling movement or stop the circling movement of plurality of belts in accordance with the movement of the space. Therefore, when the fixation of the substrate by the fixation device is released, the substrate supporting device can be used for transporting the substrate.

Furthermore, according to the substrate cutting system of the present invention, the circling speed of the plurality of belts is controlled so as to match the moving speed of the scribing device guide body in the Y direction. Therefore, when the plurality of belt moves in the Y direction, the plurality of belts does not rub the substrate or does not exert any force on the substrate. As a result, when a vertical crack is created within the substrate by the scribing line forming means, there is no possibility that an undesired crack will result from the scribing line forming means.

Furthermore, according to the substrate cutting system of the present invention, when the second substrate supporting section moves together with the movement of the space, the second substrate supporting section provides assistance to support the portion of the substrate which is not supported by the first substrate supporting section. When the space is moved or both main surfaces are scribed, the second substrate supporting section does not rub the substrate or exert any force on the substrate. Therefore, when a vertical crack is created within the substrate by the scribing line forming means, there is no possibility that an undesired crack will result from the scribing line forming means.

Furthermore, according to the substrate cutting system, with a structure such that a space is provided between the scribing device guide body and the second substrate supporting unit, the space is moved in the Y direction, and the substrate is fixed by the fixation device, when the space is moved or scribing is performed on both mains surfaces of the substrate, the second substrate supporting unit does not rub the substrate or does not exert any force on the substrate. As a result, when a vertical crack is created within the substrate by the scribing line forming means, there is no possibility that an undesired crack will result from the scribing line forming means.

Furthermore, according to the substrate cutting system of the present invention, when the substrate supporting means moves in the Y direction, the fir st substrate supporting means does not rub the substrate or does not exert any force on the substrate **90.** As a result, when a vertical crack is created within the substrate by the scribing line forming means, there is no possibility that an undesired crack will result from the scribing line forming means.

Furthermore, according to the substrate cutting system, the first substrate supporting means is include a plurality of cylindrical rollers. Thus, the substrate is firmly supported.

Furthermore, according to the substrate cutting system of the present invention, a rotation transmission means can select the direction of rotation or stop the rotation of the plurality of cylindrical rollers in accordance with the movement of the space. In this case, when the clamping of the substrate by the fixation device is released, the substrate supporting device can be used for transporting the substrate.

Furthermore, according to the substrate cutting system of the present invention, the outer circumferential speed of the plurality of cylindrical rollers is controlled so as to match the moving speed of the scribing device guide body in the Y direction. Therefore, when the plurality of cylindrical rollers moves in the Y direction, the plurality of cylindrical rollers does not rub the substrate or does not exert any force on the substrate. As a result, when a vertical crack is created within the substrate by the scribing line forming means, there is no possibility that an undesired crack will result from scribing line means.

Furthermore, according to the substrate cutting system of the present invention, the substrate supporting means is a plurality of belts, the surface of the substrate is supported on a surface of the belt compared to when a cylindrical roller is used. As a result, the substrate is stably supported.

Furthermore, according to the substrate cutting system of the present invention, the rotation transmission means can select the direction of the circling movement or stop the circling movement of plurality of belts in accordance with the movement of the space. Therefore, when the fixation of the substrate by the fixation device is released, the substrate supporting device can be used for transporting the substrate.

Furthermore, according to the substrate cutting system of the present invention, the circling speed of the plurality of belts is controlled so as to match the moving speed of the scribing device guide body in the Y direction. Therefore, when the plurality of belt moves in the Y direction, the plurality of belts does not rub the substrate or does not exert any force on the substrate. As a result; when a vertical crack is created within the substrate by the scribing line forming means, there is no possibility that an undesired crack will result from the scribing line forming means.

Furthermore, according to the substrate cutting system of the present invention, since the pressure force of the scribing line forming means is transmitted to the substrate by using the servo motor, the transmittance of the pressure force to the substrate becomes responsive. Thus, the pressure force (scribing load) of the scribing line forming means to the substrate during the scribing can be changed.

Furthermore, according to the substrate cutting system of the present invention, in the case that the substrate is a brittle substrate, when the steam is sprayed onto the top and bottom surfaces of the substrate where a scribing line is formed, the heated moisture infiltrates inside a vertical crack of each scribing line, and the vertical crack extends due to the expanding force. As a result, the substrate can be cut.

Furthermore, according to the substrate cutting system of the present invention, since a substrate-adhered material removal means is provided in order to dry the top and bottom surfaces of the substrate, steam is sprayed on the top and the bottom surfaces of the substrate, and the moisture on the top and the bottom surfaces of the substrate can be completely removed after the substrate is cut. Therefore, there is no need to provide a device having a special anti-water means for the next step.

Furthermore, according to the substrate cutting system of the present invention, the flow of dry gas is formed in the fluid lead-in path, the dry gas being uniformly compressed in a direction perpendicular to the moving direction of the substrate. The fluid material adhered to top and bottom surfaces of the substrate is mixed with the dry gas in the fluid lead-in path and is guided to the fluid lead-out path whose sectional area is larger than that of the fluid lead-in path. The dry gas diffused in the fluid lead-out path forms the flow which accompanies the fluid adhered material in misty state and moves away from top and bottom surfaces of the substrate along the wall surfaces. Thus, the dry gas is compressed in the fluid lead-in path, and thereafter, the dry gas is diffused in the fluid lead-out path. Therefore, the material adhered to the top and bottom surfaces of the substrate does not condense and is mixed into the fluid so as to reduce the size of the material (misty, fineness), whereby the material adhered to the substrate is removed. As a result, both sides of the substrate can be completely dried.

Furthermore, according to the substrate cutting system of the present invention, a wall surface is arranged on a position facing an air knife unit such that the cross-sectional area of the fluid lead-out path is larger than the cross-sectional area of the fluid lead-in path. Thus, the pressurized fluid gushes out from the narrow fluid lead-in path to the wide fluid lead-out path with a great force. Therefore, the flow speed of the fluid increase in one shot . As a result, the capability of removing the adhered material from the top and bottom surfaces of the substrate is further increased.

Furthermore, according to the substrate cutting system of the present invention, air knife supporting sections include clearance automatic adjustment means which adjusts the clearance between air knife bodies and the corresponding top and bottom surfaces of the substrate using the Venturi effect which occurs when the fluid passes through the fluid lead-in path. Thus, the clearance can by stably maintained by adsorbing the bendings and the like of the substrate.

Furthermore, according to the substrate cutting system of the present invention, the clearance adjustment means includes elastic bodies and laminar flow forming faces, the elastic bodies supporting the air knife bodies such that the air knife bodies can oscillate between the elastic bodies and the respective main surfaces (top or-/and bottom) surfaces, and the laminar flow forming faces facing the respective top and bottom surfaces of the substrate, forming portions of the fluid lead-in path on one side surface of the respective air knife main bodies and passing the fluid in laminar flow between the laminar flow forming faces and the respective top and bottom surfaces of the substrate. Thus, the laminar flow passes through the fluid lead-in path which is formed on the laminar flow forming faces and the respective top and bottom surfaces of the substrate. As a result, negative pressure is created in the vicinity of the main surfaces of the substrate. The compressive spring of the elastic bodies for holding the air knife bodies upward (holding force) and the negative pressure for attracting the air knife body (suction force) are balanced. As a result, the fluid lead-in path is easily created, the fluid lead-in path having approximately a uniform shape between the air knife bodies and the main surfaces of the substrate in a direction perpendicular to the moving direction of the substrate.

Furthermore, according to the substrate cutting system of the present invention, since air knife bodies are arranged facing each side where slit section is formed, the dry gas steadily flows along the fluid lead-out path so as to move away from the main surface of the substrate, thereby facilitating the drying of the substrate.

Furthermore, according to the substrate cutting system of the present invention, a cut unit substrate is retrieved by using the substrate carry-out device Thus, it is easy to pass the substrate with the device for the next step.

Furthermore, according to the substrate cutting system of the present invention, the substrate carry-out device includes at least one carry-out robot which includes the substrate rotation means and the substrate circling means. The substrate rotation means rotates the substrate holding means around the first axis and the substrate circling means causes the substrate holding means to circle around the second axis. Thus, the substrate carry-out device can transport the cut unit substrate to the next step with a desired attitude on a plane where the substrate is transported and can simultaneously transport the cut substrate to a plurality of devices for the next step.

Furthermore, according to the substrate cutting system of the present invention, when the rotation operation of substrate rotation means and the circling operation of the substrate circling means are combined, the carry-out robot can transport the cut unit substrate to the next step with a desired attitude on a plane where the substrate is transported.

Furthermore, according to the substrate cutting system of the present invention, the unit substrate can be set at a desired attitude on a transportation plane such that the moving range of a robot arm is minimized.

Furthermore, according to the substrate cutting system of the present invention, the movement of the robot arm can be minimized.

Furthermore, according to the substrate cutting system of the present invention, the attitude of a unit substrate on a transportation plane is readily set.

Furthermore, according to the substrate cutting system of the present invention, the unit substrate can be easily set at a desired attitude on a transportation plane.

Furthermore, according to the substrate cutting system of the present invention, when it is necessary to invert the substrate (invert the sides of a unit panel) for a device of the next step, it is easily handled.

Furthermore, according to the substrate cutting system of the present invention, since the substrate is positioned on the first substrate supporting section before scribing lines are formed. Thus, scribing lines can be accurately formed along lines to be scribed on the top and bottom surfaces of the substrate

Furthermore, according to the substrate cutting system of the present invention, the plurality of vacuum adsorption heads firmly can receive the substrate from the previous step and stably lift the substrate so as to position the substrate.

Furthermore, according to the substrate cutting system of the present invention, the cut substrate is firmly received and passed on by the plurality of vacuum adsorption heads.

Furthermore, according to the substrate cutting system of the present invention, adsorption shafts of the plurality of vacuum adsorption heads are slightly movable in its axial direction and in a direction diagonal to the axial direction, and are elastically supported so as to move accordingly. Thus, the adsorption pad can firmly hold the substrate in accordance with the main surface of the substrate even if there is a presence of undulations or bendings on the substrate.

Furthermore, according to the substrate cutting system of the present invention, the adsorption pad of the vacuum adsorption head is returned to a state, due a restoring force of the spring, in which the adsorption face of the adsorption pad virtually faces directly downward before the adsorption pad adsorbs the substrate and when the adsorption pad stops adsorbing the substrate. Thus, when the adsorption pad adsorbs the substrate, there is no possibility that the adsorption pad causes damages to the substrate and it does not fail to adsorb the substrate.

Furthermore, according to the substrate cutting system of the present invention, the compressed air is caused to gush out from the respective adsorption pads of the vacuum adsorption heads, and the adsorption pads follow undulations or bendings of the substrate due to the Venturi effect. The compressed air moves so as to maintain the interval constant, the interval being between the substrate and the adsorption pads. Thus, the flow of air between the substrate and the adsorption pads becomes a laminar flow, and the interval between the substrate and the adsorption pads are maintained constant. As a result, the substrate is not damaged and can be accurately positioned.

Furthermore, according to the substrate cutting systemof the present invention, undesiredportions remaining on unit substrates cut from the substrate can be easily removed.

Furthermore, according to the substrate cutting system of the present invention, the substrate is not rubbed and any force does not exert on the substrate. Therefore, when a vertical crack is created within the substrate by scribing line forming means, there is no possibility that an undesired crack will result from the scribing line forming means.

Furthermore, according to the substrate cutting system of the present invention, the substrate is not rubbed and any force does not exert on the substrate. Therefore, when a vertical crack is created within the substrate by scribing line forming means, there is no possibility that an undesired crack will result from the scribing line forming means.

As a bonded mother substrate for which mother substrates are bonded to each other, since a bonded mother substrate, for which brittle material substrates are bonded to each other and is used for an FPD, is bonded by using an adhesive, bendings and undulations are created in the bonded mother substrate. In the substrate cutting system according to the present invention, each scribing line forming means can scribe the substrate in accordance with the undulations and bendings of the substrate so as to balance the load applied to each scribing line forming means facing each other. Thus, the scribing line forming means can be effectively applied to cutting the bonded mother substrate.

According to a substrate manufacturing apparatus, when a cut unit substrate is transported to a device for the next or later step, an edge of an end face of the cut unit substrate can be chipped and a micro fissure cab be created. As a result, a crack resulting from the chip or the fissure can extend in the entire unit substrate and damage the substrate. However, a chamfering system is connected to the substrate cutting system according to the present invention so as to chamfer end faces of the unit substrate. Thus, it is possible to prevent the damage to the substrate.

According to a substrate manufacturing apparatus, powder (cullet powder) created when the substrate is cut into the unit substrates damages the top surface of the substrate and cuts an electrode formed on the unit substrate. However, the inspection system is connected to the substrate cutting system so as to be able to detect a defect in the substrate (e.g., a scratch or cut of the electrode) at an early stage. Thus, the cost for the unit substrate in manufacture can be reduced.

When a cut unit substrate is transported to a device for the next ox later step, an edge of an end face of the cut unit substrate can be chipped and a micro fissure cab be created. As a result, a crack resulting from the chip or the fissure can extend in the entire unit substrate and damage the substrate.. However, according to the substrate manufacturing apparatus of the present invention, a chamfering system is connected to the substrate cutting system according to the present invention so as to chamfer end faces of the unit substrate. Thus, it is possible to prevent the damage to the substrate.

According to a substrate manufacturing apparatus, powder (cullet powder) created when the substrate is cut into the unit substrates damages the top surface of the substrate and cuts an electrode formed on the unit substrate. However, according to the substrate manufacturing apparatus of the present invention, the inspection system is connected to the substrate cutting system so as to be able to detect a defect in the substrate (e.g., a scratch or cut of the electrode) at an early stage. Thus, the cost for the unit substrate in manufacture can be reduced.

According to a substrate cutting method, a first scribing line and a second scribing line are formed without stopping the movement of pressure onto the mother substrate. Thus, the scribing processing time for forming the scribing lines can be reduced. The scribing lines formed on the mother substrate can prevent the mother substrate from being cut by an external factor (e.g., the movement of the substrate supporting device). Furthermore, since the mother substrate is unlikely to be cut into two or more portions during forming the scribing lines, it is unlikely that a chip, an oblique cut face or the like will be created on the cut faces of the unit substrate onto which steam is sprayed by the steam unit section.

Furthermore, according to a substrate cutting method, since the scribing lines formed on the mother substrate is unlikely to be cut by an external factor, the mother substrate is prevented from being cut into larger than or equal to two during forming the scribing lines. Thus, it is unlikely that a chip, an oblique cut face or the like will be created on the cut faces of the N unit substrates onto which steam is sprayed by the steam unit section.

Furthermore, according to a substrate cutting method, a first scribing line and a second scribing line are formed without stopping the movement of pressure onto the mother substrate. Thus, the scribing processing time for forming the scribing lines can be reduced. The scribing lines formed on the mother substrate are unlikely to be cut an external factor (e.g., the movement of the substrate supporting device). Thus, since the mother substrate is unlikely to be cut into two or more portions during forming the scribing lines, it is unlikely that a chip, an oblique cut face or the like will be created on the cut faces of the unit substrate onto which steam is sprayed by the steam unit section.

Furthermore, according to a substrate cutting method, a first scribing line and a second scribing line are formed without stopping the movement of pressure onto the mother substrate. Thus, the scribing processing time for forming the scribing lines can be reduced. The scribing lines formed on the mother substrate are unlikely to be cut by an external force. Thus, since the mother substrate can be prevented from being be cut into two or more portions during forming the scribing lines, it is unlikely that a chip, an oblique cut face or the like will be created on the cut faces of the unit substrate onto which steam is sprayed by the steam unit section.

Furthermore, according to a substrate cutting method, since pressure onto the mother substrate is reduced when the mother substrate is pressed by the scribing line forming means, abrasion of the scribing line forming means can be suppressed.

According to a substrate cutting method, the pressure onto the mother substrate can be moved such that the scribing line formed along the first direction and the scribing line to be formed along the second direction are connected by a curve. Thus, damage to each scribing line forming means can be reduced, the damage being created when the direction of each scribing line forming means is changed from the first direction to the second direction.

According to a substrate cutting method, the substrate supporting device is moved together with the pair of scribing line forming means. Thus, a scribing line is formed at a desired location and a brittle material substrate can be cut while the brittle material substrate is partially supported without bending the brittle material substrate.

According to a substrate cutting method, when the substrate supporting device is moved, an external force which exerts on the brittle material substrate is suppressed. Thus, it is possible to suppress the creation of an undesired crack (horizontal crack) when a scribing line is formed.

The substrate cutting system according to the present invention is capable of simultaneously performing a cutting processing in two directions orthogonal to each other on the top and bottom surfaces of the substrate with one setting of the substrate since the substrate cutting system according to the present invention has a structure that the substrate is held by clamp devices and is supported by a substrate supporting device which slides in accordance with to the movement of a cutting guide body. Thus, the size of the entire system can be reduced, and a variety of substrates can be effectively cut.

### BREIF DESCRIPTION OF THE DRAWINGS

Figure **1** is a perspective view schematically showing a substrate cutting system **1** according to Embodiment 1 of the present invention.
Figure **2** is a perspective view schematically showing the substrate cutting system **1** when viewed from another direction.
Figure **3** is a perspective view schematically showing enlarged important constituents of the substrate cutting system **1.**
Figure **4** is a perspective view schematically showing other enlarged important constituents of the substrate cutting system 1.
Figure **5A** is a view for explaining a carry-out robot **140** of a substrate carry-out device **80.**
Figure **5B** is a view for explaining the carry-out robot **140** of the substrate carry-out device **80.**
Figure **5C** is a view for explaining a carry-out robot **500.**
Figure **5D** is a view for explaining the carry-out robot **500 .**
Figure **5E** is a view for explaining the carry-out robot **500.**
Figure **6** is a side view showing a first substrate supporting unit provided on the substrate carry-out device **80.**
Figure **7** is a front view showing a first substrate supporting section when viewed from a scribing device guide body's side of the substrate cutting system **1.**
Figure **8** is a block diagram schematically showing a clutch unit provided on a substrate supporting section of the substrate cutting system **1.**
Figure **9** is a side view showing the clutch unit.
Figure **10** is a front view showing important constituents of a steam unit section of the substrate cutting system **1.**
Figure **11** is a side cross-sectional view partially showing the structure of a steamunit of the steamunit section.
Figure **12** is a perspective view showing the structure of a clamp device provided in the substrate cutting system **1** and explaining the operation thereof.
Figure **13** is a perspective view showing the structure of the clamp device provided in the substrate cutting system **1** and explaining the operation thereof.
Figure **14** is a side view showing an example of a cutter head provided in a substrate cutting device of the substrate cutting system **1.**
Figure **15 is** a front view showing important constituents of the cutter head.
Figure **16** is a front view showing another example of the cutter head provided in the substrate cutting device.
Figure **17** is a schematical plan view for explaining the operation of the substrate cutting system **1.**
Figure **18** is a schematical plan view for explaining the operation of the substrate cutting system **1.**
Figure **19** a diagram showing a scribing pattern when a substrate is scribed in the substrate cutting system.
Figure **20** is a broken cross-sectional view showing the structure of the vacuum adsorption head **600**.
Figure **21** is a cross-sectional view showing the structure of the vacuum adsorption head **600.**
Figure **22** is an exploded perspective view showing the structure of the vacuum adsorption head **600.**
Figure **23** is a cross-sectional view showing an example of an adsorption pad used in the vacuum adsorption head **600**.
Figure **24** is a view schematically showing a vacuum adsorption device **640** used in the vacuum adsorption head **600**.
Figure **25A** is a diagram schematically showing a positional change of the adsorption pad in the vacuum adsorption head.
Figure **25B** is a diagram schematically showing a positional change of the adsorption pad in the vacuum adsorption head.
Figure **25C** is a diagram schematically showing a positional change of the adsorption pad in the vacuum adsorption head.
Figure **26** is a diagram schematically showing a state an object to be adsorbed having a step is adsorbed in the vacuum adsorption device **640**.
Figure **27** is a top view showing a table having vacuum adsorption heads used thereon.
Figure **28** is a side view showing a table having vacuum adsorption heads used thereon.
Figure **29** is an explanatory diagram for explaining the positioning operation.
Figure **30** is a diagram schematically showing a state in which an object to be adsorbed is floated.
Figure **31** is a cross-sectional view showing the structure of an adsorption pad in the conventional example 1.
Figure **32** is a cross-sectional view showing the structure of an adsorption pad in the conventional example 2.
Figure **33** is a perspective view schematically showing an example of a substrate-adhered material removal device **700.**
Figure **34** is a perspective view schematically showing an air knife unit and a unit holding section which holds the air knife unit.
Figure **35** is a schematical cross-sectional view for explaining the structure of an air knife which constitutes the air knife unit.
Figure **36** is a diagram for explaining a state of air knife units before the substrate is transported to a substrate processing section.
Figure **37** is a diagram for explaining a state of the air knife units when the air knife units process the top and bottom surfaces of the substrate.
Figure **38** is a per spective view schematically showing a substrate-adhered material removal device **1000.**
Figure **39** is a perspective view schematically showing the structure of another unit holding section.
Figure **40** is aperspectiveviewschematically showing a substrate-adhered material removal device **1500.**
Figure **41** is an external cross-sectional view showing a connection air knife unit **1600**.
Figure **42** is a diagram schematically showing the structure of a substrate-adhered material removal device **2000**.
Figure **43** is a perspective view schematically and entirely showing a substrate cutting system **200**.
Figure **44** is a plan view schematically showing the substrate cutting system **200**.
Figure **45** is a side view schematically showing the substrate cutting system **200**.
Figure **46** is a perspective view schematically showing a positioning unit section of the substrate cutting system **200**.
Figure **47** is a plain view schematically showing a lift conveyor section of the substrate cutting system **200.**
Figure **48** is a side view showing a third substrate supporting unit of the lift conveyor section **200.**
Figure **49** is a schematical view for explaining a panel separation section of the substrate cutting system **200.**
Figure **50** is a partial schematical plan view for explaining the operation of the substrate cutting system **200**.
Figure **51** is a partial schematical plan view for explaining the operation of the substrate cutting system **200**.
Figure **52** is a partial schematical plan view for explaining the operation of the substrate cutting system **200**.
Figure **53** is a partial schematical plan view for explaining the operation of the substrate cutting system **200**.
Figure **54** is a partial schematical plan view for explaining the operation of the substrate cutting system **200**.
Figure **55** is a partial schematical plan view for explaining the operation of the substrate cutting system **200**.
Figure **56** is a perspective view schematically and entirely showing an example of a substrate cutting system **400**.
Figure **57A** is a perspective view schematically showing a first substrate supporting unit of a substrate supporting device of the substrate cutting system **400**.
Figure **57B** is a perspective view schematically showing a first substrate supporting unit of the substrate supporting device of the substrate cutting system **400**.
Figure **58** is a side view for explaining the operation of the substrate supporting device of the substrate cutting system **400**.
Figure **59** is a schematical plan view for explaining the operation of the substrate cutting system **400**.
Figure **60** is a schematical plan view for explaining the operation of the substrate cutting system **400**.
Figure **61** is a schematical plan view for explaining the operation of the substrate cutting system **400**.
Figure **62** is a schematical plan view for explaining the operation of the substrate cutting system **400**.
Figure **63** is a diagram schematically showing an example of the structure of a substrate manufacturing apparatus **801** according to the present invention.
Figure **64** is a diagram showing the structure of a substrate manufacturing apparatus **802** and a substrate manufacturing apparatus **803** according to the present invention.
Figure **65** is a flowchart showing a procedure for cutting the bonded mother substrate **90** according to an embodiment of the present invention.
Figure **66** is a diagram showing the bonded mother substrate **90** which is used in the scribing step performed in step **1102** (Figure **65**).
Figure **67** is a flowchart showing a scribing procedure which is performed during the scribing step performed in step **1102** (see Figure **65**).
Figure **68** is a front view showing the structure of a conventional scribing device.

### BEST MODE FOR CARRYING OUT THE INVENTION

Hereinafter, embodiments of the present invention will be described in detail with reference to the drawings.

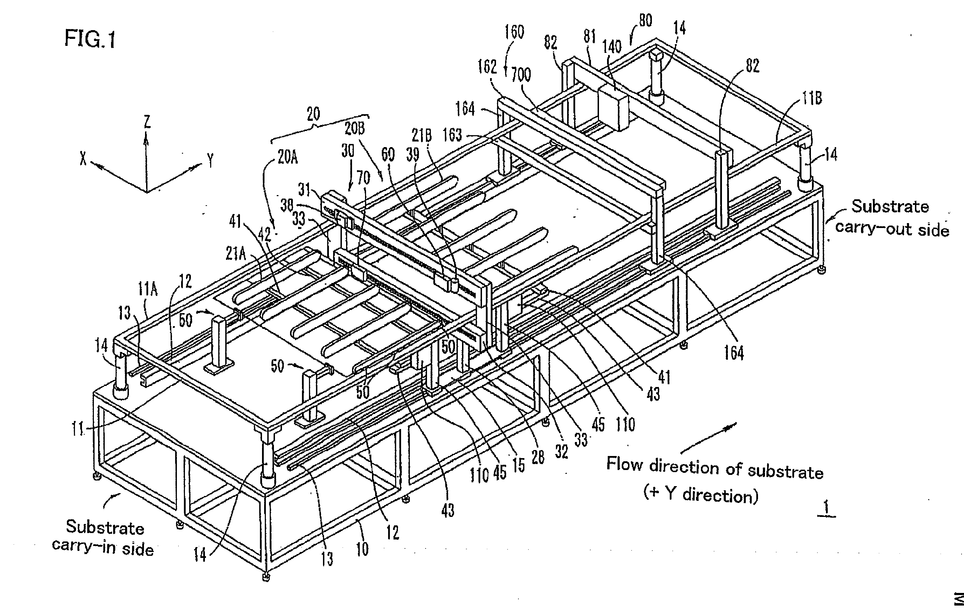

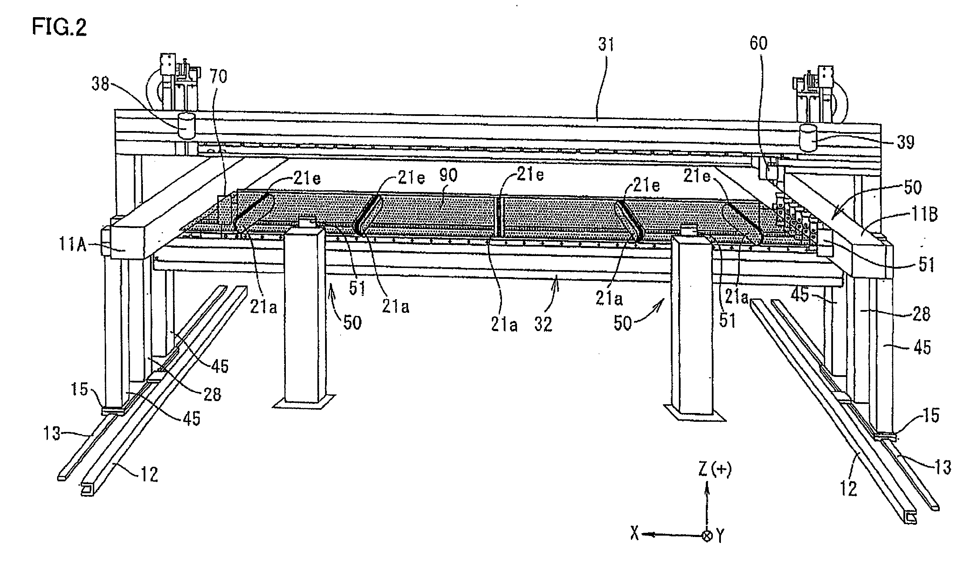

Figures **1** and **2** are perspective views entirely and schematically showing one example of a substrate cutting system according to the present invention,. Figures **1** and **2** are viewed from different directions.

In the present invention, the term "substrate" includes a single plate, such as a mother substrate cut into a plurality of substrates, a metal substrate (e.g., a steel plate), a wood plate, a plastic plate and a brittle material substrate (e.g., a ceramic substrate, a semiconductor substrate and a glass substrate). However, the substrate according to the present invention is not limited to such a single plate. Furthermore, the substrate according to the present invention includes a bonded substrate for which a pair of substrates is bonded to each other and a stacked substrate for which a pair of substrates is stacked on each other.

In the substrate cutting system in the present invention, for example, when a panel substrate (bonded substrate for display panel) for a liquid crystal device is manufactured from a pair of glass substrates bonded to each other, a plurality of panel substrates (bonded substrate for display panel) are cut, by the substrate cutting system according to the present invention, from the bonded mother substrate **90** for which a pair of mother glass substrates is bonded to each other.

In a substrate cutting system **1** according to Embodiment **1** of the present invention, description will be made by referring to the side where a first substrate supporting section **20A** is arranged, as a "substrate carry-in side" and the side where a substrate carry-out device **80** is arranged, as a "substrate carry-out side", respectively. In the substrate cutting system 1 according to the present invention, the direction in which a substrate is transported (flow direction of the substrate) is +Y direction from the substrate carry-in side to the substrate carry-out side. The direction in which the substrate is transported is a direction perpendicular to a scribing device guide body **30** in a horizontal state. The scribing device body guide **30** is provided along the X direction.

The substrate cutting system **1** includes a mounting base **10** in a hollow rectangular parallelepiped. Four pillars **14** are provided on the upper surface of the mounting base **10.** A main frame **11** having a frame shape is provided at the top portion of the pillars **14**. A substrate supporting device **20** is arranged on the upper surface of the mounting base **10.** The substrate supporting device **20** supports the bonded mother substrate **90** in a horizontal state, the bonded mother substrate **90** being transported to the substrate cutting system **1** by a transportation robot.

As shown in Figure **1,** the substrate supporting device **20** includes a first substrate supporting section **20A** and a second substrate supporting section **20B.** The first substrate supporting section **20A** is arranged on the substrate carry-in side of the substrate cutting system **1** in order to support the bonded mother substrate **90** which is carried onto the main frame **11**. The second substrate supporting section **20B** is arranged on the substrate carry-out side in order to support the bonded mother substrate **90** after the bonded mother substrate **90** is cut and display panels are sequentially carried out from the substrate cutting system. The first substrate supporting section **20A** side in the mounting base **10** is referred to as a substrate carry-in side The second substrate supporting section **20B** side in the mounting base **10** is referred to as a substrate carry-out side.

As shown in Figure 2, above the mounting base **10,** clamp devices **50** are provided in order to hold the substrate. The substrate is supported in a horizontal state by the substrate supporting device **20** (first substrate supporting unit **21A).** Furthermore, as shown in Figure **1,** a scribing device guide body **30** is provided on the top surface of the mounting base **10**. The scribing device guide body **30** is slidable along frames **11A** and **11B** in a longitudinal direction of the main frame **11.** The scribing device guide body **30** includes an upper side guide rail **31** above the main frame **11** and a lower side guide rail **32** below the main frame **11**. The upper side guide rail **31** is constructed along the X direction which is perpendicular to the frames **11A** and **11B** in the longitudinal direction of the main frame **11.** The lower guide rail **32** is constructed along the upper guide rail **31.** The upper guide rail **31** and the lower guide rail **32** integrally move along the frames **11A** and **11B** in the longitudinal direction (Y direction) of the main frame **11**.

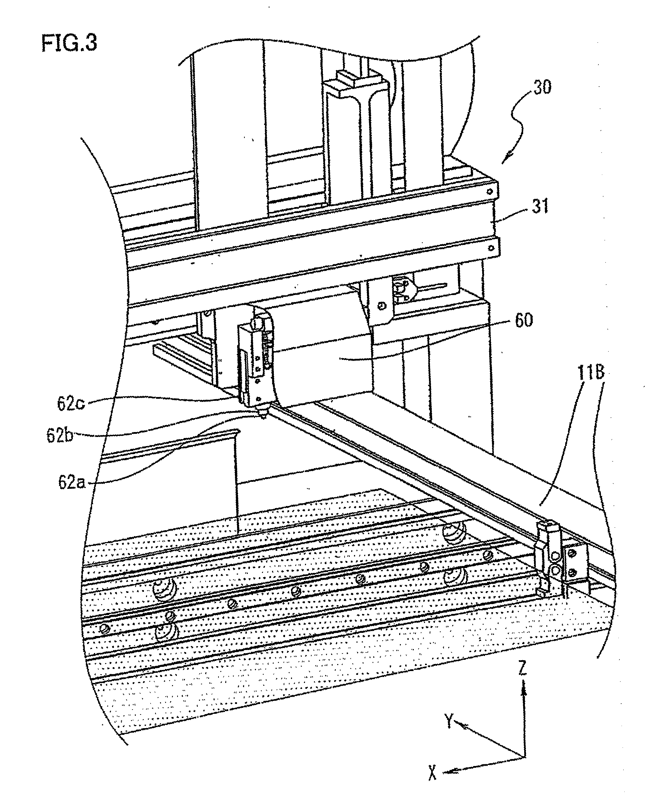

Figure **3** is a view schematically showing the vicinity of the upper guide rail **31** of the scribing device guide body **30**. An upper substrate cutting device **60** is attached to the upper scribing guide rail **31** so as to be movable along the upper guide rail **31**.

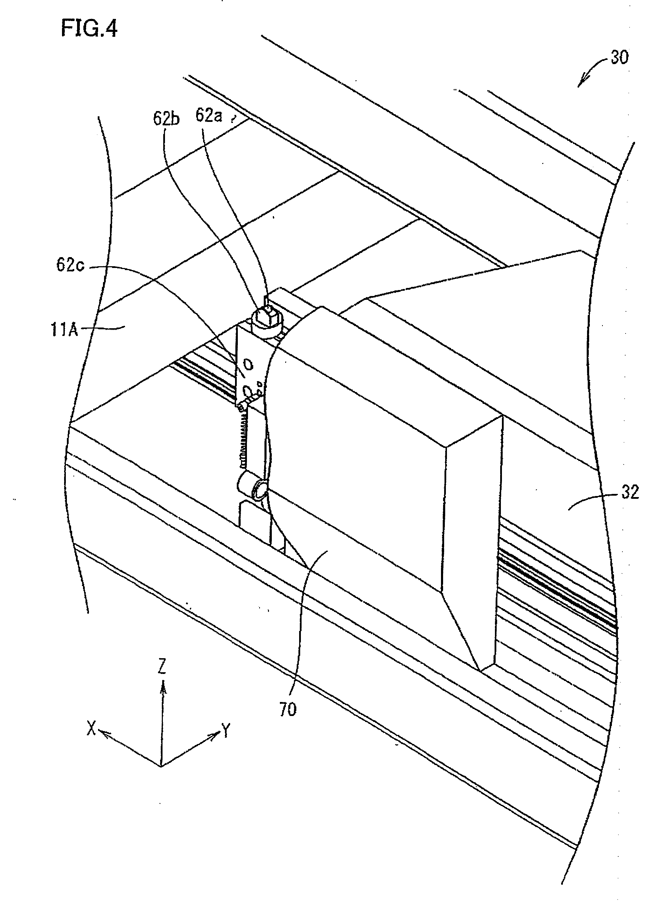

Figure **4** is a view schematically showing the vicinity of the lower guide rail **32** of the scribing device guide body **30**. A lower substrate cutting device **70** is attached to the lower scribing guide rail **32** so as to be movable along the lower scribing guide rail **32.**

The upper substrate cutting device **60** and the lower substrate cutting device **70** reciprocate along the upper guide rail **31** and the lower guide rail **32,** respectively, due to linear motors. Stators for the linear motors are attached to the upper guide rail **31** and the lower guide rail **32.** Movers for the linear motors are attached to the upper substrate cutting device **60** and the lower substrate cutting device **70**. The upper substrate cutting device **60** and the lower substrate cutting device **70** cut each glass substrate on the upper and lower sides of the bonded mother substrate **90** into a plurality of display panels, the mother substrate **90** being held in a horizontal state by the clamp devices **50** and supported by the substrate supporting device **20** to provide assistance in holding the mother substrate **90.**

A first optical device **38** is provided at one end of the scribing device guide body **30** so as to be movable along the scribing device guide body **30.** The first optical device **38** captures a first alignment mark provided on the bonded mother substrate **90** which is held by the clamp devices **50** and supported by the substrate supporting device **20.** A second optical device **39** is provided at the other end of the scribing device guide body **30** so as to be movable along the scribing device guide body **30.** The second optical device **39** captures a second alignment mark provided on the bonded mother substrate **90.**

Stators **12** for the linear motors are provided on the upper surface of the mounting base **10** along the frames **11A** and **11B** in the longitudinal direction of the main frame **11.** The linear motors having the stators **12** move the scribing device guide body **30.** Each stator **12** is formed in a shape of a flat and hollow rectangular parallelepiped, the outside surface thereof being open. The cross section thereof is formed in a shape of "⊐". Movers (not shown) for the linear motors is inserted in each of the stators, respectively. The motors are movable along the frames **11A** and **11B** in the longitudinal direction of the main frame **11** with respect to guide bases **15.** The guide bases **15** hold the pillars **28** which support both ends of the scribing device guide body **30.**

A plurality of permanent magnets is arranged on each stator **12** along the longitudinal direction of the main frame **11.** Magnetic poles of adjacent permanent magnets are in a state opposed to each other . Each mover is constructed with an electromagnet, respectively. When the magnetic pole of the electromagnet which constitutes each mover is sequentially changed, each mover slides along each stator **12.**

As shown in Figure **3,** the upper substrate cutting device **60** is attached to the upper guide rail **31** of the scribing device guide body **30.** As shown in Figure **4,** the lower substrate cutting device **70** is attached to the lower guide rail **32.** The lower substrate cutting device **70** has a similar structure to the upper substrate cutting device **60** but is in an inverted state.

As described above, the upper substrate cutting device **60** and the lower substrate cutting device **70** slide along the upper guide rail **31** and the lower guide rail **32,** respectively, due to the linear motors.

For example, in the upper substrate cutting device **60** and the lower substrate cutting device **70,** cutter wheels **62a** (a scribing ling forming section) are rotatably attached to tip holders **62b**, respectively. The cutter wheels **62a** scribe an upper glass substrate of the bonded mother substrate **90.** Furthermore, the tip holders **62b** are rotatably attached to cutter heads **62c.** The tip holders **62b** are rotatable about an axis in the vertical direction with respect to the surface of the bonded mother substrate **90** which is held by the clamp devices **50.** The cutter heads **62c** are movable, along the vertical direction, with respect to the surface of the bonded mother substrate **90.** The cutter heads **62c** are movable by a driving means (not shown). A load is applied to the cutter wheels **62a** by an energizing means (not shown) when appropriate.

The upper substrate cutting device **60** supports the cutter wheel **62a** such that the cutter wheel **62a** moves on the upper glass substrate in the X direction.

The lower substrate cutting device **70** provided on the lower guide rail **32** has a similar structure to the upper substrate cutting device **60** but is in an inverted state. The cutter wheel **62a** (see Figure **4)** of the lower substrate cutting device **70** is provided so as to face the cutter wheel **62a** of the upper substrate cutting device **60**.

The cutter wheel **62a** of the upper substrate cutting device **60** is pressed so as to make contact onto the top surface of the bonded mother substrate **90** by the aforementioned energizing means and a moving means for moving the cutter head **62c.** The cutter wheel **62a** of the lower substrate cutting device **70** is pressed so as to make contact onto the bottom surface of the bonded mother substrate by the aforementioned energizing means and a moving means for moving the cutter head **62c.** The bonded mother substrate **90** is cut by simultaneously moving the upper substrate cutting device **60** and the lower substrate cutting device **70** in the same direction.

The substrate supporting device **20** supports the bonded mother substrate **90** such that the cutter wheel **62a** scribes the upper glass substrate.

As described above, according to the substrate cutting system **1**, the substrate supporting device **20** supports the bonded mother substrate **90** such that a space is movable on an X-Y plane surface, the space between which each cutter wheel **62a** from the upper glass substrate side and the lower glass substrate side faces each other. Therefore, each cutter wheel **62a** respectively can scribe the bonded mother substrate **90** in accordance with undulations and bendings of the bonded mother substrate **90** such that each of the cutter wheels **62a** balances the load applied to each of the cutter wheels **62a** facing each other, respectively. As a result, the scribing lines ,formed on the bonded mother substrate **90** have an excellent quality. When the bondedmother substrate **90** is cut along the scribing lines, the cut face of the bonded mother substrate **90** has an extremely excellent quality (above, function of claim 1).

Furthermore, according to the substrate cutting system **1**, a space is provided between the scribing device guide body **30** and the substrate supporting device **20**. The space can be moved in the Y direction and the bonded mother substrate **90** can be fixed by the clamp device **50**, thereby preventing the bondedmother substrate **90** being shifted from a predetermined position when the space is moved or both main surfaces are scribed (above, function of claim 2).

Furthermore, according to the substrate cutting system **1**, a space is provided between the scribing device guide body **30** and the first substrate supporting section **20A**. The space is moved in the Y direction. When the space is moved or both main surfaces are scribed, the first substrate supporting section **20A** does not rub the bonded mother substrate **90** or exert any force on the substrate. Therefore, when a vertical crack is created within the bonded mother substrate **90** by the cutter wheel **62a,** there is no possibility that an undesired crack will result from the cutter wheel 62a (above, function of claim 4).

Furthermore, according to the substrate cutting system **1,** when the second substrate supporting section **20B** moves together with the movement of the space, the second substrate supporting section **20B** provides assistance to support the portion of the substrate which is not supported by the first substrate supporting section **20A.** When the space is moved or both main surfaces are scribed, the second substrate supporting section **20B** does not rub the bonded mother substrate **90** or exert any force on the substrate. Therefore, when a vertical crack is created within the bonded mother substrate **90** by the cutter wheel **62a,** there is no possibility that an undesired crack will result from the cutter wheel **62a** (above, function of claim 13).

As shown in Figures **1** and **2,** both ends of the scribing device guide body **30,** in which each end face of the upper guide rail **31** and the lower guide rail **32** are connected to each other by connection plates **33,** are supported by the pillars **28.** The pillars **28** are held on the upper surface of the guide bases **15.** Movers for linear motors are attached to the guide bases **15,** respectively. Each mover is driven in synchronization with each other and is slid along the stator **12.**

As shown in Figure **1,** a steam unit section **160** is arranged on the substrate carry-out side of the second substrate supporting section **20B** and the substrate carry-in side of the substrate carry-out device **80** above the substrate carry-out side of the mounting base **10.** The steam unit section **160** is provided such that the bonded mother substrate **90**, which is not completely cut after the scribing, is completely cut.

Above the substrate carry-out side of the mounting base **10,** the substrate carry-out device **80** is arranged on the substrate carry-out side with respect to the scribing device guide body **30.** The substrate carry-out device **80** includes a carry-out robot **140** and a substrate carry-out device guide **81**. The carry-out robot **140** carries out each display panel that has been cut from the bonded mother substrate **90.** The substrate carry-out device guide **81** is constructed in order to move the carry-out robot **140** in the X direction which is perpendicular to the frames **11A** and **11B** in the longitudinal direction of the main frame **11**. Ends of the substrate carry-out device guide **81** slide, by linear motors, along the guide rails **13** through supporting members **82**. The guide rails **13** are provided on the upper surface of the mounting base **10**. In this case of the linear motors, movers (not shown) for the linear motors are respectively inserted in the stators **12** of the linear motors provided on the upper surface of the mounting base **10.** The movers for the linear motors are attached to the ends of the substrate carry-out device **80.**

An adsorption section (not shown) is provided on the carry-out robot **140** of the substrate carry-out device **80.** The adsorption section adsorbs each display panel cut from the bonded mother substrate **90** by suction. While the display panel is in a state of being adsorbed by the adsorption section, when the entire substrate carry-out device **80** is slid to the substrate carry-out side, each cut display panel is carried out from the substrate supporting device **20.**

As described above, according to the substrate cutting system **1**, a cut unit substrate is retrieved by using the substrate carry-out device **80.** Thus, it is easy to pass the substrate with the device for the next step (above, function of claim **31**).

According to the substrate cutting system **1**, the substrate supporting device **20** is moved together with the upper substrate cutting device **60** and the lower substrate cutting device **70**. Thus, a scribing line is formed at a desired location and a brittle material substrate can be cut while the brittle material substrate is partially supported without bending the brittle material substrate (above, function of claim **58**).

According to the substrate cutting system 1, when the substrate supporting device **20** is moved, an external force which exerts on the brittle material substrate is suppressed. Thus, it is possible to suppress the creation of an undesired crack (horizontal crack) when a scribing line is formed (above, function of claim **59**).

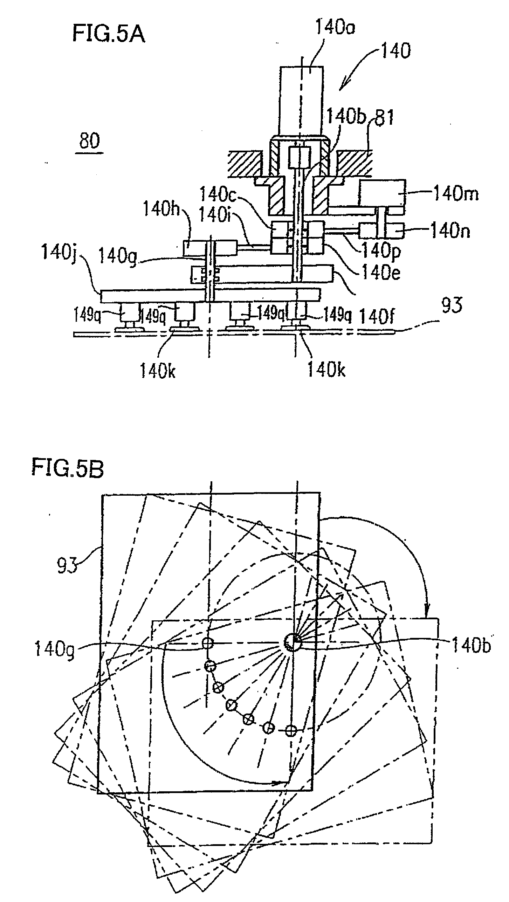

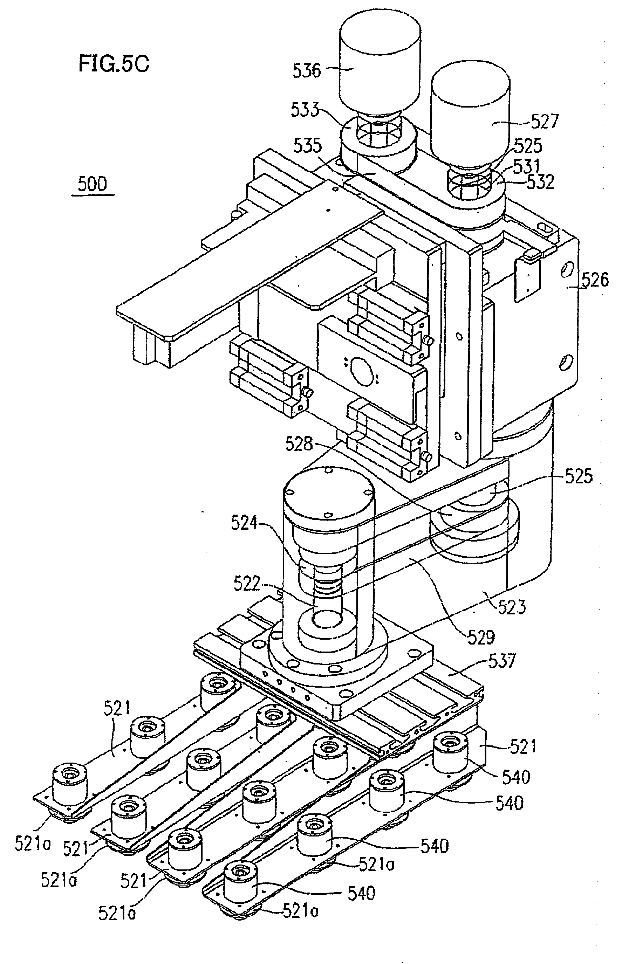

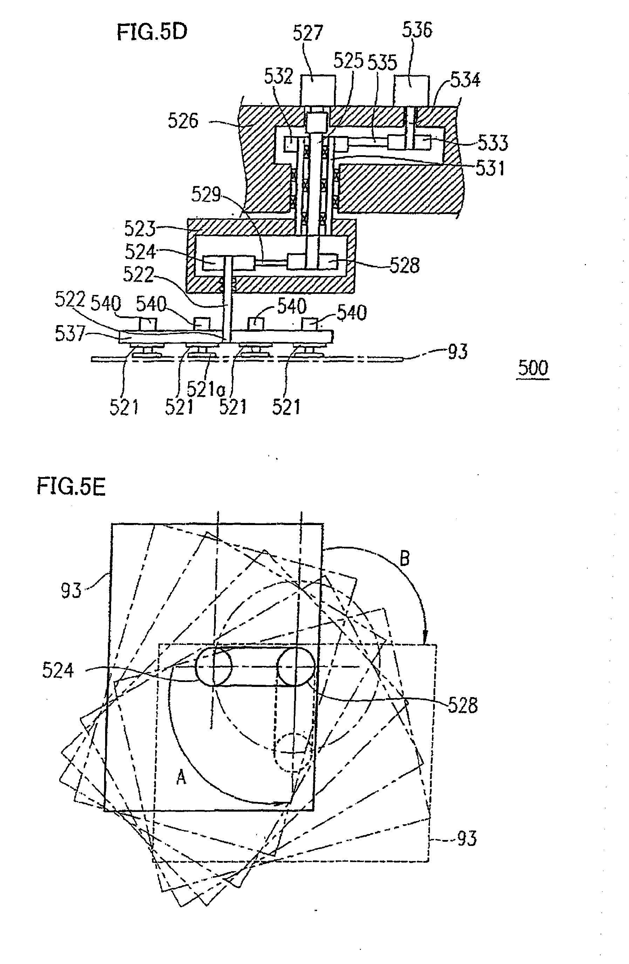

Figure **5** is a diagram for explaining the function of the carry-out robot.

Figure **5A** is a diagram schematically showing the structure of the carry-out robot **140** of the substrate carry-out device **80.** The carry-out robot **140** is attached to the substrate carry-out device guide **81.** The carry-out robot **140** is movable by a moving mechanism in a direction (X direction) along the substrate carry-out device guide **81**. The moving mechanism combines a driving means due to a linear motor or a servo motor and a straight-line guide.

The carry-out robot **14** includes two servo motors **140a** and **140m.** The servo motor **140a** is connected to a driving shaft **140b.** A first pulley **140c** and a second pulley **140e** are integrally attached to each other and are attached to the driving shaft **140b** via a bearing. When the driving shaft **140b** is rotated, the first pulley **140c** and the second pulley **140e** detach from the driving shaft **140b**. An end of an arm **140f** is integrally attached to the driving shaft **140b**. The arm **140f** rotates with the driving shaft **140b** as its center due to the rotation of the driving shaft **140b.** A rotating shaft **140g** is supported on the tip of the arm **140f** so as to be rotatable. The rotating shaft **140g** penetrates the arm **140f .** A third pulley **140h** is integrally attached to one end of the rotating shaft **140g.** For example, a belt (e.g., a timing belt **141i**) is wound around the second pulley **140e** and the third pulley **140h.**

Furthermore, a fourth pulley **140n** is attached to the rotating axis of the servo motor **140m.** For example, a belt (e.g., a timing belt **141p)** is wound around the fourth pulley **140n** and the first pulley **140c.** Therefore, the rotation of the servo motor **140m** is transmitted to the first pulley **140c** through the belt **140p** and is further transmitted to the third pulley **140h** through the belt **140i.** As a result, the rotating shaft **140g** rotates.

The center of a vacuum adsorption head attachment plate **140j** is integrally attached to the other end of the rotating shaft **140g.** Vacuum adsorption heads **140q** are provided on the vacuum adsorption head attachment plate **140j.** The vacuum adsorption head **140q** includes adsorption pad **140k.** The adsorption pad **140k** adsorbs a substrate, by using an adsorption mechanism (not shown), cut by the substrate cutting system **1**. The vacuum adsorption head **140q** will be described later in detail.

When the carry-out robot 140 having such a structure is set using the combination of the rotating direction and the rotating angle of each servo motor **140a** and **140m**, the cut substrate **93** can be carried out to an device for the next step while minimizing the distance moved by the arm **140f** and maintaining the direction of the cut substrate being at a horizontal state or being changed to a variety of angle directions.

In the transportation of the cut substrate, the cut substrate **93** is held by the adsorption of the adsorption pad.. After the entire carry-out robot **140** is moved upward by an up-and-down moving mechanism (not shown) once, the cut substrate **93** is transported to the device for the next step. Thereafter, the carry-out robot **140** is moved downward by the up-and-down moving mechanism (not shown) again and then, the cut substrate **93** is mounted at a predetermined position at a predetermined state in the next step.

Next, the case in which the direction of the cut substrate is, for example, changed by 90 degrees by using the carry-out robot **140** having such a structure will be described with reference to Figure **5B.** When each adsorption pad **140k** of each vacuum adsorption head **149q,** attached to the vacuum adsorption head attachment plate **140j** adsorbs the cut substrate **93,** the entire carry-out robot **140** moves upward by the up-and-down moving mechanism. As a result, the servo motor **140a** is driven and the driving shaft **140b** is rotated by **90** degrees, the rotation direction of the driving shaft **140b** being anti-clockwise when viewed from the substrate side. When the driving shaft **140b** is rotated by 90 degrees, the arm **140f** is rotated by 90 degrees with the driving shaft **140b** as its center of rotation, the rotation direction of the arm shaft **140f** being anti-clockwise when viewed from the substrate side. As a result, the vacuum adsorption head attachment plate **140j** is rotated, along with the arm **140f**, by 90 degrees with the driving shaft **140b** as its center of rotation. The vacuum adsorption head attachment plate **140j** being rotatably supported by the tip of the arm **140f** through the rotating shaft **140g** and the rotation direction of the vacuum adsorption head attachment plate **140j** being anti-clockwise when viewed from the substrate side. In this case, the rotating shaft **140g** attached to the vacuum adsorption head attachment plate **140j** is rotated with the driving shaft **140g** as its center of rotation.

Concurrently, the rotation of the servo motor **140m** is transmitted to the first pulley **140c** through the belt **140p** and is further transmitted to the third pulley **140h** through the belt **140i.** As a result, the rotating shaft 140g is rotated by 180 degrees clockwise. The vacuum adsorption head attachment plate **140j**, attached to the driving shaft **140g**, rotates by 180 degrees clockwise with the driving shaft **140g** as its center of rotation. Therefore, while the vacuum adsorption head attachment plate **140j** rotates by 90 degrees with the driving shaft **140d** as its center of rotation, the rotation direction of the vacuum adsorption head attachment plate **140j** is anti-clockwise when viewed from the substrate side, and the vacuum adsorption head attachment plate **140j** rotates by itself by 180 degrees clockwise, when viewed from the substrate side, with the driving shaft **140g** as its center. As a result, as shown in Figure **5B,** the cut substrate **93** adsorbed by each adsorption pad **140k** is rotated, within a relatively small space, by 90 degrees clockwise when viewed from the substrate side while rotating around the center of the rotation.

Figure **5C** is a perspective view showing a carry-out robot **500** as another example of the carry-out robot according to the present invention. Figure **5D** is a diagram schematically showing the structure of the carry-out robot **500** according to the present invention. Figure **5E** is an explanatory diagram for explaining the operation of the carry-out robot **500** according to the present invention. The carry-out robot **500** is attached to a supporting beam (not shown) of the carry-out robot **500** through a connection block **526.** The supporting beam of the carry-out robot **500** is used for transporting the cut substrate **93** to a predetermined position (see Figure **5E**). In the connection block **526,** a connection shaft **531** arranged in a vertical state is rotatably penetrated via a bearing. A driving shaft **525** is rotatably inserted into the connection shaft **531** via a bearing. The connection shaft **531** and the driving shaft **525** independently rotate from each other.

The upper end of the connection shaft **531** and the upper end of the driving shaft **525** protrude above the connection block **526.** A driving axis of a servo motor **527** for rotating is connected to the upper end of the driving shaft **525** which is inserted into the connection shaft **531.**

A coupled driving pulley **532** for circling is attached to the upper end of the connection shaft **531** which protrudes upward from the connection block **526.** A main pulley **533** for circling adjacent to the coupled driving pulley **532** for circling is provided above the connection block **526.** The main pulley **533** for circling is attached to a rotation axis **534** which is in a vertical state and rotatably arranged. A transmission belt **535** for circling is wound around the main pulley **533** for circling and the coupled driving pulley **532** for circling. The main pulley **533** for circling, the coupled driving pulley **532** for circling and the transmission belt **535** for circling constitute a belt transmission mechanism. The rotation axis **534** attached to the main pulley **533** for circling is rotated by a servo motor **536** for circling.

The base end of a hollow circling arm **523** is attached to the lower end of the connection shaft **531** which penetrates the connection block **526** so as to integrally rotate with the connection shaft **531**. The circling arm **523** is provided in a horizontal state. The rotation of the servo motor **536** for circling is transmitted to the connection shaft **531** through the main pulley **533** for circling, the transmission belt **535** for circling and the coupled driving pulley **532** for circling. When the connection shaft **531** is rotated, the tip of the circling arm **523** integrally rotates with the connection shaft **531** around the axis of the connection shaft **531**.

The lower end of the driving shaft **525** penetrating through the connection shaft **531** is located inside the hollow circling arm **523.** A main pulley **528** for rotating is attached to the lower end portion of the driving shaft **525** so as to integrally rotate with the driving shaft **525**.

A rotation axis **522** in a vertical state is provided within a tip of the circling arm **5523** so as to be rotatable via a bearing. A coupled driving pulley **524** for circling located in the circling arm **523** is attached to the rotation axis **522** so as to integrally rotate with the rotation axis **522.** A transmission belt **529** for rotating is wound around the coupled driving pulley **524** for rotating and the main pulley **528** for rotating. The coupled driving pulley **524** for rotating, the main pulley **528** for rotating and the transmission belt **529** for rotating constitute a belt transmission mechanism. When the driving shaft **525** is rotated by the servo motor **527** for rotating, the rotation of the driving shaft **525** is transmitted to the rotation axis **522** through the main pulley **528** for rotating, the transmission belt **529** for rotating and the coupled driving pulley **524** for rotating.

The rotation axis **522** to which the rotation of the driving shaft 525 is transmitted is attached to a connection body **537** provided below the circling arm **523.** One of the ends of the four vacuum adsorption head supporting bodies **521** are attached to the connection body **537**, the four vacuum adsorption head supporting bodies **521** being in a horizontal state and parallel to each other. Four vacuum adsorption heads **540** are provided on each vacuum adsorption head supporting body **521**. Adsorption pads **521a** for adsorbing the substrate **93** are attached to vacuum adsorption heads **540**. The plurality of vacuum adsorption heads **540** functions as a substrate holding means in the present embodiment. Thus, according to substrate cutting system **1**, the cut substrate is firmly received and passed on by the plurality of vacuum adsorption heads **540** (above, function of claim **41**) .

The vacuum adsorption head **540** will be described later in detail

According to the present embodiment, each vacuum adsorption head supporting body **521**, each adsorption pad **521a** and the connection body **537** constitute the substrate holding means. The rotation axis **522** attached to the connection body **537**, the coupled driving pulley **524** for rotating attached to the rotation axis **522**, the driving shaft **525,** the main pulley **528** for rotating attached to the driving shaft **525,** the transmission belt **529** for rotating wound around the coupled driving pulley **524** for rotating and the main pulley **528** for rotating, and the servo motor **527** for rotating constitute a substrate rotating means.

Furthermore, the circling arm **523** to which the rotation axis **522** is attached, the connection shaft **531** attached to the circling arm **523**, the coupled driving pulley **532** for circling attached to the connection shaft **531**, the servo motor **536** for circling, the main pulley **533** for circling attached to the servo motor **536** for circling and the transmission belt **535** for circling wound around the main pulley **533** for circling and the coupled driving pulley **532** for circling constitute a substrate circling means.

As described above, the substrate carry-out device **80** includes at least one carry-out robot **500** which includes the substrate rotation means and the substrate circling means The substrate rotation means rotates the substrate holding means around the first axis and the substrate circling means causes the substrate holdingmeans to circle around the second axis. Thus, the substrate carry-out device **80** can transport the cut unit substrate to the next step with a desired attitude on a transportation plane and can simultaneously transport the cut substrate to a plurality of devices for the next step (above, function of claim **32**).

The carry-out robot **500** having such a structure can rotate the substrate **93** by 90 degrees when each adsorption pad **521a** adsorbs the substrate **93**.

In this case, when the servo motor **536** for circling is driven, the rotation of the servo motor **536** for circling is transmitted to the connection shaft **531** through the main pulley **533** for circling, the transmission belt **535** for circling and the coupled driving pulley **532** for circling. As a result, the connection shaft **531** is rotated. Thus, the circling arm **523** integrally attached to the lower end of the connection shaft **531** is, for example, rotated by 90 degrees, with the connection shaft **531** as its center, in the direction indicated by the arrow **A** in Figure **5E**. When the tip of the circling arm **523** is rotated, the rotation axis **522** attached to the tip of the circling arm **523** rotates in a circle with the connection shaft **531** as its center.

As described above, according to the substrate cutting system **1**, the circling of the substrate holding means by the substrate circling means is transmitted to the substrate rotation means by a dynamic power transmission mechanism and, in connection therewith, rotates the substrate rotation means. Therefore, when the rotation operation of substrate rotation means and the circling operation of the substrate circling means are combined, the carry-out robot **500** can transport the cut unit substrate to the next step with a desired attitude on a transportation plane (above, function of claim **33**).

Furthermore, the rotation of the substrate holding means by the substrate rotation means and the circling of the substrate holding means by the substrate circling means are independent from each other. Thus, the attitude of a unit substrate on a transportation plane is readily set (above, function of claim **36**).

Concurrently, when the servo motor **527** for rotating is rotated, the driving shaft **525** is rotated. Therefore, the rotation of the driving shaft **525** is transmitted to the rotation axis **522** through the rotation main pulley **528,** the transmission belt **529** for rotating and the coupled driving pulley **524** for rotating. As a result, the connection body **537** to which each vacuum adsorption head supporting body **521** is attached is rotated with the rotation axis **522** as its center, each vacuum adsorption head supporting body **521** being located at the lower end of the rotation axis **522.**

In this case, the rotation direction of the driving shaft **525** rotated by the servo motor **527** for rotating and the rotation direction of the connection shaft **531** rotated by the circling servo motor **534** are opposite to each other. The rotation angle of the rotation axis **522** rotated by the driving shaft **525** is twice the rotation angle of the connection shaft **531** (i.e., the rotation angle of the circling arm **523).** Therefore, due to the rotation of the rotation axis **522**, the connection body **537** attached to the lower end of the rotation axis **522** rotates around the axis of the rotation axis **522**, and at the same time, is caused to rotate in a circle around the axis of the connection shaft **531**. The connection body **537** supports each vacuum adsorption head supporting body **521**.

As described above, the rotation direction of the substrate holding means by the substrate rotation means and the circling direction of the substrate holding means by the substrate circling means are opposite to each other. Therefore, the unit substrate can be set at a desired attitude on a transportation plane such that the moving range of a robot arm is minimized (above, function of claim **34**).

Furthermore, the rotation angle of the substrate holding means by the substrate rotation means is twice the circling angle of the substrate holdingmeans by the substrate circling means. Therefore, the movement of the robot arm can be minimized (above, function of claim **35**).

Additionally, the servo motor **527** for rotating and servo motor **534** for circling are independent from each other. Therefore, the unit substrate can be easily set at a desired attitude on a transportation plane (above, function of claim **37**).

For example, as shown in Figure **5E,** in the case where the connection shaft **531** is rotated by 90 degrees in the direction indicated by the arrow A, when the circling arm **523** is circled by 90 degrees in the direction indicated by the arrow direction A, the rotation axis **522** is rotated by 180 degrees in a direction which is opposite to the direction indicated by the arrow A. Therefore, in a similar manner, while the vacuum adsorption head supporting body **521**, attached to the lower end of the rotation axis **522,** circles by 90 degrees with the connection shaft **531** as its center, the vacuum adsorption head supporting body **521** is rotated by 180 degrees with the rotation axis **522** as its center in a direction indicated by the arrow B which is opposite to the direction indicated by the arrow A.

Thus, the substrate **93** adsorbed by each adsorption pad **521a** of each vacuum adsorption head **540** of each vacuum adsorption head supporting body **521** is rotated by 90 degrees in a direction indicated by the arrow B as shown in Figure **5E** while the position of the rotation axis **522** is being shifted. Therefore, the carry-out robot **500** according to the present embodiment includes all of the heavy-weighted driving motors in the base portion of the carry-out robots **500.** Thus, the structure of the arm section can be simplified and light-weighted. As a result, the circling arm can be moved at a rapid speed with little inertia, and the substrate **93** can be rotated by 90 degrees in a relatively small space while being held in a horizontal state.

The carry-out robot has been described above in detail with reference to Figure **5**. The vacuum adsorption head **140q** and the vacuum adsorption head **540** will be described later in detail.

Referring back to Figure **1**, the structure of the substrate cutting system **1** will be described.

The first substrate supporting section **20A** and the second substrate supporting section **20B** of the substrate supporting device **20** include, for example, five first substrate supporting units **21A** and five second substrate supporting units **21B,** respectively, as shown in Figure **1**. The first substrate supporting units **21A** and second substrate supporting units **21B** are movable in the same direction as the moving direction of the scribing device guide body **30**. Each first substrate supporting unit **21A** and each second substrate supporting unit **21B** are arranged in line to each other along a direction (Y direction) parallel to the frames **11A** and **11B** in the longitudinal direction of the main frame 11, respectively. Each first substrate supporting unit **21A** and each second substrate supporting unit **21B** are arranged on the substrate carry-in side and the substrate carry-out side of the scribing device guide body **30**, respectively.

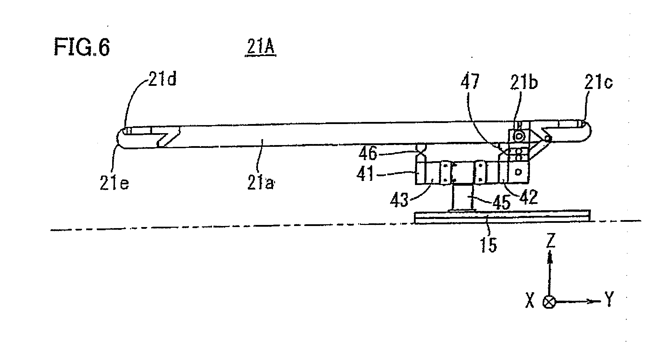

Figure **6** is a diagram showing a side face of one of the first substrate supporting units **21A** provided on the first substrate supporting section **20A.** In the first substrate supporting unit **21A,** a pillar **45** is provided on the upper surface of the guide base **15** held by each moving unit of the pair of guide rails **13** which are provided on the upper surface of the mounting base **10.** A supporting member **43** is provided above the pillar **45** in parallel to the Y direction along the frames **11A** and **11B** of the main frame **11**. Each supporting member **43** is attached to joining members **46** and **47** of two unit attachment members **41** and **42**, which are constructed in the X direction perpendicular to the frames **11A** and **11B** of the main frame **11.**

A plurality of first substrate supporting units **21A** (five in the explanation of the present embodiment) is arranged with a predetermined interval therebetween, respectively. The first substrate supporting units **21A** move together with the scribing device guide body **30** in the Y direction along the frames **11A** and **11B** of the main frame **11**.

The first substrate supporting unit **221A** includes a supporting body section **21a,** which linearly extends along a direction (Y direction) parallel to the main frame **11**. Timing pulleys **21c** and **21d** which, for example, guide a timing belt 21e, are attached to each end of the supporting body section **21a,** respectively. The timing belt **21e** is caused to circle when the timing pulley **21b** for driving is rotated by a clutch (which will be described later) in connection with a driving axis.

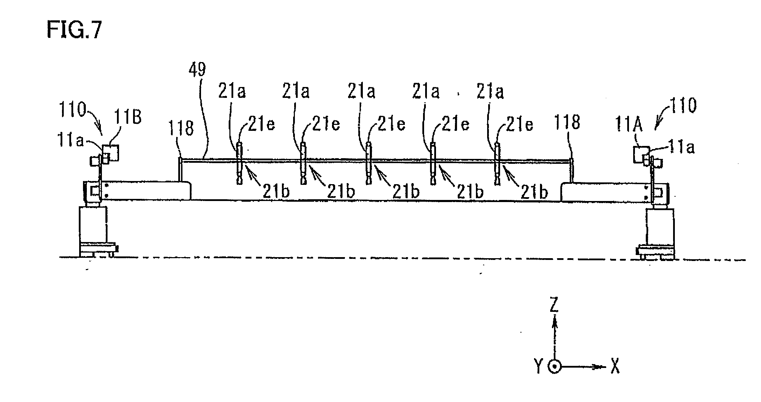

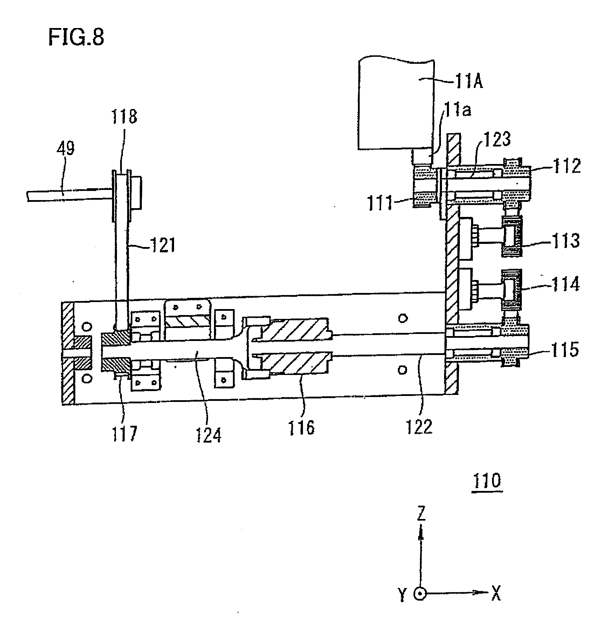

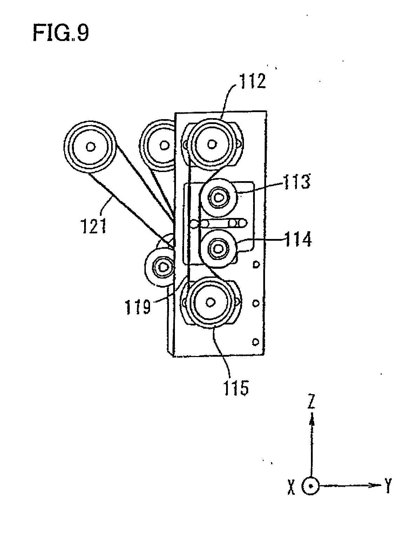

The mechanism having such a structure which moves the timing belt **21e** of the first substrate unit **21A** will be described with reference to Figures **7**, **8** and **9**. Figure **7** is a front view when a plurality (five) of first substrate supporting units **21A** provided on the first substrate supporting section **20A** when viewed from the scribing device guide body **30**. Figure **8** is a diagram schematically showing the structure a clutch unit **110**. Figure **9** is a side view of the clutch unit **110**.

As shown in Figure 7, each timing pulley **21b** for driving provided on the supporting body section **21a** of the first substrate unit **21A** is coupled to a rotating driving shaft **49** which is provided in parallel to the X direction perpendicular to the frames **11A** and **11B** in the longitudinal direction of the main frame 11. Both ends of the rotating driving shaft **49** are connected to clutch units **110**, and whether the rotating driving shaft **49** rotates depends on its connection state with the driving axis of the clutch within the clutch unit **110**. In other words, when the clutch within the clutch unit is connected to the driving axis **122**, the rotating driving shaft **49** rotates. When the clutch within the clutch unit is detached from the driving axis **122**, the rotating driving axis **49** does not rotate.

Racks **11a** are attached to the lower surface of the frames **11A** and **11B** in the longitudinal direction of the main frame **11.** The racks **11a** rotate pinions **111** of the clutch units **110**.

The pinion **111** of the clutch unit **110** is coupled to one end of an axis **123**. A timing pulley **112** for a timing belt **119** is coupled to the other end of the axis **123**.

A timing pulley **115** is coupled to one end of the driving axis **122.** A timing belt **119** is wound around the timing pulley **112** and the timing pulley **115** through two idlers **113** and **114**. Thus, the rotation of the axis **123** is transmitted to the driving axis **122**.

A clutch **116** (e.g., an air clutch) is attached to the other end of the driving axis **122.** When compressed air is injected into the clutch **116**, the driving axis **122** and a coupled driving axis **124** connect. When the injection of the compressed air is interrupted and the air pressure within the clutch **116** becomes atmospheric pressure, the coupling between the driving axis **122** and the coupled driving axis **124** detaches.

A timing pulley **117** is coupled to the end which is not joined to the clutch **116** of the coupled driving axis **124**. A timing belt **121** is wound around the timing pulley **117** and a timing pulley **118.** The timing pulley **118** which is located at one end of the rotating driving shaft **49** to which each timing pulley **21b** provided on the supporting body sections **21a** of the first substrate unit **21A** is coupled.

As shown in Figure **7,** the mechanism (clutch **110)** which moves the timing belts **21e** by rotating the timing pulleys **21b** for driving of the five first substrate supporting units **21A** provided on the first substrate supporting section **20A** is also provided on the frame **11B** side in the longitudinal direction of the main frame **11**.

As described above, the pillar **45** on the frame **11A** side and the pillar **45** on the frame **11B** side which support the five first substrate supporting units **21A** are held by the guide bases **15.** The pillar **45** on the frame **11A** side and the pillar **45** on the frame **11B** side integrally move the guide bases **15** which hold the pillars **28**. The pillars **28** support both ends of the scribing device guide body **30**. Movers (not shown) for the linear motor are connected to the guide bases **15** which support the pillars **28**. Thus, with the drive of the linear motor, the scribing device guide body **30** moves to the substrate carry-in side, and at the same time, the five first substrate supporting units **21A** of the first substrate supporting section **20A** move to the substrate carry-in side.

When the scribing device guide body **30** moves, the pinion **111** of the clutch unit **110** on the frame **11A** side and the pinion **111** of the clutch unit **110** on the frame **11B** side which are engaged with the racks **11a** attached along the frames **11A** and **11B** respectively are rotated.

When the timing belts **21e** are moved by rotating the timing pulleys **21b** for driving of the first substrate supporting unit **21A,** both clutches of the frame **11A** and the frame **11B** can be connected to the respective driving axes **122**. Alternatively, either clutch of the frame **11A** and the frame **11B** can be connected to the driving axis **122.**

The second substrate supporting section **20B** of the substrate supporting device **20** includes, for example, five second substrate supporting units **21B.** The second substrate supporting units **21B** are movable in the same direction as the moving direction of the scribing device guide body **30**. The second substrate supporting unit **21B** has a similar structure to the first substrate supporting unit **20A.** The second substrate supporting unit **21B** is supported by the pillars **45** on the frame **11A** side and the frame **11B** side so as to be attached opposite to the Y direction with respect to the scribing device guide body **30.** Each pillar is supported by the guide base **15**.

The pillars **45** on the frame **11A** side and the pillars **45** on the frame **11B** side which support the five first substrate supporting units **21A** are held by the guide bases **15**. The pillars **45** on the frame **11A** side and the pillars **45** on the frame **11B** side which support the five second substrate supporting units **21B** are held by the guide bases **15**. Furthermore, the pillars **45** are connected so as to integrally move with the guide bases **15** which hold the pillars **28**, the pillars supporting both ends of the scribing device guide body **30.** Movers (not shown) for the linear motors are attached to the guide bases **15** holding the pillars **28** which support both ends of the scribing device guide body **30.** Thus, with the drive of the linear motor, the scribing device guide body **30** moves to the substrate carry-in side, and at the same time, the five first substrate supporting units **21A** of the first substrate supporting section **20A** and the five second substrate supporting units **21B** of the second substrate supporting section **20B** move to the substrate carry-in side.

Clutch units **110** similar to those provided in the first substrate supporting section **20A** are provided on the frame **11A** side and on the frame **11B** side of the second substrate supporting unit **20B**. When the scribing device guide body **30** moves, the pinion **111** of the clutch unit **110** on the frame **11A** side and the pinion **111** of the clutch unit **110** on the frame **11B** side which are engaged with the racks **11a** attached along the frames **11A** and **11B** respectively are rotated.

When the timing belts **21e** are moved by rotating the timing pulleys **21b** for driving of the second substrate supporting unit **21B,** both clutches of the frame **11A** and the frame **11B** can be connected to the respective driving axes **122.** Alternatively, either clutch of the frame **11A** and the frame **11B** can be connected to the driving axis **122.**

As described above, the first substrate supporting section **20A** includes the plurality of first substrate supporting units **21A** which move in parallel along the moving direction of the scribing device guide body **30.** The plurality of first substrate supporting units **21A** move together with the scribing device guide body **30** along with the movement of the scribing device guide body **30**. Thus, with a structure such that a space is provided between the scribing device guide body **30** and the first substrate supporting unit **21A**, the space is moved in the Y direction, and the substrate **90** is fixed by the clamping device **50**, when the space is moved or scribing is performed on both mains surfaces of the substrate **90,** the first substrate supporting unit **21A** does not rub the substrate **90** or exert any force on the substrate. As a result, when a vertical crack is created within the substrate **90** by the cutter wheel **62a,** there is no possibility that an undesired crack will result from the cutter wheel **62a** (above, function of claim **5**).

Furthermore, the first substrate supporting units **21A** include the timing belts **21e** for supporting the substrate **90.** Thus, the first substrate supporting unit **21A** does not rub the substrate **90** or does not exert any force on the substrate **90** when the timing belts **21e** move in the Y direction. As a result, when a vertical crack is created within the substrate **90** by the cutter wheel **62a,** there is no possibility that an undesired crack will result from the cutter wheel **62a** (above, function of claim **6**).

The first substrate supporting unit **21A** may include a plurality of cylindrical rollers. In this case, the substrate **90** is better supported (above, function of claim **7**). For example, the plurality of cylindrical rollers is rotated by the clutch **116.** The clutch **116** rotates the plurality of cylindrical rollers in accordance with the movement of the scribing device guide body **242**. The clutch **116** can select the direction of rotation or stop the rotation of the plurality of cylindrical rollers in accordance with the movement of the space. In this case, when the clamping of the substrate **90** by the clamping device **50** is released, the substrate supporting device **20** can be used for transporting the substrate **90** (above, function of claim **8**).

The clutch unit **110** rotates the plurality of cylindrical rollers in accordance with the movement of the scribing device guide body **30.** For example, the outer circumferential speed of the plurality of cylindrical rollers is controlled so as to match the moving speed of the scribing device guide body **30** in the Y direction. Therefore, when the plurality of cylindrical rollers moves in the Y direction, the plurality of cylindrical rollers does not rub the substrate **90** or does not exert any force on the substrate **90.** As a result, when a vertical crack is created within the substrate **90** by the cutter wheels **62a,** there is no possibility that an undesired crack will result from the cutter wheels **62a** (above, function of claim **9**).

When the first substrate supporting unit **21A** is the timing belt **21e**, the surface of the substrate is supported on a surface of the timing belt **21e** compared to when a cylindrical roller is used. As a result, the substrate is stably supported (above, function of claim **10**).

As described above, even when the first substrate supporting unit **21A** is the timing belt **21e**, the clutch **116** can circle the plurality of belts in accordance with the movement of the scribing device guide body **30.** In this case, the belt **21e** can select, by the clutch **116,** the direction of the circling movement or stop the circling movement of the belt **21e** in accordance with the movement of the space. Therefore, when the clamping of the substrate **90** by the clamping device **50** is released, the substrate supporting device **20** can be used for transporting the substrate **90** (above, function of claim **11**).

The clutch unit **110** circles the plurality of belts in accordance with the movement of the scribing device guide body **30**. As described above, the circling speed of the plurality of belts **21e** is controlled so as to match the moving speed of the scribing device guide body **30** in the Y direction. Therefore, when the plurality of belt **21e** moves in the Y direction, the plurality of belts **21e** does not rub the substrate **90** or does not exert any force on the substrate **90**. As a result, when a vertical crack is created within the substrate **90** by the cutter wheel **62a,** there is no possibility that an undesired crack will result from the cutter wheel **62a** (above, function of claim **12**).

The structure and the function of the first substrate supporting section **20A** have been described above. The second substrate supporting section **20B** may have a structure and a function similar to those of the first substrate supporting section **20A** (above, function of claims **14** to **21**).

As shown in Figure **1**, a steam unit section **160** is arranged between the substrate carry-out side of the second substrate supporting section **20B** and the substrate carry-in side of the substrate carry-out device **80** above the substrate carry-out side of the mounting base **10.** The steam unit section **160** is provided in order to completely cut the bonded mother substrate **90** which has not been completely cut after the scribing.

In the steam unit section **160**, an upper steam unit attachment bar **162** and lower steam unit attachment bar **163** are attached to a pillar **164** on the frame **11A** side and a pillar **164** on the frame **11B** side, respectively, along the X direction which is perpendicular to the frame **11A** and the frame **11B.** The upper steam unit attachment bar **162** attaches a plurality of steam units **161** for spraying steam onto the mother substrate on the upper side of the bonded mother substrate **90.** The lower steam unit attachment bar **163** attaches a plurality of steam units **161** for spraying steam onto the mother substrate on the lower side of the bonded mother substrate **90.**

The respective pillars **164** on the frame **11A** side and on the frame **11B** side slide, by the linear motors, along the guide rails **13**, respectively, provided on the upper surface of the mounting base **10**.. In this case of the linear motors, a mover (not shown) for the linear motors are respectively inserted in the stators **12** of the linear motors provided on the upper surface of the mounting base **10**. The movers for the linear motors are attached to the steam unit section **160**, respectively.

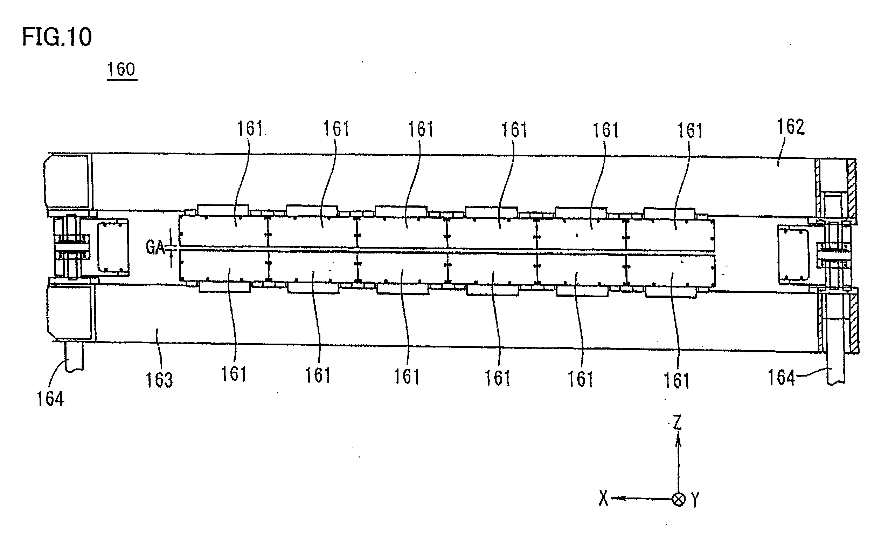

Figure **10** is a front view of important constituents when the steam unit section **160** is viewed from the substrate carry-in side. Six steam units **161** are attached to the upper steam unit attachment bar **162.** Six steam units **161** are attached to the lower steam unit attachment bar **163** with a gap GA with respect to the six steam units **161** on the upper steam unit attachment bar **162**. The gap GA is adjusted such that the bonded mother substrate **90** passes through the gap GA when the steam unit section **160** moves to the substrate carry-in side.

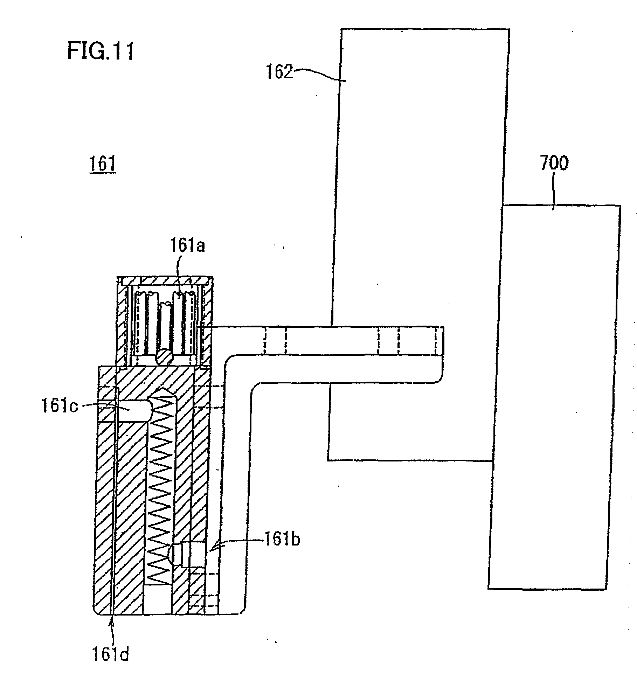

Figure **11** is a partial sectional view showing the structure of the steam unit **161**. The entire steam unit **161** is almost structured with aluminum material. A plurality of heaters **161a** is imbedded in the steam unit **161** in a perpendicular direction. When an opening/closing valve (not shown) which automatically opens and closes is opened, water flows into the steam unit **161** from a water supplying mouth **161b.** Then, the supplied water is heated by the heaters **161a** and evaporates into steam. The steam is sprayed onto the surface of the mother substrate from a gushing opening **161d** through a duct hole **161c.** When the steam is sprayed onto the top and bottom surfaces of the substrate **90** where a scribing line is formed, the heated moisture infiltrates inside a vertical crack of each scribing line and the vertical crack extends due to the expanding force. As a result, the substrate can be cut (above, function of claim **23**).

Any one of substrate adhesion removal devices **700** (air knife **700), 1000, 1500** and **2000** is provided on the carry-out side of the upper stem unit attachment bar **162**. The substrate-adhered material removal device **700** (**1000**, **1500, 2000)** is provided for removing the moisture which remains on the surface of the bonded mother substrate **90** after the steam is sprayed onto the upper surface of the bonded mother substrate **90.** Since the substrate-adhered material removal device **700 (1000, 1500, 2000)** is provided in order to dry the top and bottom surfaces of the substrate, steam is sprayed on the top and the bottom surfaces of the substrate, and the moisture on the top and the bottom surfaces of the substrate can be completely removed after the substrate is cut. Therefore, there is no need to provide a device having a special anti-water means for the next step (above, function of claim **24**).

The substrate-adhered material removal devices **700**, **1000**, **1500** and **2000** will be described later in detail. A steam unit **161** and a substrate-adhered removal device **700** (air knife **700)** similar to those attached to the upper steam unit attachment bar **162** are provided on the lower steam unit attachment bar **163.**

The bondedmother substrate **90** is mounted on the first substrate supporting section **20A**. When the bonded mother substrate **90** is positioned, the bonded mother substrate **90** thus positioned is held by the clamping device **50**, and at the same time, is supported by each of the timing belts **21e** of the first substrate supporting unit **21A.**

In this state, first, after clutches **116** in the four clutch units **110** of the first substrate supporting section **20A** and the second substrate supporting section **20B** are coupled to the driving axes **122,** the upper substrate cutting device **60** and the lower substrate cutting device **70** provided on the scribing device guide body **30** starts cutting the bonded mother substrate **90.** As the scribing device guide body **30** moves to the substrate carry-in side, the first substrate supporting section **20A** is slid to the substrate carry-in side and furthermore, the second substrate supporting section **20B** slides to the substrate carry-in side. While the scribing device guide body **30** is moving to the substrate carry-in side, the timing belts **21e** of the first substrate supporting units **21A** of the first substrate supporting section **20A** and the timing belts **21e** of the second substrate supporting units **21B** of the second substrate supporting section **20B** circle at the same speed as the moving speed of the scribing device guide body **30** and move the bonded mother substrate **90** to the substrate carry-out side. Thus, the bonded mother substrate **90** being cut is in a state of being supported by the timing belts **21e** of the first substrate supporting units **21A** of the first substrate supporting section **20A** and the timing belts **21e** of the second substrate supporting units **21B** of the second substrate supporting section **20B.** However, while the scribing device guide body **30** is moving, the timing belts **21e** of the first substrate supporting units **21A** of the first substrate supporting section **20A** and the timing belts **21e** of the second substrate supporting units **21B** of the second substrate supporting section **20B** try to move the bonded mother substrate **90** in a direction opposite to the moving direction of the scribing device guide body **30** at the same speed as the moving speed of the scribing device guide body **30**. Thus, the bonded mother substrate **90** actually does not move and remains held by the clamping device **50** and also, the bonded mother substrate **90** is supported by the timing belts **21e** of the first substrate supporting units **21A** of the first substrate supporting section **20A** and the timing belts **21e** of the second substrate supporting units **21B** of the second substrate supporting section **20B** without being rubbed.

In a state in which the cutting of the bonded mother substrate **90** is completed, the bonded mother substrate **90** is supported by each timing belt **21e** of the second substrate supporting unit **21B** of the second substrate supporting section **20B**.

In a state in which the bonded mother substrate **90** is supported by each of timing belts **21e** of the second substrate supporting unit **21B**, the steam unit section **160** moves to the substrate carry-in side, sprays the steam onto the entire top and bottom surfaces of the bonded mother substrate **90** on which the scribing lines have been formed. As a result, the vertical cracks on the bonded mother substrate **90** are extended due to the thermal stress and the bonded mother substrate **90** is completely cut. At the same time, the moisture which remains on the top and bottom surfaces of the bonded mother substrate **90** is removed by the substrate-adhered material removal device **700** after the steam is sprayed on the bonded mother substrate **90.**

Thereafter , all of the display panels (cut substrate **93)** cut from the bonded mother substrate **90** on the timing belts **21e** of the all of the second substrate supporting units **21B** of the second substrate supporting section **20B** are carried out by the carry-out robot **140** or the carry-out robot **500** of the substrate carry-out device **80**, thereby the substrate **93** (edge member) being supported.

Next, the substrate carry-out device **80** and the steam unit section **160** move to the end of the substrate carry-out side.

Thereafter, the scribing device guide body **30**, the second substrate supporting section **20B** and the first substrate supporting section **20A** are slid to the substrate carry-out side. At the same time, the timing belts 21e of the first substrate supporting units **21A** of the first substrate supporting section **20A** and the timing belts **21e** of the second substrate supporting units **21B** of the second substrate supporting section **20B** circle as if the timing belts **21e** of the first substrate supporting units **21A** of the first substrate supporting section **20A** and the timing belts **21e** of the second substrate supporting units **21B** of the second substrate supporting section **20B** moved the bonded glass substrate **90** to the substrate carry-in direction at the same speed as the moving speed of the scribing device guide body **30**.

Thus, the timing belts **21e** of the first substrate supporting units **21A** of the first substrate supporting section **20A** and the timing belts **21e** of the second substrate supporting units **21B** of the second substrate supporting section **20B** sequentially become in a non-contact state from the lower surface of the substrate **93** without rubbing thereof Therefore, the support of the substrate **93** by each timing belt **21e** is sequentially released. Thereafter, the holding of the substrate **93** (edge member) by the clamping device **50** is lifted. As a result, the substrate **93** (edge member) falls down. In this case, the substrate **93** (edge member, cullet) thus fallen is guided by a guide plate arranged in a slanted state so as to be accommodated into a cullet accommodation box.

As described above, the pair of scribing devices **60**, **70** and the scribing device guide body **30** move in the Y axis direction, the substrate supporting device **20** does not rub the substrate **90** and supports the substrate **90** such that no force exerts on the substrate **90**. Thus, when the cutter wheel **62a** generates a vertical crack into the substrate, there is no possibility that an undesired crack will result from the cutter wheel **62a** (above, function of claim **3**).

A positioning device (not shown) is provided on the mounting base **10**. The positioning device is provided for determining the position of the bonded mother substrate **90** supported by the first substrate supporting section **20A.** In the positioning device, for example, a plurality of positioning pins (not shown) are provided along the frame **11B** of the main frame **11** and along the direction perpendicular to the frame **11B** with a fixed interval therebetween, respectively. Pushers (not shown) are provided with respect to the positioning pins arranged along the frame **11B.** The pushers are provided to push the side edges of the bonded mother substrate **90** which face each positioning pin. Pushers (not shown) are provided with respect to the positioning pins arranged along the direction perpendicular to the frame **11B.** The pushers are provided to push the side edges of the bonded mother substrate **90** which face each positioning pin.

Alternatively, for example, when a positioning device for determining the position of the bonded mother substrate **90** is provided separately from the present substrate cutting system immediately before the bondedmother substrate **90** is transported to the substrate cutting system according to the present invention, the positioning device in the present substrate cutting system can be omitted.

The positioning device in the present substrate cutting system is not limited to the positioning pins and pushers described above. Any device can be used as a positioning device as long as the device can fix the position of the bonded mother substrate **90** in the substrate cutting system.

Furthermore, the clamp device **50** is provided above the mounting base **10** supported by the first substrate supporting section **20A**. The clamp device **50** is provided to clamp the bonded mother substrate **90** pushed and positioned by each positioning pin. For example, the clamp device **50** includes a plurality of clamp members attached with a fixed interval in the longitudinal direction and a plurality of clamp members arranged with a fixed interval along the direction perpendicular to each main frame **11** as shown in Figure **2**. The plurality of clamp members **51** are attached with a fixed interval in the longitudinal direction is provided to clamp the side edge of the bonded mother substrate **90** positioned along the frame **11B** of the main frame **11**. The plurality of clamp members **51** and are arranged with a fixed interval along the direction perpendicular to each main frame **11** are provided to clamp the side edges of the bonded mother substrate 90 positioned on the substrate carry-in side.

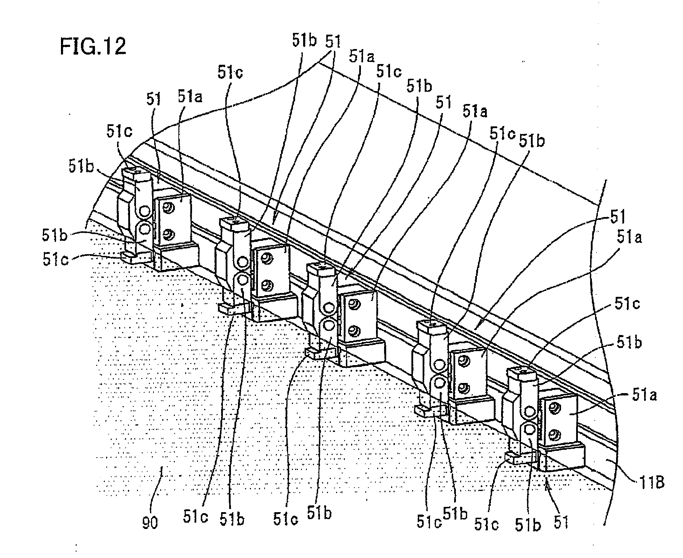

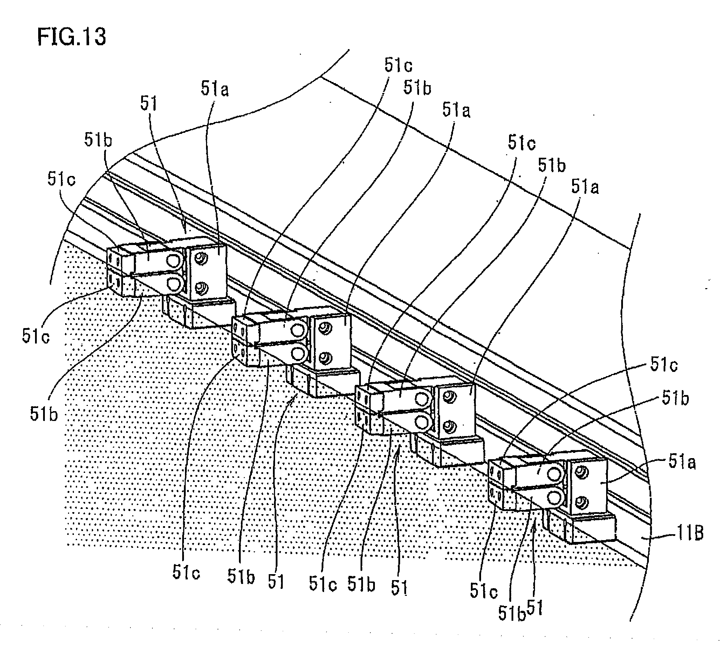

Figures **12** and **13** are perspective views for showing a plurality of clamp members **51** provided on the frame **11B** of the main frame **11** and explaining the operation thereof Each clamp member **51** has a structure similar to each other. The clamp member **51** includes a casing **51a** and a pair of upper and lower turning arm sections **51b**. The casing **51a** is attached to the frame **11B** of the main frame **11**. The turning arm section **51b** is attached to the casing **51a** so as to be turnable from the vertical state to the horizontal state. Each turning arm section **51b** can turn with one of the ends being the center. The ends which are the center of each turning are adjacent to each other. In a vertical state, the tip of the turning arm section **51b** positioned on the upper side is positioned above the center of the turning as shown in Figure **12**. In a vertical state, the tip of the turning arm section **51b** positioned on the lower side is positioned below the center of the turning as shown in Figure **12.** When each turning arm section **51b** turns by 90 degrees toward the bonded mother substrate **90** side, each turning arm section **51b** is in a horizontal state facing each other.

A clamp section **51c** is attached to the tip of each turning arm section **51b.** The clamp sections **51c** contact the top surface and the bottom surface of the bonded mother substrate **90,** respectively. Each clamp section **51c** is made of an elastic body. At the same time when each turning arm section **51b** is integrally turned from the vertical state to the horizontal state, each clamp member **51c** is turned from the horizontal state to the vertical state. When each turning arm section **51b** is turned to the horizontal state, the bonded mother substrate **90** is clamped by the clamp section **51c** attached to the tip of each turning arm section **51b** as shown in Figure **13**.

Each clamp member **51** which is arranged along the direction perpendicular to the frame **11B** of the main frame **11** has a structure similar to each other. The clamp members **51** are integrally driven. When each side edge of the bonded mother substrate **90,** perpendicular to each other, is in a state of being clamped by the plurality of clamp members **51,** all of the clamp members **51** lower downward and then, the bonded mother substrate **90** is supported by the timing belts **21e** of the first substrate supporting section **20A**.

In the arrangement of the aforementioned clamp devices **50**, the example has been explained in which the aforementioned clamp devices **50** for holding the bonded substrate **90** are provided on the frame **11B** of the main frame **11** and on the substrate carry-in side along the direction perpendicular to the frame **11B.** However, when the clamp device **50** is only provided on the frame **11B,** the bonded mother substrate **90** can be supported without being damaged.

The structure of the aforementioned clamp devices **50** and the clamp members **51** only shows one example which is used in the substrate cutting system according to the present invention and is not limited to this. In other words, any structure can be used as long as the structure can grasp or hold the side edges of the bonded mother substrate **90**. For example, when the size of the substrate is small of the substrate can be held by clamping one part of the side edges of the substrate, and the substrate can be cut without causing any defect to the substrate.

The upper substrate cutting device **60** is attached to the upper side guide rail **31** in the scribing device guide body **30** as shown in Figure **3.** The lower substrate cutting device **70** is attached to the lower side guide rail **253** as shown in Figure **4.** The lower substrate cutting device **70** has a structure similar to the upper substrate cutting device **60,** but is provided in an inverted state thereto. The upper substrate cutting device **60** and the lower substrate cutting device **70** slide, by the linear motors, along the upper guide rail **31** and the lower guide rail **32** as described above.

For example, the cutter wheels **62a** are rotatably attached to the tip holders on the upper substrate cutting device **60** and the lower substrate cutting device **70.** The cutter wheel **62a** scribes an upper glass substrate of the bonded mother substrate **90.** Furthermore, the tip holders **62b** are attached to the cutter heads **62c.** The tip holders **62b** are rotatable in a direction vertical, as their axes, to the surface of the bonded mother substrate **90** held by the clamp devices **50**. The cutter heads **62c** are movable, by a driving means (not shown), along the direction vertical to the surface of the bonded mother substrate **90.** The cutter wheels **62** are loaded by an energizing means (not shown) as appropriate.

As the cutter wheel **62a** held by the tip holder **62b**, a cutter wheel which has a blade edge with the center in the width direction protruded in an obtuse V shape is used as disclosed in Japanese Laid-Open Publication No. 9-188534.. The protrusions with a predetermined height are formed on the blade edge with a predetermined pitch in the circumferential direction.

The lower substrate cutting device **70** provided on the lower side guide rail **32** has a structure similar to the upper substrate cutting device **60**, but is provided in an inverted state thereto. The cutter wheel **62a** (see Figure **4**) of the lower substrate cutting device **70** is arranged so as to face the cutter wheel **62a** of the upper substrate cutting device **60**.

The cutter wheel **62a** of the upper substrate cutting device **60** is pressed so as to make contact onto the top surface of the bonded mother substrate **90** by the aforementioned energizing means and the moving means of the cutter head **62c.** The cutter wheel **62a** of the lower substrate cutting device **70** is pressed so as to make contact onto the bottom surface of the bonded mother substrate **90** by the aforementioned energizing means and the moving means of the cutter head **62c.** When the upper substrate cutting device **60** and the lower substrate cutting device **70** are simultaneously moved in the same direction, the bondedmother substrate **90** is cut.

As described above, the first substrate supporting section **241A** includes the plurality of substrate supporting units **244A**. The plurality of substrate supporting units **244A** moves in parallel along the moving direction of the scribing device guide body **242.** The plurality of first substrate supporting units **244A** moves together with the scribing device guide body **242** along with the movement of the scribing device guide body **242**. Thus, with a structure such that a space is provided between the scribing device guide body **242** and the first substrate supporting unit **244A,** the space is moved in the Y direction, and the substrate 90 is fixed by the clamping device **251,** when the space is moved or scribing is performed on both mains surfaces of the substrate **90**, the first substrate supporting unit **244A** does not rub the substrate **90** or exert any force on the substrate. As a result, when a vertical crack is created within the substrate **90** by the cutter wheel **62a**, there is no possibility that an undesired crack will result from the cutter wheel **62a** (above, function of claim **5**).

Furthermore, the first substrate supporting units **244A** include the timing belts for supporting the substrate **90.** Thus, the first substrate supporting unit **21A** does not rub the substrate **90** or does not exert any force on the substrate **90** when the timing belts **21e** move in the Y direction. As a result, when a vertical crack is created within the substrate **90** by the cutter wheel **62a**, there is no possibility that an undesired crack will result from the cutter wheel **62a** (above, function of claim **6**).

The first substrate supporting unit **244A** may include a plurality of cylindrical rollers. In this case, the substrate **90** is better supported (above, function of claim **7**). For example, the plurality of cylindrical rollers is rotated by the clutch **116**. The clutch **116** rotates the plurality of cylindrical rollers in accordance with the movement of the scribing device guide body **242.** The clutch **116** can select the direction of rotation or stop the rotation of the plurality of cylindrical rollers in accordance with the movement of the space.. In this case, when the clamping of the substrate **90** by the clamping device **251** is released, the substrate supporting device (first substrate supporting section **241A** and second substrate supporting section **241B**) can be used for transporting the substrate **90** (above, function of claim **8**).

The clutch unit **110** rotates the plurality of cylindrical rollers in accordance with the movement of the scribing device guide body **242**. For example, the outer circumferential speed of the plurality of cylindrical rollers is controlled so as to match the moving speed of the scribing device guide body in the Y direction. Therefore, when the plurality of cylindrical rollers moves in the Y direction, the plurality of cylindrical rollers does not rub the substrate **90** or does not exert any force on the substrate **90.** As a result, when a vertical crack is created within the substrate **90** by the cutter wheels **62a,** there is no possibility that an undesired crack will result from the cutter wheels **62a** (above, function of claim **9**).

When the first substrate supporting unit **244A** is the timing belt, the surface of the substrate is supported on a surface of the timing belt as compared to when a cylindrical roller is used. As a result, the substrate is stably supported (above, function of claim **10**).

As described above, even when the first substrate supporting unit **244A** is the timing belt, the clutch **116** can circle the plurality of belts in accordance with the movement of the scribing device guide body **244**. In this case, the belt **21e** can select, by the clutch **116,** the direction of the circling movement or stop the circling movement of the belt in accordance with the movement of the space. Therefore, when the clamping of the substrate **90** by the clamping device **251** is released, the substrate supporting device **20** can be used for transporting the substrate **90** (above, function of claim **11**).

The clutch unit **110** circles the plurality of belts in accordance with the movement of the scribing device guide body **244**. As described above, the circling speed of the plurality of belts is controlled so as to match the moving speed of the scribing device guide body **242** in the Y direction. Therefore, when the plurality of belt moves in the Y direction, the plurality of belts does not rub the substrate **90** or does not exert any force on the substrate **90.** As a result, when a vertical crack is created within the substrate **90** by the cutter wheel **62a,** there is no possibility that an undesired crack is will result from the cutter wheel **62a** (above, function of claim **12**).

The structure and the function of the first substrate supporting section **241A** have been described above. The second substrate supporting section **241B** may have a structure and a function similar to those of the first substrate supporting section **241A** (above, function of claims **14** to **21**).

It is preferred that the cutter wheel **62a** is rotatably supported by the cutter head **65** using the servo motor disclosed in WO 03/0111777.

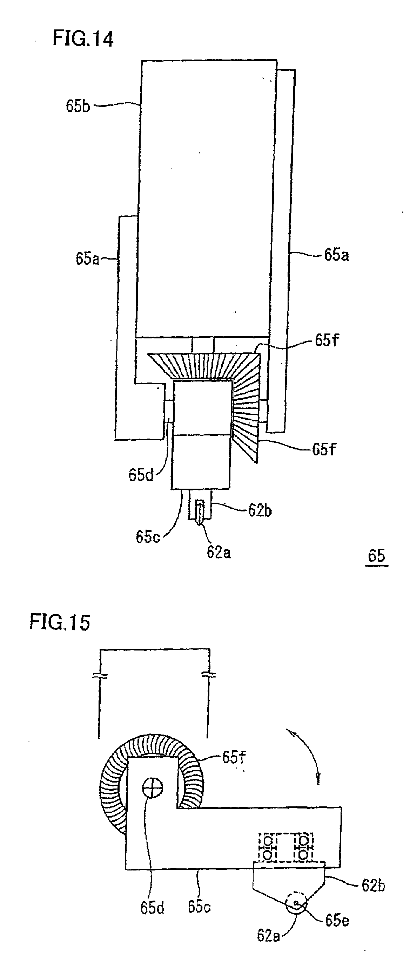

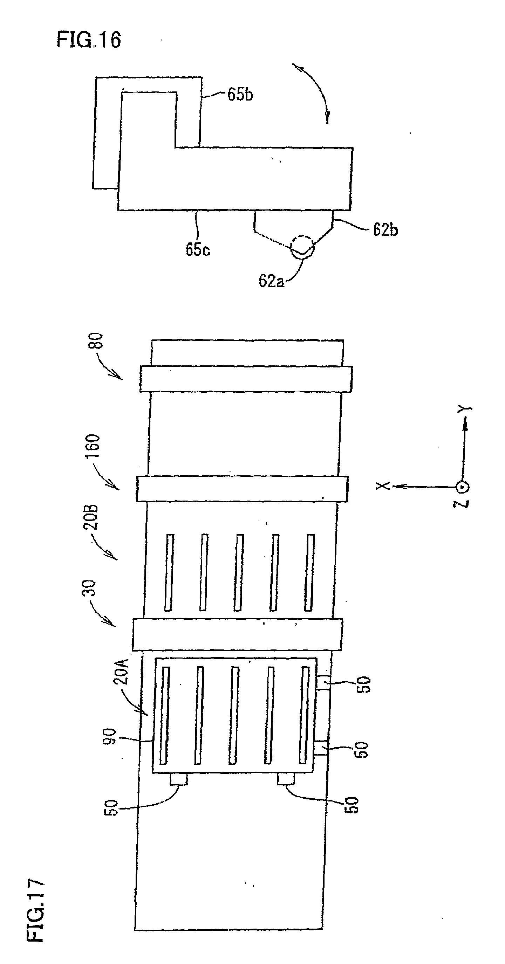

Figure **14** shows a side view of the cutter head **65** and Figure **15** show a front view of the important constituents thereof as one example of the cutter head **65** using the servo motor. The servo motor **65b** is supported in an inverted manner between a pair of side walls **65a.** A holder holding member **65c** is provided below the pair of side walls **65a** so as to be rotatable via a supporting axis **65d,** the holder holding member **65c** having an L shape when viewed from the side. A tip holder **62b** is attached in front (on the right-hand side in Figure **15**) of the holder holding member **65c.** The tip holder **62b** is attached to rotatably support the cutter wheel **62a** via an axis **65e.** Flat bevel gears **65f** are mounted on the rotation axis of the servo motor **65b** and the supporting axis 65d so as to engage with each other. Thus, the holder holding member **65c** performs an upwards and downwards tilt operation with the supporting axis **65d** as its supporting point and the cutter wheel **62a** moves upwards and downwards due to the forward and reverse rotation of the servo motor **65b.** The cutter heads **65** themselves are provided on the upper substrate cutting device **60** and the lower substrate cutting device **70**.

Figure **16** is a front view showing another example of cutter head using a servo motor **65b**. The rotation axis of the servo motor **65d** is directly connected to the holder member **65c.** The cutter heads shown in Figures **14** and **16** move the cutter wheels **62a** upwards and downwards by rotating the servo motors using the position control so as to position the cutter wheel **62a.** The cutter heads transmit the scribing pressure for the brittle material substrate to the cutter wheel **62a** by controlling the rotation torque. The rotation torque acts to return the cutter wheel **62a** to the set position when the position of the cutter wheel **62a** is shifted from the positions set in the servo motors **65b** beforehand during the scribing operation for forming a scribing line on the bonded mother substrate **90** by moving the cutter heads in a horizontal direction. In other- words, the servo motor **65b** controls the position in the perpendicular direction of the cutter wheel **62a**, and at the same time, the servo motor **65b** is an energizing means for the cutter wheel **62a.**

By using the cutter head including the aforementioned servo motor, when the bonded mother substrate **90** is being scribed, the rotation torque of the servo motor is corrected immediately in response to the change of the scribing pressure by the change in resistive force received by the cutter wheel **62a**. Thus, scribing is stably performed and a scribing line with an excellent quality can be formed. Furthermore, since the pressure force of the cutter wheel **62a** is transmitted to the substrate **90** by using the servo motor, the transmittance of the pressure force to the substrate **90** becomes responsive. Thus, the pressure force (scribing load) of the cutter wheel **62a** to the substrate **90** during the scribing can be changed (above, function of claim **22**).

A cutter head is effectively applied to cutting the mother substrate in the substrate cutting system according to the present invention, the cutter head including a mechanism for vibrating a scribing cutter (e.g., a diamond point cutter or a cutter wheel) which scribes the bonded mother substrate **90** so as to periodically change the pressure force of the scribing cutter on the bonded mother substrate **90**.

The structure of the upper substrate cutting device **60** and the lower substrate cutting device **70** is not limited to the aforementioned structure. In other words, any structure can be used, as long as the device has a structure for processing the top and bottom surfaces of the substrate so as to cut the substrate.

For example, the upper substrate cutting device **60** and the lower substrate cutting device **70** can be a device which cuts the mother substrate by using such as a laser light, a dicing saw, a cutting saw, a cutting blade or a diamond cutter.

When the mother substrate is made of a metal substrate (e.g., a steel plate), a wood plate, a plastic substrate or a brittle material substrate (e.g., a ceramic substrate, glass substrate or semiconductor substrate), a substrate cutting device for cutting the mother substrate by using, for example, a laser light, a dicing saw, a cutting saw, a cutting blade or diamond cutter is used.

Furthermore, when a bonded mother substrate for which a pair of mother substrate is bonded to each other, a bonded mother substrate for which different types of mother substrates are bonded to each other or a stacked substrate for which a plurality of mother substrates are stacked on each other is cut, a substrate cutting device similar to the one used for cutting the aforementioned mother substrate can be used.

For example, since a bonded mother substrate, for which brittle material substrates are bonded to each other and is used for an FPD, is bonded by using an adhesive, bendings and undulations are created in the bonded mother substrate **90**. In the substrate cutting system **1** according to the present invention, each cutter wheel **62a** can scribe the substrate in accordance with the undulations and bendings of the substrate **90** so as to balance the load applied to each cutter wheel **62a** facing each other. Thus, the cutter wheel **62a** can be effectively applied to cutting the bonded mother substrate **90** (above, function of claim **48**).

The upper substrate cutting device **60** and the lower substrate cutting device **70** may include a cutting assistance means for assisting the cutting of the substrate. As a cutting assistance means, for example, a means for pressing (e.g., a roller on the substrate), a means for spraying compressed air onto the substrate, a means for irradiating a laser onto the substrate or a means for warming (heating) the substrate by spraying such as heated air onto the substrate is used.

Furthermore, in the description above, the upper substrate cutting device **60** and the lower substrate cutting device **70** have the same structure. However, the upper substrate cutting device **60** and the lower substrate cutting device **70** can have structures different from each other, depending on the cut pattern of the substrate or the cutting condition of the substrate.

The operation of the substrate cutting system having such a structure will be mainly described as an example for the case where a bonded substrate for which large-sized glass plates are bonded to each other is cut

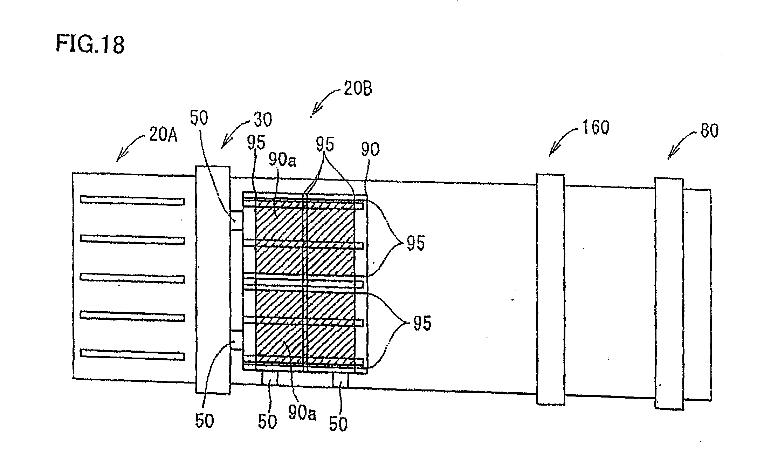

When the bonded mother substrate **90** for which large-sized glass substrates are bonded to each other is cut into a plurality of panel substrates **90a** (see Figure **18**), first, as shown in Figure **17,** the bonded mother substrate **90** is carried in, by a transportation robot, etc. , from the end of the substrate carry-in side to the present substrate cutting system. Thereafter, the bonded mother substrate **90** is mounted, in a horizontal state, on each timing belt **21e** of all of the first substrate supporting units **21A** of the first substrate supporting section **20A.**

In this state, the bonded mother substrate **90** is pushed by pushers (not shown) so as to contact positioning pins (not shown) arranged along the frame **11B** of the main frame **11**, and at the same time, the bonded mother substrate **90** is pushed by pushers (not shown) so as to contact positioning pins (not shown) arranged along the direction perpendicular to the frame **11B.** Thereby, the bonded mother substrate **90** is positioned in a predetermined position in the mounting base **10** in the substrate cutting system.

Thereafter, as shown in Figure **17**, the side edge of the bonded mother substrate **90** being positioned on the substrate carry-in side is clamped by each clamp member **51** of the clamp device **50**, the side edge being along the frame **11B** of the main frame **11,** and at the same time, the side edge of the bonded mother substrate **90** is clamped by each clamp member **51** which is arranged on the substrate carry-in side in order to be perpendicular to the frame **11B.**

When the side edge of the bonded mother substrate **90** is clamped by the clamp device **50**, the side edge being perpendicular to each other, each clamp member **51** which clamps the side edge of the bonded mother substrate **90** lowers at approximately the same time due to the weight of the bonded mother substrate **90.** Therefore, thebondedmother substrate **90** is additionally supported by the timing belts **21e** of all of the first substrate supporting units **21A.**

In this state, after the clutches **116** in the four clutch units 110 of the first substrate supporting section **20A** and the second substrate supporting section **20B** are coupled to the driving axes **122,** the scribing device guide body **30** is slid to the substrate carry-in side so as to be at a predetermined adjacent position which is above the side edge of the bonded mother substrate **90** clamped by the clamp device **50** in a horizontal state. When the first optical device **38** and the second optical device **39** provided on the scribing device guide body **30** move along the scribing device guide body **30** from respective waiting positions, the first optical device **38** and the second optical device **39** capture the first alignment mark and the second alignment mark provided on the bonded mother substrate **90,** respectively.

When the scribing guide body **30** slides, the first substrate supporting section **20A** is slid to the substrate carry-in side and the second substrate supporting section **20B** is slid to the substrate carry-in side, and at the same time, the timing belts **21e** of the first substrate supporting units **21A** of the first substrate supporting section **20A** and the timing belts **21e** of the second substrate supporting units **21B** of the second substrate supporting section **21B** move the bonded glass substrate in a direction opposite to the moving direction of the scribing device guide body **30** at the same speed as the moving speed of the scribing device guide body **30**. Thus, the bonded mother substrate **90** remains held by the clamp device **50** and is supported by the timing belts **21e** of the first substrate supporting units **21A** of the first substrate supporting section **20A** and the timing belts **21e** of the second substrate supporting units **21B** of the second substrate supporting section **20B** without being rubbing.

Next, based on the result of the captured first alignment mark and second alignment mark, the inclination of the bondedmother substrate **90** with respect to the direction along the scribing device guide body **30** and the starting and ending position of cutting the bonded mother substrate **90** are calculated by an operational processing device (not shown). The bonded mother substrate **90** is supported by the clamp devices **50** in a horizontal state. Based on the result of the operation, the upper substrate cutting device **60** and the lower substrate cutting device **70** are moved in the X direction corresponding to the inclination of the bonded mother substrate **90,** and at the same time, the scribing device guide body **30** is moved in the Y direction so as to cut the bonded mother substrate **90** (which is referred to as "scribing by linear interpolation" or "cutting" by linear interpolation). In this case, as shown in Figure **18,** each cutter wheel **62a** facing each other is pressed so as to make contact onto the top surface and the bottom surface of the bonded mother substrate **90** and rolled on the top surface and the bottom surface of the bonded mother substrate **90,** respectively, so as to form scribing lines on the top surface and the bottom surface of the bonded mother substrate **90.**

The bonded mother substrate **90** is, for example, cut so that two panel substrates **90a** are cut forming into two lines in a line direction along the upper guide rail **31** and the lower guide rail **32**. The cutter wheel **62a** of the upper substrate cutting device **60** and the cutter wheel **62a** of the lower substrate cutting device **70** are pressed so as to make contact and rolled along the side edge of the panel substrates 90a in order to cut four panel substrates **90a** from the bonded mother substrate **90.**

In this case, vertical cracks are created by the cutter wheel **62a** of the upper substrate cutting device **60** and the cutter wheel **62a** of the lower substrate cutting device **70** on the part of the glass substrate where each cutter wheel **62a** is pressed so as to make contact and rolled. As a result, scribing lines **95** are formed thereon. Protrusions are formed, with a predetermined pitch, on the outer circumferential ridge of the blade edge of each cutter wheel **62a**. Thus, a vertical crack having about 90% of the thickness of the glass substrate in the thickness direction is formed on each glass substrate.

A scribing method is effectively applied to cutting the bondedmother substrate **90** in the substrate cutting system according to the present invention, the scribing method using the cutter head including a mechanism for vibrating a scribing cutter (e. g. , a diamond point cutter or a cutter wheel) which scribes the bonded mother substrate **90** so as to periodically change the pressure force of the scribing cutter on the bonded mother substrate **90**.

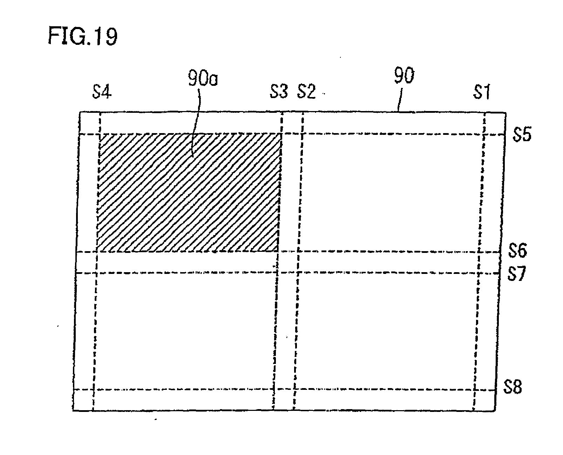

As a method for scribing the top and bottom surfaces of the bonded mother substrate **90**, as shown in Figure **19**, a conventional method is commonly used, in which the formation of the scribing lines, in the following order, along lines **S5** to **S8** to be scribed in a lateral direction (direction with a longer side of the bonded mother substrate **90**) are formed after the formation of scribing the lines, in the following order, along lines **S1** to **S4** to be scribed in a longitudinal direction (direction with a shorter side of the bonded mother substrate **90**).

### (Detailed description of vacuum adsorption head)

Hereinafter, a vacuum adsorption head **600** (e.g., a vacuum adsorption head **140q** and a vacuum adsorption head **540**) according to the present invention will be described in detail.

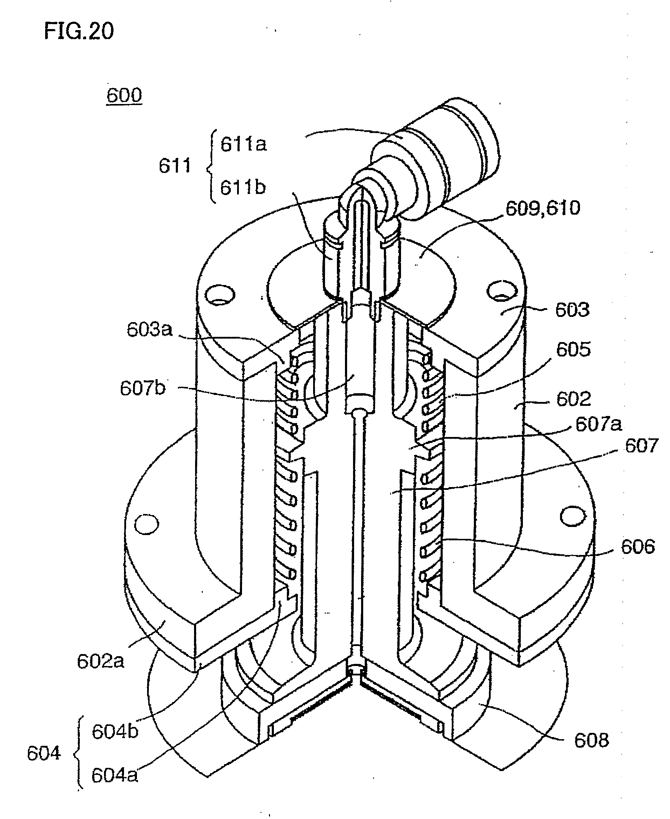

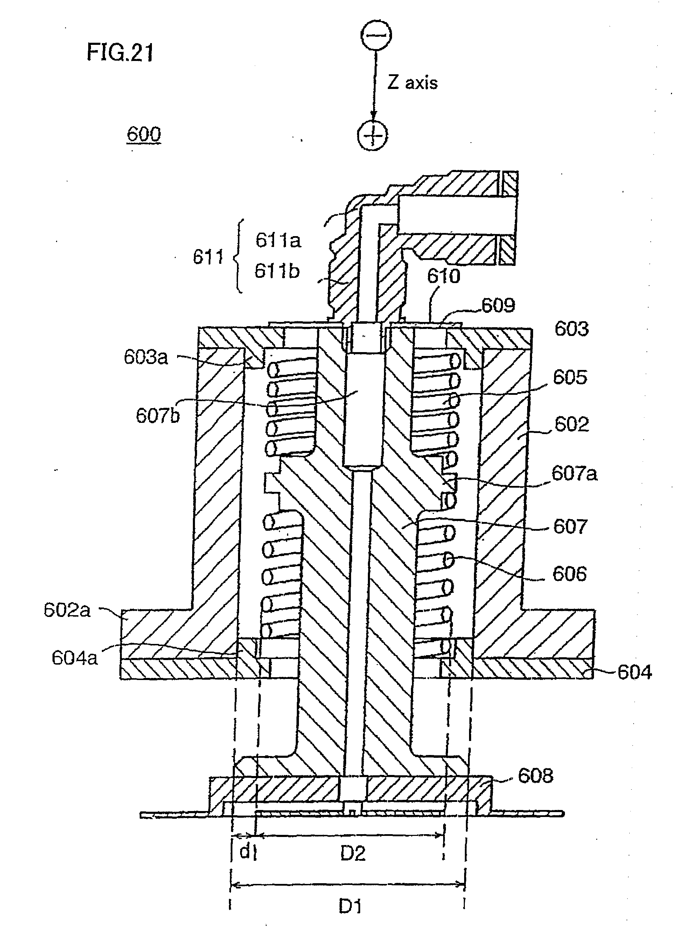

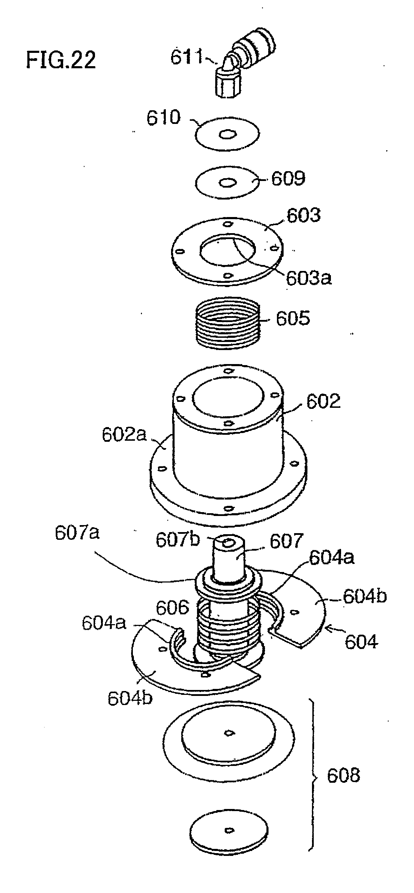

Figure **20** is a broken cross-sectional view showing an inner structure of the vacuum adsorption head **600** according to the present embodiment. Figure **21** is a cross-sectional view showing the vacuum adsorption head **600** which is cut along the central axis thereof. Figure **22** is an exploded perspective view showing the mounting relationship between each constituent of the vacuum adsorption head **600.**

The vacuum adsorption head **600** includes a casing section, an adsorption section and an elastic supporting section.

The adsorption section includes an adsorption pad **608** and a suction shaft **607**. The adsorption pad **608** is provided in order to vacuum-adsorb the substrate **90.** The suction shaft **607** is provided having an exhaust hole provided in order to exhaust air into the adsorption head **608**. The casing section controls the movement range of the suction shaft **607** and supports the suction shaft **607** so that the suction shaft **607** is slightly movable. The elastic supporting section elastically supports the suction shaft **607** in the casing section so that the suction shaft **607** is slightly movable in its axial direction and in a direction diagonal to its axial direction

The suction shaft **607** includes a step section **607a** in a shape of flange provided approximately in the middle of the casing section.

The casing section includes a casing **602**, an upper casing plate **603** and a lower casing plate **604**. The casing **602** includes a space for deformably holding the elastic supporting section therein. The upper casing plate **603** closes an upper end of the casing **602** with a first opening remain opening. The lower casing plate **604** closes a lower end of the casing **602** with a second opening remaining open.

The elastic supporting section includes an upper spring **605** and a lower spring **606.** The upper spring **605** is held between the upper casing plate **603** and the step section **607a.** The lower spring **606** is held between the lower casing plate **604** and the step section **607a**.

As shown in Figure **21**, description will be made assuming that the central axis of the vacuum adsorption head **600** is a z axis, the upper direction is -, and the lower direction is +. As described above, the casing section includes the casing **602**, the upper casing plate **603** and the lower casing plate **604.** As the elastic supporting section, the upper spring **605** and the lower spring **606** are provided within the casing **602**. The casing section supports the adsorption section so that the adsorption section is movable via the elastic supporting section in the z axial direction and a diagonal direction tilted from the z axis (i.e. , the adsorption section freely moves in accordance with the tilt). The casing section corrects the position of the suction shaft **607** in a predetermined direction using the inner spring force of the casing section. The adsorption section is configured by the suction shaft **607**, the adsorption pad **608**, a lubricating sheet **609**, a stopper plate **610** and a connection section **611**.

The casing section will be described with reference to Figures **20** to **22.** The casing **602** is a cylindrical member with a flange **602a** integrally formed at the lower portion of the casing **602.** The inner diameter of the casing **602** is **D1**. It is assumed that each outer diameter of the upper spring **605** and the lower spring **606** is D2. Also, it is assumed that the clearance in which the upper spring **605** and the lower spring **606** can freely deform inside the casing **602** is d. In this case, **D1=D2+2d.** The flange section **602a** fixes the casing **602** to the lower casing plate **604.** The flange section **602a** has a thickness such that a screw hole for fixing can be provided. The upper casing plate **603** has a first opening in the middle thereof. When the upper casing plate **603** holds the suction shaft **607** via the upper spring **605** and the lower spring **606** such that the suction shaft **607** can freely move in the upwards and downwards directions, the upper casing plate **603** fixes the upper portion of the upper spring **605.** The outermost diameter thereof is the same size as the outer diameter of the cylindrical portion of the casing **602**. The upper casing plate **603** is fixed to the upper end surface of the casing **602** by a screw. A protrusion **603a** in a ring shape is provided inside the upper casing plate **603.** The lower casing plate **604** is configured by two semicircular plates **604b** as shown in Figure **22.** The lower casing plate **604** has a second opening in the center thereof. A protrusion **604a** in a ring shape is provided inside the lower casing plate **604**. The protrusion **603a** controls the upper end position of the upper spring **605** so that the upper end position of the upper spring **605** is in the same axis as the upper casing spring plate **603**. The protrusion **604a** controls the lower end position of the lower spring **606** so that the lower end position of the lower spring **606** is in the same axis as the lower casing spring plate **604.** The suction shaft **607** is contacted to the inside of the first opening and the second opening, the inside being provided in the center of the upper casing plate **603** and in the center of the lower casing plate **604,** respectively, so that the tilt of the suction shaft **607** is controlled.

Next, the adsorption section will be described. The suction shaft **607** is a hollow shaft in which an intake hole is formed for exhausting air within the adsorption pad **608** and releasing negative pressure within the adsorption pad **608** when the vacuum adsorption head **600** contacts an object to be adsorbed while the suction shaft **607** holds the adsorption pad **608**. A circular lubricating sheet **609** and a stopper plate **610** are attached to the end face of the upper side of the suction shaft **607** as shown in Figure 22**.**

The connection section **611** can be either elbow-shaped or straight-shaped. However, the connection section **611** which has an elbow shape is shown herein. As shown in Figure **20**, the connecting section **611** has a connector **611a** and a nipple **611b**. When the nipple **611b** is engaged with a female screw provided on the upper portion of the intake hole **607b** of the suction shaft **607** and a male screw of the connector **611a**, the connector **611a** is connected to the suction shaft **607**.

The elastic supporting section will be described. The upper spring **605** and the lower spring **606,** which are the elastic supporting section, are coil springs having the same outer diameter **D2** and inner diameter to each other. In order to hold the upper spring **605** and the lower spring **606** as shown in Figure **20** or **21**, the suction shaft **607** is of a simple body and the lower spring **606** is inserted from the upper portion of the suction shaft **607** while the lower spring **606** is deformed with the application of rewinding force so that the inner diameter thereof is enlarged.. After the lower spring **606** passes the step section **607a**, the rewinding force is released. Thus, the lower spring **606** can be held at a proper position. In this state, as shown in Figure **22,** the lower casing plate **604** divided in half is fixed to the flange section **602a** of the casing **602** by a screw. The upper spring **605** only has to be inserted from the upper portion of the suction shaft **607** and then, the upper spring **605** can be held at a proper position. Next, compressive force (pressurization) is applied to the upper spring **605** and the lower spring **606**. In this state, the upper casing plate **603** is fixed to the upper end face of the casing **602** by a screw. In this manner, the upper spring **605** and the lower spring **606** can be held while force is being applied to the upper spring **605** and the lower spring **606**.

In order to fix the lubricating sheet **609** and the stopper plate **610**, the nipple **611b** is engaged with the intake hole **607b** of the suction shaft **607**. While in this state, when each component is set, the force applied to the upper spring **605** becomes larger than the force applied to the lower spring **606.** Thus, the restoring force against the force applied to the upper spring **605** works and the suction shaft **607** is pulled closer in the +z axis direction. However, further movement of the suction shaft **607** in the +z axis direction is controlled when the stopper plate **610** contacts the upper surface of the upper casing plate **603.** When the adsorption pad **608** contacts the object to be adsorbed, the suction shaft **607** moves in the -z axis direction.

As described above, the adsorption shaft **607** is slightly movable in its axial direction and in a direction diagonal to the axial direction, and is elastically supported so as to move accordingly. Thus, the adsorption pad **608** can firmly hold the substrate **90** in accordance with the main surface of the substrate **90** even if there is a presence of undulations or bendings on the substrate **90** (above, function of claim **42**).

Furthermore, the adsorption pad **608** is returned to a state, due a restoring force of the spring, in which the adsorption face of the adsorption pad **608** virtually faces directly downward before the adsorption pad **608** adsorbs the substrate **90** and when the adsorption pad **608** stops adsorbing the substrate **90**. Thus, when the adsorption pad **608** adsorbs the substrate **90**, there is no possibility that the adsorption pad **608** causes damages to the substrate **90** and it does not fail to adsorb the substrate **90** (above, function of claim **43**).

The upper casing plate **603**, the casing **602** and the lower casing plate **604** are structured separately. The structure of the casing section is not limited to this structure as long as it can hold the degree of deformation of the elastic supporting member. The manner of inserting the upper spring **605** and the lower spring **606** is not limited to the method described above. Furthermore, each of the size of the inner diameter and outer diameter of the upper spring **605** and the lower spring **606** are not limited to a size that is same to each other. The lengths or spring constants of the upper spring **605** and the lower spring **606** are changed as appropriate in accordance with other conditions. When the outer diameter of the attachment section for the adsorption pad of the adsorption shaft **607** is small of the upper spring **605** can be inserted from the upper portion of the adsorption shaft **607,** the lower spring **606** can be inserted from the lower portion of the adsorption shaft **607**, using the step section **607a** as a boundary therebetween. The shape of the adsorption shaft **607** is not limited to the one shown in Figures **20** and **21**. For example, instead of the adsorption shaft **607's** body having a step section **607a** being integrally processed, an E ring or an O ring can be inserted onto the cylindrical portion of the adsorption shaft **607.** Thus, the ring can hold the upper end of the upper spring **605** and the upper end of the lower spring **606.** The thin plate stopper plate **610** is provided in order to control the movement of the adsorption shaft **607** in the +z direction. However, an E ring or an O ring can be inserted instead of stopper plate **610** Commonly-used connector **611a** and the nipple **611b** are used for the connection section **611**. However, connection components having other structures can be used.

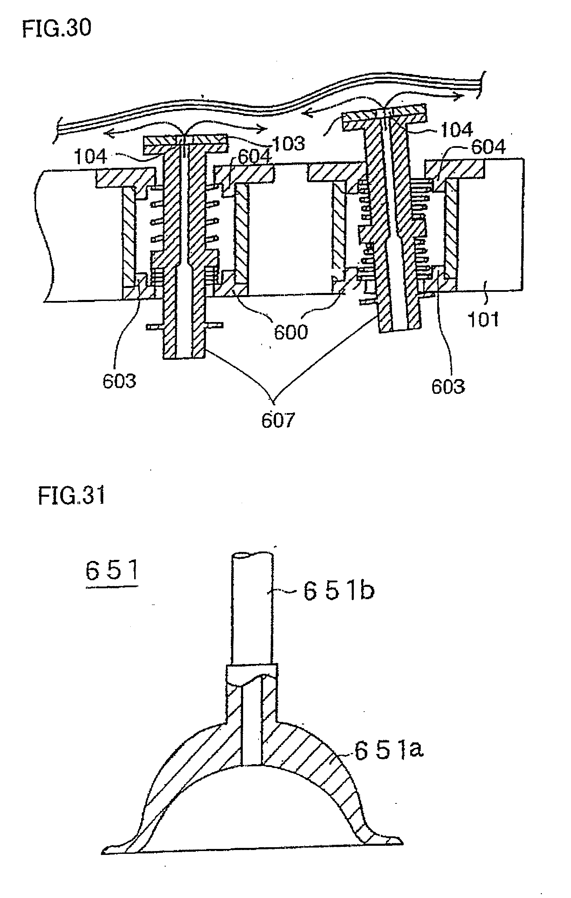

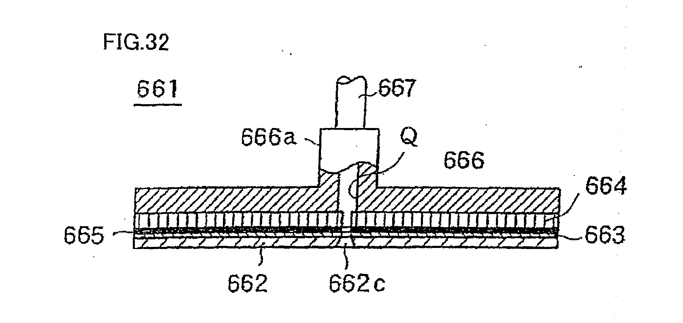

The structure of the adsorption pad can be varied depending on its use. When a commonly-used substrate or press-processed product is adsorbed, an adsorption pad **651** as shown in Figure **31** can be used. When a bonded display panel substrate for which two glass substrates are bonded to each other is adsorbed, an adsorption pad **661** as shown in Figure **32** is used such that an uneven distribution of spacer between two glass substrates does not occur. Furthermore, when a large-sized bonded glass substrate is adsorbed at a plurality of spots, a plurality of adsorption pads **661** is used. In such a case, due to the attachment difference between each adsorption pad and the tilt of the adsorption head, to which a plurality of adsorption pads are attached, with respect to the object to be adsorbed, conventionally, a gap occurs between each adsorption pad and the object to be adsorbed. Thus, when all of the adsorption planes of the adsorption pads are contacted so as to adsorb the object to be adsorbed, there are some cases in which some of the adsorption planes strongly push the object to be adsorbed. In this case, when the object to be adsorbed is, for example, a brittle material substrate, there is a possibility that damages are caused to the brittle material substrate or the gap between two glass substrates of a liquid crystal display panel is changed. In this sense, when the object to be adsorbed is adsorbed using a conventional vacuum adsorption head, it is desirable to have a gap, for example, of 0.0mm to 0.3mm between the adsorption pad and the object to be adsorbed. However, the vacuum adsorption head according to the present invention adsorbs the object to be adsorbed after contacting it. The vacuum adsorption head **600** according to the present invention softly contacts the object to be adsorbed and smoothly moves in the upwards and downwards directions. Therefore, a height between each adsorption pad can be different . Thus, even when the vacuum adsorption head **600** strongly pushes the object to be adsorbed, it does not cause any damage to the object to be adsorbed and can firmly adsorb the object to be adsorbed.

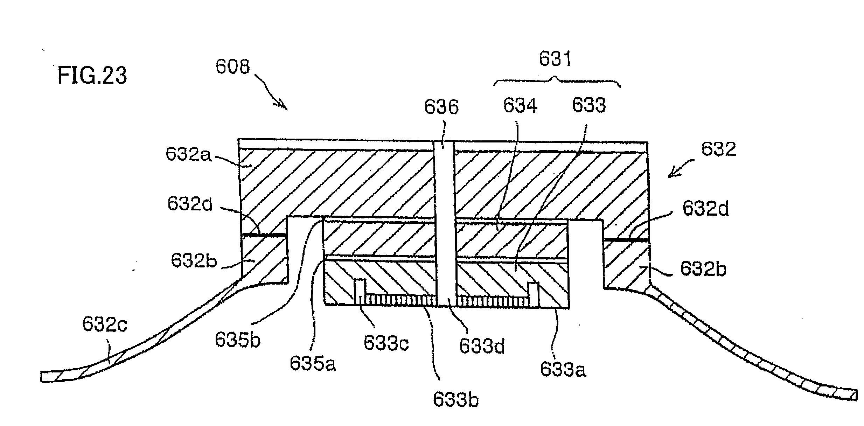

The structure of adsorption pad **608** according to another embodiment of the present invention will be described with reference to Figure **23.** The adsorption pad **608** includes a vacuum adsorption pad **631** and a skirt pad **632**. The vacuum adsorption pad **631** is a multi-layered structure in which an adsorption board 633 and a reinforcement layer **634** are joined with a double-faced adhesive sheet **635a**. The adsorption board **633** includes a sealing section **633a** which is a flat face in the periphery of the adsorption board **633** and an adsorption section **633b** on which multiple concave-convex portions are formed.

The adsorption board **633** is made of a photo-sensitive resin material and has a disc shape. An opening **633d** penetrates on the center of the adsorption board **633** in the upwards and downwards directions. The opening **633d** is provided as a part of the suction opening **636**. The sealing section **633a** is an area in which the photo-sensitive resin material is not etched. An annular groove **633c** is formed as a new concaved portion on each inner circumferential side of the sealing section **633a**. The opening **633d** is provided in the center of the adsorption board **633.** The grooves are connected to the opening **633d** and are used as a passage when air present in the concaved portion is exhausted. The reinforcement layer **634** is a bonded layer such that the photo-sensitive resin material, which configures the enforcement board **633,** does not deform due to an external force.

The skirt pad **632** is a rubber molding in which a plate section **632a**, an annular section **632b** and a skirt section **632c** are integrally molded. The plate section **632a** is a holding member in a disc shape for holding the vacuum adsorption pad **631** via a double-faced adhesive sheet **635b**. The diameter of the plate section **632a** is sufficiently larger than the outer diameter of the vacuum adsorption pad **631**. An opening is provided in the center of the plate section **632a.** The opening which is connected to the opening of the vacuum adsorption pad **631** forms the suction mouth **636.** The annular section **632b** is thickly formed in an annular shape at the outer edge of the plate section **632a** so as to circumvent the vacuum adsorption pad **631** with a predetermined interval. The annular section **632b** is formed such that the vacuum adsorption pad **631** protrudes below the annular section **632b**. The lower surface of the annular section **632b** is formed above the lower surface of the vacuum adsorption pad **631**. The skirt section **632c** has the annular section **632b** at its root. The skirt section **632c** is a thin annular-rubber member and is spxead conically in a direction facing the brittle material substrate.

The skirt pad **632** acts to enlarge the exhaust space at the vicinity of the adsorption section and enlarge an adsorable Interval between the vacuum adsorption pad **631** and the object to be adsorbed when it adsorbs the object to be adsorbed. Since the thickness of the skirt pad **632c** is thin, when the adsorption pad **608** approaches the object to be adsorbed, the outer circumferential portion of the skirt section **632c** contacts the object to be adsorbed and elastically deforms. As described above, when the skirt section **632c** of the skirt pad **632** contacts the object to be adsorbed, it exhibits a sealing function to shut off the inflow of air from outside.

A slit **632d** is a gap provided at the annular section **632b,** through which air leaks between the inside and outside of the skirt. The slit **632d** is realized, for example, by cutting a portion of the sides of the skirt pad **632** after the skirt pad **632** is molded. The slit **632d** is a penetration hole having a size which can maintain the inner space in negative pressured state during the time after the skirt section **632c** contacts the object to be adsorbed and before the vacuum adsorption pad **631** contacts the object to be adsorbed, and does not prevent the vacuum adsorption pad **631** from adsorbing the object to be adsorbed.

Compared to the conventional adsorption pad of example **2** shown in Figure **32,** the adsorption pad **608** shown in Figure **23** has the skirt section added thereto, so that the contacting area of the adsorption pad **608** is enlarged. Thus, there is an effect that the adsorption pad **608** is likely to move in accordance with the tilt or the undulation of the surface of the brittle material substrate which is an object to be adsorbed. As a result, the vacuum adsorption pad according to the present invention is further easily tilted in accordance with the tilt or the undulation of the surface of the brittle material substrate. Therefore, the vicinity of the adsorption board **633** can be stably negative-pressurized at an early stage immediately before the vacuum adsorption pad **608** adsorbs the brittle material substrate.

In Figures **20** to **22**, as an adsorption pad, the adsorption pad **608** in Figure **23** is shown as an example to be attached,. However, depending on the material, the structure and the shape of an object to be absorbed, the adsorption pads shown in Figures **31** and **32** can be attached. For example, the adsorption pad **651** shown in Figure **31** can be used for a commonly-used substrate or press-processed product. In the case of a bonded glass substrate (e.g., liquid crystal display panel) or a bonded plastic substrate, it is preferable to use the adsorption pad **661** shown in Figure **32** in order to avoid the gap between the two substrates from being changed.

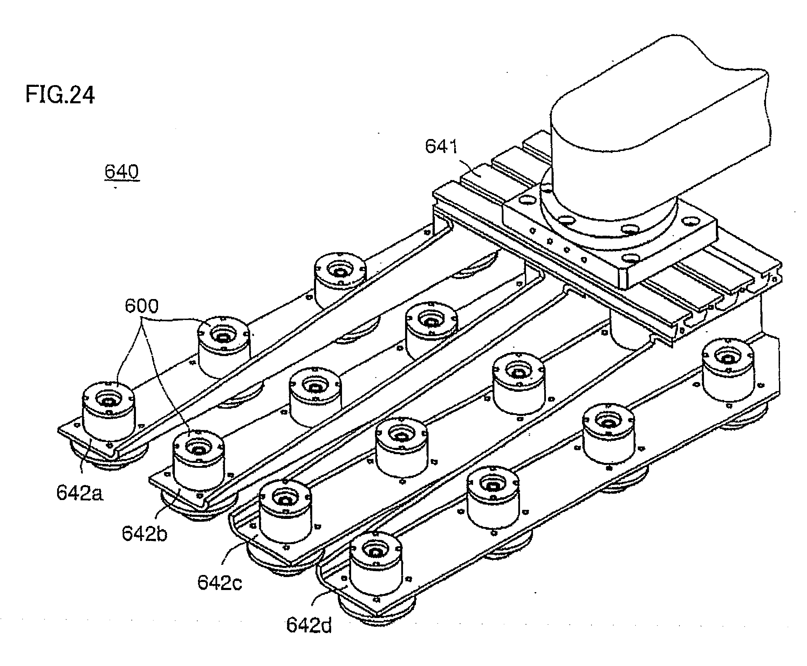

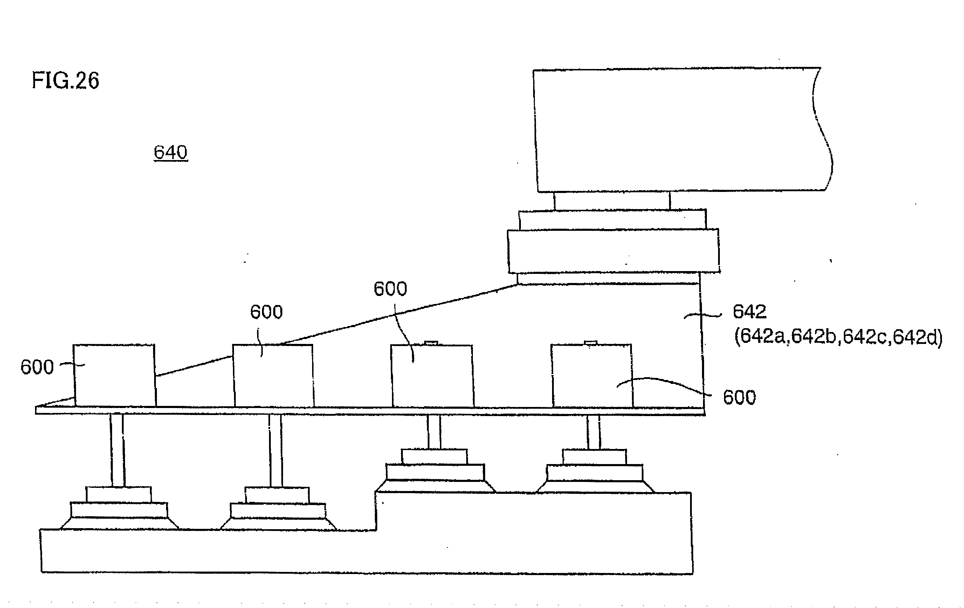

The operation when a large-sized object to be adsorbed is adsorbed and transferred using the vacuum adsorption head **600** structured as described above will be described. Figure **24** is a view schematically showing an example of a transportation robot **640** to which a plurality of vacuum adsorption heads **600** are attached. A plurality of angles **642a, 642b, 642c** and **642d** are fixed to a chucking table **641,** depending on the size of an object to be adsorbed. A row of a plurality of vacuum adsorption heads **600** is attached to each angle **642** depending on the size of the object to be adsorbed. Even when the object to be adsorbed which is mounted on a working table (not shown) has undulations on its surface, the adsorption pad **608** can move in accordance with the undulations. Thus, there is no need for a height determination mechanism or for individually adjusting the height of the adsorption head as conventionally required, thereby making the process for attaching and adjusting the adsorption head easy. Figure 26 is a view schematically showing an example of adsorbing an object to be adsorbed by the transportation robot **640** to which a plurality of vacuum adsorption heads **600** are attached, the object to be adsorbed having steps. As shown in Figure **26,** even in the case of the object to be adsorbed which has a small step (offset) on the adsorption plane, the adsorption pad moves in the upwards and downwards directions in accordance with shape of the surface of the object to be adsorbed. Thus, the object to be adsorbed can be firmly adsorbed. When the object to be adsorbed is small, only one vacuum adsorption head **600** needs to be provided on the transportation robot **640.**

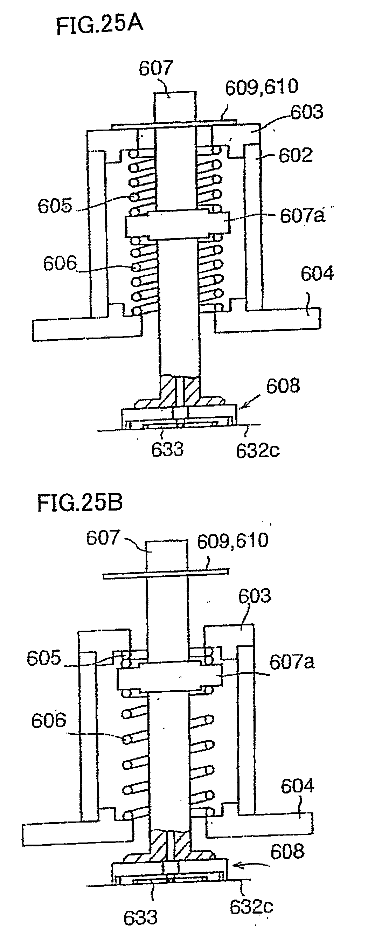

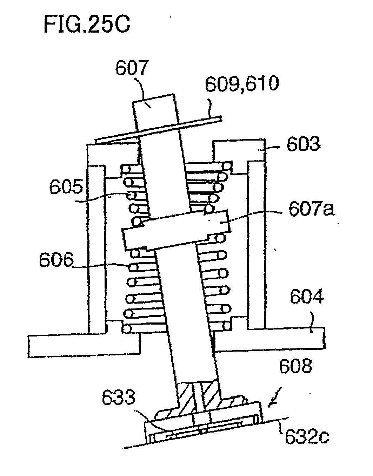

Figure **25** is a view schematically showing a change of the position of the adsorption pad **608** when a plurality of adsorption pads **608** is used to adsorb a large-sized object to be adsorbed in order to lift the large-sized object. Undulations occur in the large-sized object to be adsorbed. Figure **25A** is a cross-sectional view showing the state of the vacuum adsorption head **600** before adsorption. Figure **25A** shows the state in which the adsorption pad **608** drops to the lowermost end due to the elasticity of the upper spring 605 as described above. In this state, the heights of all of the adsorption pads **608** of the vacuum adsorption heads **600** shown in Figure **24** are aligned in the x direction and the tilts of the adsorption pads **608** are approximately aligned due to the spring within the vacuum adsorption device.

Next, all of the vacuum adsorption heads **600** approach the object to be adsorbed, which is mounted on the working table (not shown), and each of the adsorption pads **608** firmly sticks to the object to be adsorbed. When the descent amount of the vacuum adsorption head **600** is large, each of the adsorption pads **608** moves by a large amount in the -z direction as shown in Figure **25B.** Even in the case that there are large undulations on the object to be adsorbed or the surface of the object to be adsorbed is slightly tilted, the adsorption shaft **607** moves in accordance with the undulations so as to respond. Therefore, a desired adsorption force of each adsorption pad is held.

Next, a case, in which the object to be adsorbed is lifted from the working table and is transported to another place, is considered. When a large-sized object to be adsorbed is adsorbed and transported, there are some cases in which the object to be adsorbed bends due to its own weight on its way. In particular, when a large-sized object to be adsorbed is held mainly at the central portion thereof, the outer circumferential portion of the object to be adsorbed is likely to bend downward. In this case, the line normal to the surface of the object to be adsorbed in the outer circumferential portion is out of the z direction of the vacuum adsorption head **600**.

When an adsorption pad **661** which does not have a neck-movement function is used as shown in Figure **32**, after the adsorption board **662** firmly sticks to the surface of the object to be adsorbed, the surface of a portion of the object to be adsorbed is tilted, the parallel relationship between the adsorption board 662 and the surface of the object to be adsorbed is destroyed. As a result, vacuum in the adsorption board **662** can not be held. However, when the vacuum adsorption head **600** according to the present embodiment is used, the adsorption board **622** arranged outside moves freely in accordance with the tilt of the surface of the object to be adsorbed since the adsorption board **662** moves in accordance with the tilt of the object to be adsorbed. Thus, the adsorption force of the adsorption board **662** can be held.

Before the vacuum adsorption head according to the present embodiment adsorbs the object to be adsorbed and after the vacuum adsorption head completes the adsorption and releases the object to be adsorbed, the state does not remain as does the adsorption pad in a conventional example, and the position of the adsorption pad is returned to a state in which the adsorption plane faces substantially downward due to the restoring force of the spring within the adsorption head. Therefore, when the vacuum adsorption head adsorbs the next object to be adsorbed, it does not cause any damage to the object to be adsorbed and does not fail to adsorb the object to be adsorbed.

In the case where the adsorption pad **608** shown in Figure **23** is used, when the adsorption board **633** firmly sticks to the surface of the object to be adsorbed, the skirt section **632c** does not contribute to the adsorption force. In this state, when the surface of a portion of the object to be adsorbed is tilted, the parallel relationship between the adsorption board **633** and the surface of the object to be adsorbed is broken. Therefore, the vacuum in the adsorption board **633** can not be held. However, in the case where the vacuum adsorption head **600** according to the present embodiment is used, even when the adsorption shaft **607** supported by the elastic supporting member and a portion of the surface of the object to be adsorbed are tilted, the vacuum adsorption head **600** can easily move in accordance with the tilt of the surface of the object to be adsorbed. Thus, the vacuum adsorption head **600** can firmly hold the object to be adsorbed. Figure **25C** shows this state. In other words, the adsorption board **633** itself moves in accordance with the bending of the object to be adsorbed so as to tilt. The allowable tilt angle of the adsorption shaft **607** is determined by the outer diameter of the adsorption shaft **607** and each inner diameter of the upper casing plate **603** and the lower casing plate **604**. Since the tilting elasticity of the adsorption shaft **607** depends on the bending force or the eccentricity load of the upper spring **605** and the lower spring **606**, the tilting elasticity of the adsorption shaft **607** becomes smaller when compared to the elongation force or compressive force in its axial direction. This means that the adsorption pad **608** can flexibly respond to the tilt of the adsorption plane of the adsorption pad 608. After the vacuum adsorption head **600** according the present embodiment completes the adsorption and releases the object to be adsorbed, the state does not remain as does the adsorption pad in a conventional example, and the position of the adsorption pad is returned to a state in which the adsorption plane faces substantially downward due to the restoring force of the spring within the adsorption head. Therefore, when the vacuum adsorption head adsorbs the next object to be adsorbed, it does not cause any damage to the object to be adsorbed and it does not fail to adsorb the object to be adsorbed.

In the vacuum adsorption head 600 according to the present embodiment, the adsorption shaft **607** thereof can move freely in its axial direction, is capable of neck-moving and can be returned to a state in which the position of the adsorption pad faces in a predetermined direction from a state in which the adsorption shaft **607** is neck-moving due to a spring force within the adsorption head. Thus, the adsorption pad **661** which is not appropriate for use of the conventional vacuum adsorption device can be used in accordance with the characteristics of the object to be adsorbed. In particular, the adsorption pad shown in Figure **32** can be employed as appropriate.

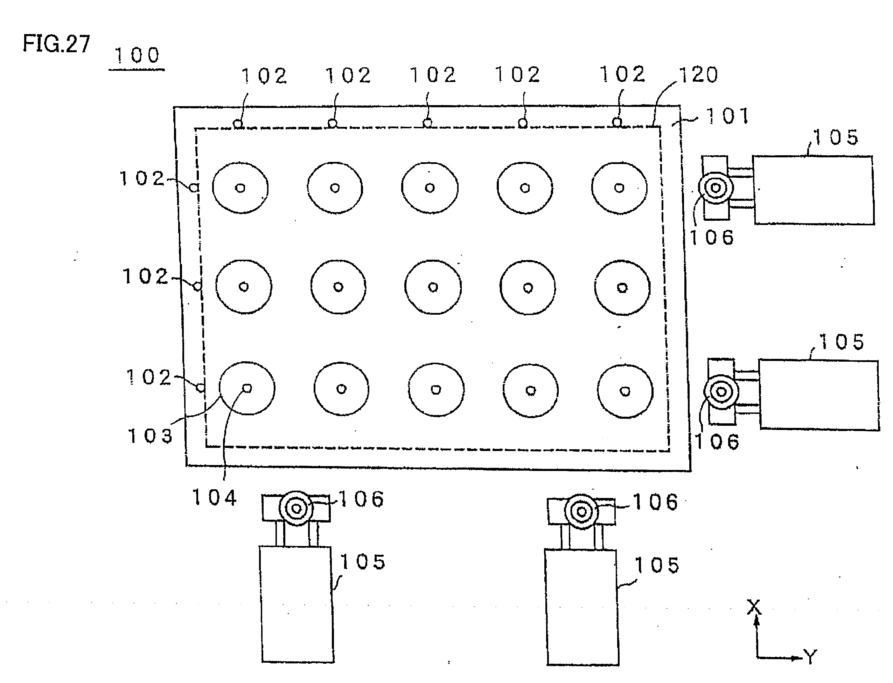

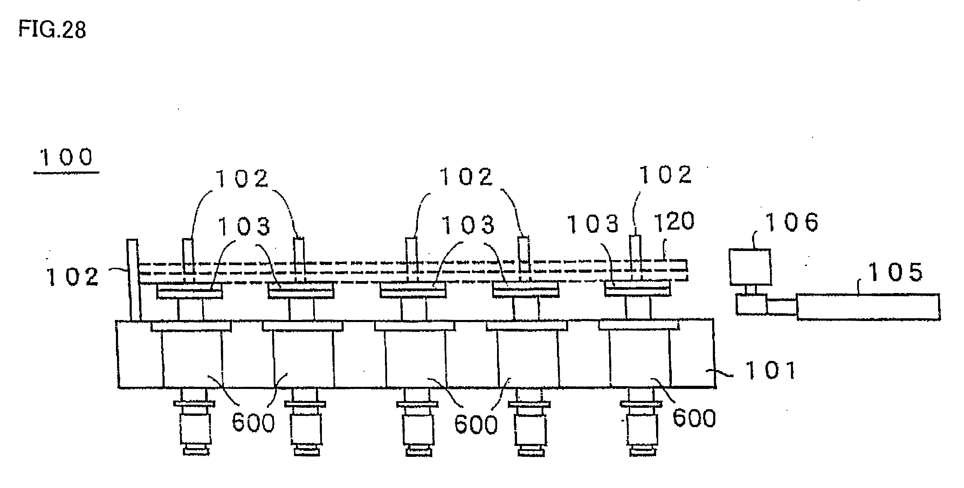

Next, a table for supporting the object to be adsorbed **100** will be described. The adsorption heads **600** according to the present invention are arranged in a grid on the table **100** with the adsorption heads **600** facing upward. Herein, as an example, a mother bonded substrate **120** is used as an object to be adsorbed. Figure **27** is a front view of an example of the table **100.** Figure **28** is a side view thereof.

In the table **100**, on a base plate **101** which is the base portion of the table **100**, apluralityof vacuum adsorption heads 600 with respective adsorption boards facing upward are arranged in a grid with a predetermined interval. An adsorption pad **103** having a disc shape is attached to the adsorption section of the vacuum adsorption head. An exhaust hole **104** which penetrates in the upwards and down direction is provided in the center of the adsorption pad **103.** However, there is no any concave or convex portion on the adsorption plane of the adsorption pad **103**. The adsorption pad **103** is made of a resin material, and for example, a peak material which is an engineering plastic is used as the resin material. The exhaust hole **104** is connected to a pump (not shown) and can cause to compressed air to gush out and create a vacuum as appropriate.

Furthermore, a plurality of reference pins **102** and a plurality of pushers **105** are respectively provided. A plurality of reference pins **102** are aligned in a row with a predetermined interval in a vertical direction along the base plate **101** and along each one end face in the X and Y directions of the base plate **101**. When the mother bonded substrate **120** mounted on the adsorption pads **103** are positioned, a plurality of pushers **105** causes the mother bonded substrate **120** to contact the references pins **102.** A roller **106** which contacts the end face of the mother bonded substrate **120** is attached to the tip of the pusher **105** via a bearing. The reference pin **102** can include the roller **106.**

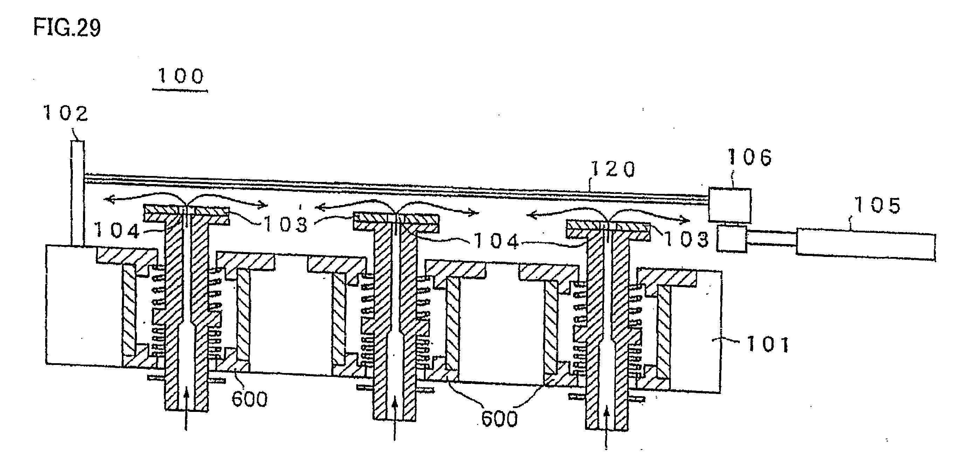

Figure **29** is explanatory diagram for explaining the positioning operation using the table **100**. When the mother bonded substrate **120** is mounted on the table **100** by the transportation robot, compressed air is caused to gush out of each exhaust hole **104** provided in the center of the adsorption pad **103**. The substrate **120** floats due to the compressed air thus caused to gush. The floating mother bonded substrate **120** is placed in contact with the reference pins **102** in both X and Y directions by the pushers **105** so as to be positioned. When the mother bonded substrate **120** is positioned, the table **100** stops causing the compressed air to gush out, lowers the mother bonded substrate 120 and again mounts the mother bonded substrate **120** on the adsorption pads **103.** When the mother bonded substrate **120** is mounted on the adsorption pads **103**, the mother bonded substrate **120** is vacuum-adsorbed by vacuum pumps (not shown) through the exhaust holes **104** and is held by the adsorption pads 103 by adsorption. Once the mother bonded substrate **120** is held by the adsorption pads **103** by adsorption, the rollers **106** are returned to the original state.

The compressed air caused to gush out of the adsorption pad **103** during the positioning operation flows along the surface of the mother bonded substrate **120** as indicated by arrows in Figure **29.** At this time, since the adsorption pad **103** is a flat pad which does not have any concave or convex portion on its surface, the flow of the compressed air is stabilized and the occurrence of air turbulence is prevented. As a result, the mother bonded substrate **120** stably floats without vibrating.

Figure **30** is a view schematically showing a variation in which an object to be adsorbed is floated in the table according to the present embodiment. Conventionally, when a substrate is positioned, a gap is formed between the mother bonded substrate **120** and the table by causing compressed air to gush out. As a result, the mother bonded substrate **120** is floated. However, since the mother bonded substrate **120** is floated using the gushing air, there are cases in which bendings or undulations are created on the mother bonded substrate **120**, the substrate on the lower surface side of the mother bonded substrate **120** partially contacts and rubs the table, and therefore, the surface of the substrate on the lower surface side is damaged. During the operation for positioning the mother bonded substrate **120,** when the mother bonded substrate **120** contacts the table, a slight offset occurs. Thus, there is a problem that positioning (alignment) with a high accuracy can not be performed.

In the vacuum adsorption head **600** according to the present invention, the adsorption shaft is slightly movable in its axial direction and in a direction diagonal to the axial direction and is elastically supported. Thus, in the table **100** using the, vacuum adsorption head **600**, within the tilting allowable range of the adsorption shaft **607** which is determined by the outer diameter of the adsorption shaft **607** and each inner diameter of the upper casing plate **603** and the lower casing plate **604**, due to the gushing of the compressed air (Bernflulli effect) as shown in Figure **30**, the adsorption pad **103** of the vacuum adsorption head **600** entirely moves in accordance with the bendings or undulations on the mother bonded substrate **120**. Therefore, the table moves so as to maintain a constant interval, the interval being between the mother bonded substrate **120** and the adsorption pad **103**. The compressed air caused to gush out of the exhaust hole **104** flows in layers to the outer circumferences of the adsorption pad **103**. Therefore, the interval between the mother bonded substrate **120** and the adsorption pad **103** can be maintained constant. As a result, any damage to the back surface of the mother bonded substrate **120** can be prevented, and the mother bonded substrate **120** can remain stably floating.

Since the positioning is performed in a stable state described above, the mother bonded substrate **120** can be stably positioned with high accuracy without any offset. When the mother bonded substrate **120** thus positioned is mounted on the adsorption pads **103**, the vacuum adsorption heads **600** move freely in accordance with the tilt of the surface of the mother bonded substrate **120** corresponding to the pressure difference which occurs due to the aforementioned Bernoulli' s function and do not exert undesired force on the mother bonded substrate **120** mounted since the vacuum adsorption heads **600** follow freely. Even when the vacuum is created by the vacuum pumps thereafter, the mother bonded substrate **120** can be firmly held by to the adsorption pads **103** by adsorption.

In the table **100** using the vacuum adsorption heads according to the present embodiment, when the mother bonded substrate **120** is mounted on the table **100** before being positioned, and when the mother bonded substrate **120** is again mounted on the table 100 after being positioned, before the mother bonded substrate **120** is adsorbed and after the mother bonded substrate **120** is released after the completion of adsorption, the state does not remain tilted as the adsorption pad in a conventional example does, and the position of the adsorption pad is returned to a state in which the adsorption plane faces substantially upward due to the force of the spring within the adsorption head. Therefore, when the next mother bonded substrate **120** is mounted, it does not cause any damage to the mother bonded substrate **120** and it does not fail to adsorb the mother bonded substrate **120**.

The table **100** only needs to include at least one vacuum adsorption head **600** depending on the size of a substrate. When a plurality of vacuum adsorption heads is provided, it is preferable to arrange them in a grid as shown in Figure **27**. A positioning device, in which a positioning means is provided, in addition to the table described above, is extremely effectively applied as a pre-alignment device before a substrate is transported in a step of manufacturing a flat panel display or a step of manufacturing a semiconductor element.

The adsorption head has been described in detail above.

### (Detailed description of substrate-adhered material removal device)

Hereinafter, a substrate-adhered material removal device **700** (air knife **700**) according to an embodiment of the present invention will be described with reference to the accompanying drawings.

The term "fluid" in the present invention includes gas (e.g., dried aix:, dried compressed air, nitrogen, helium and argon), water, treating liquid (e.g., washing liquid and etching liquid), processing liquid (e.g., grinding water, cutting water), mixed fluid of water and compressed air, mixed fluid of washing liquid and compressed air, and solvent.

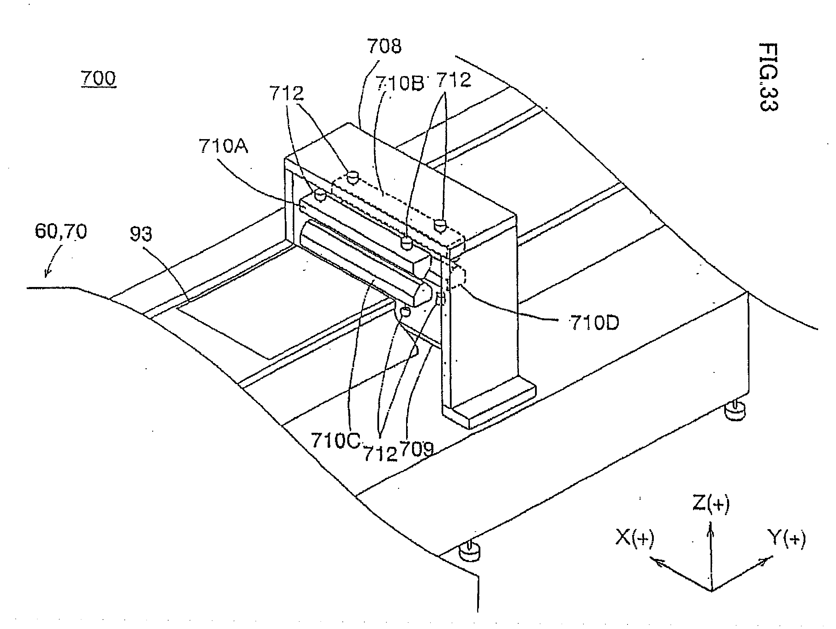

Figure **33** is a perspective view schematically showing an example of the substrate-adhered material removal device **700** according to the present invention. The substrate-adhered material removal device **700** dries the liquid adhered on top and bottom surfaces of a substrate as a step after a stem unit section **160** sprays steam onto both main surfaces of the substrate on which scribing lines are formed by the upper substrate cutting device 60 and the lower substrate cutting device **70** (see Figure 1).

The term "substrate" in the present invention includes a single plate. The single plate includes a metal substrate (e.g., a steel plate), a wood plate, a plastic substrate, a print substrate, or a brittle material substrate (e.g., a ceramic substrate, a semiconductor substrate and a glass substrate). However, the term "substrate" in the present invention is not limited to such a single plate. It also includes a liquid crystal display panel substrate, used for a flat panel display device, for which brittle material substrates are bonded to each other, and a mother substrate of the liquid crystal display panel substrate and the like.

The substrate-adhered material removal device **700** is mainly configured by a pair of air-knife units **710A** and **710B,** a pair of unit holding sections **712, 712** and an upper attachment base **708.** The pair of unit holding sections **712**, **712** supports the air-knives **710A** and **710B,** respectively. The upper attachment base **708** attaches the unit holding sections **712, 712.** Furthermore, the substrate-adhered material removal device **700** is configured by a pair of air-knife units **710C** and **710D,** a pair of unit holding sections **712**, **712** and a lower attachment base **709**. The pair of unit holding sections **712, 712** supports the air-knives **710C** and **710D**, respectively. The lower attachment base **709** attaches the unit holding sections **712**, **712**.

The pair of unit holding sections **712**, **712** supports an air knife body **715** such that a fluid lead-in path is formed between the air knife bodies and the main surfaces of the substrate in a substrate transportation path on which the air knife body **715** and the substrate are moved relative to each other, the fluid lead-in path having approximately a uniform shape in a direction perpendicular to a direction of relative movement.

The air knife units **710A** and **710B** are respectively arranged on the upper attachment base **708** through the pair of unit holding sections **712**, **712** such that each longitudinal direction of the air knife units **710A** and **710B** are along the x direction. Fundamentally, the air knife unit **710B** has a similar structure to the air knife unit **710A**.

The air knife units **710C** and **710D** are respectively arranged on the lower attachment base **709** through the pair of unit holding sections **712, 712** such that each longitudinal direction of the air knife units **710C** and **710D** are along the x direction, respectively. Fundamentally, the air knife unit **710C** and the air knife unit **710D** have a similar structure to the air knife unit **710A**.

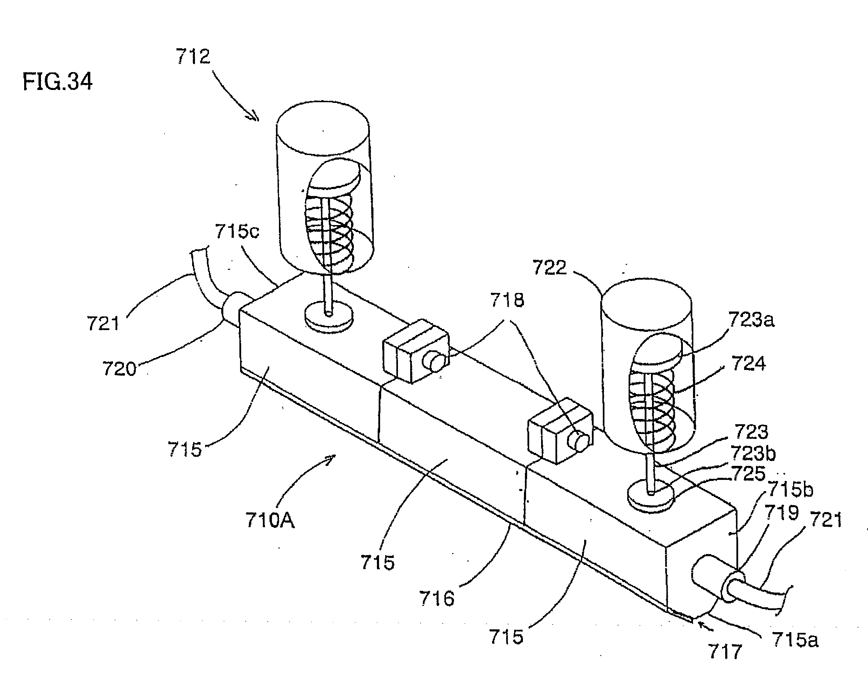

Figure **34** is a per spective view schematically showing the air knife unit **710A** and the unit holding section **712** fox supporting the air knife unit **710A.** The air knife unit **710A** is configured by at least one air knife body **715.** In Figure **34,** the air knife unit **710A** is structured by three air knife bodies **715,** for example, connected in a row by bolts **718**.

For example, a cover **716** is attached to a side **715a**, and a fluid gushing slit **717**, capable of discharging pressurized dried air, is formed on the side **715a**, such that the compressed air gushes out of the air knife unit **710A** along the tilted surface of **715a.** Couplings **719** and **720 are** respectively attached to both side surfaces **715b** and **715c** of the air knife unit **710A.** A tube **721** is connected to the couplings **719** and **720,** respectively. Furthermore, Compressed air is supplied to the inside of the air knife unit **710A** from the inside of the tube **721** through a compressed air supply source (not shown).

The pair of unit holding sections **712, 712** supporting the air knife unit **710A** includes, for example, a rod **723,** the rod **723** having a sliding section **723a** sliding inside a casing **722.** The pair of unit holding sections **712, 712** has a structure in which the rod **723** is inserted through compressive spring **724** which is inserted between the sliding section **723a** and the surface of the casing of the tip **723b** side. An attachment member **725** which is attached to the tip of the rod **723** is attached to the top surface of the air knife body **715** using a bolt and the like. The upper surface of the casing **722** opposite to the side of the tip **723b** of the rode **723** of the unit holding section **712** is attached to the upper attachment base **708** such that the air knife unit **710A** is along the x direction.

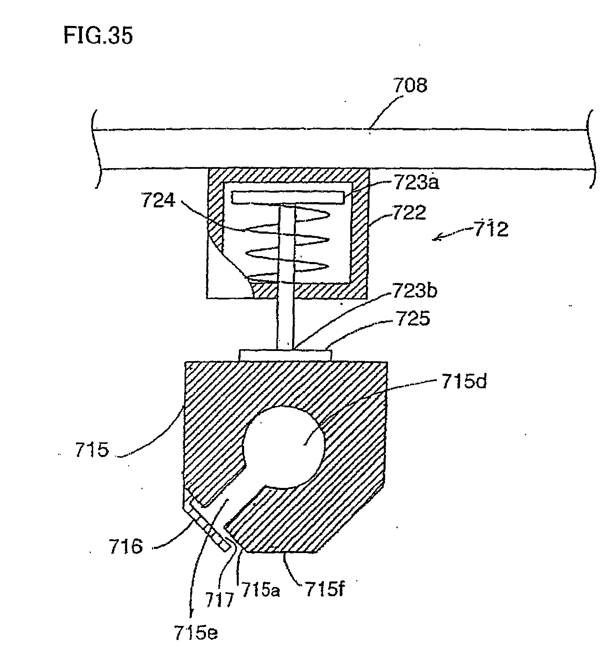

Figure **35** is a cross-sectional view for explaining the structure of air knives which constitutes the air knife units **710A** to **710D**. A penetration hole **715d** which penetrates in the longitudinal direction of the air knife body **715** is provided in the air knife body **715**. A long hole **715e** connecting the penetration hole **715d** is provided on the surface **715a** of the air knife body **715**. An L-shaped cover **716** is provided on the surface **715a** of the air knife body **715.** A fluid gushing slit **717** is formed between the cover **716** and the air knife body **715.** Compressed fluid, which is supplied to the penetration hole **715d** of the air knife from the couplings **719** and **720** (Figure **2**) provided on the air knife unit **710A**, flows through the long hole **715e**, flows along the surface 715a of the air knife body **715** and gushes out of the fluid gushing slit **717**. In Figure **34**, the gushing direction of fluid from the air knife unit **710A** is in the +Y direction. On the other hand, the gushing direction of fluid from the air knife unit **710B** is in the -Y direction. The gushing direction of fluid from the air knife unit **710C** is in the +Y direction. On the other hand, the gushing direction of fluid from the air knife unit **710D** is in the -Y direction.

The air knife unit **710A** includes a clearance automatic adjustment means for adjusting the clearance between the air knife body **715** and the main surface of the substrate **93**. The clearance automatic adjustment means includes a laminar flow forming face **715f** and the unit holding sections **712, 712** as shown in Figure **35.** The laminar flow forming face **715f** is formed on the lower portion (bottom surface) of the air knife body **715** and passes the liquid in laminar flow between the laminar flow forming face **715f** and the main surface of the substrate. The unit holding sections **712**, **712** support the air knife body **715** such that the air knife body **715** is movable in an oscillating manner.

The clearance automatic adjustment means, which is configured by the unit holding sections **712, 712,** will be described. The clearance automatic adjustment means adjusts the clearance between the air knife body **715** and the main surface of the substrate **90** by making use of the Venturi effect which occurs when dry gas passes through the fluid lead-in path.

Since the pressurized fluid dischar ged from the fluid gushing slit **717** passes through the fluid lead-in path in a compressed laminar flow, the fluid lead-in path being formed between the laminar flow forming face **715f** (bottom surface of the air knife body **715)** and the top surface of the substrate **93,** negative pressure is created on the top surface of the substrate **93** (Bernoulli effect). The compressive spring of the unit holding sections **712**, **712** for holding the air knife unit **710A** upward (holding force) and the negative pressure for attracting the laminar flow forming face **715f** of the air knife body **715** of the air knife unit **710A** (suction force) are balanced. As a result, uniform clearance in the longitudinal direction of the air knife unit **710A** is created between the air knife unit **710A** and the substrate **93.**

Referring to the aforementioned clearance, at least one of the flow amount is discharged from the flow gushing slit **717,** the pressurizing force which compresses the fluid and the flow speed when the fluid passes by the laminar flow forming face **715f** is changed, so that the interval of the clearance is adjusted. Thus, the bending and the like of the substrate is adsorbed and the clearance can be stably maintained (above, function of claim **27**).

Furthermore, when the laminar flow is passed through the fluid lead-in path formed between the laminar flow forming face **715f** and the main surface (top surface and/or bottom surface) of the substrate, negative pressure is created in the vicinity of the main surface of the substrate (Bernoulli effect), and the holding force of the unit holding section which is used to hold the air knife unit **710A** upward and the suction force (negative pressure) for attracting the air knife body **715** of the air knife unit **710A** are balanced. As a result, a fluid lead-in path having approximately an uniform shape can be easily formed between the air knife body **715** and the main surface of the substrate in a direction perpendicular to the moving direction of the substrate **90** (above, function of claim **28**).

The operation and the working function of the substrate-adhered material removal device **700** having such a structure will be described.

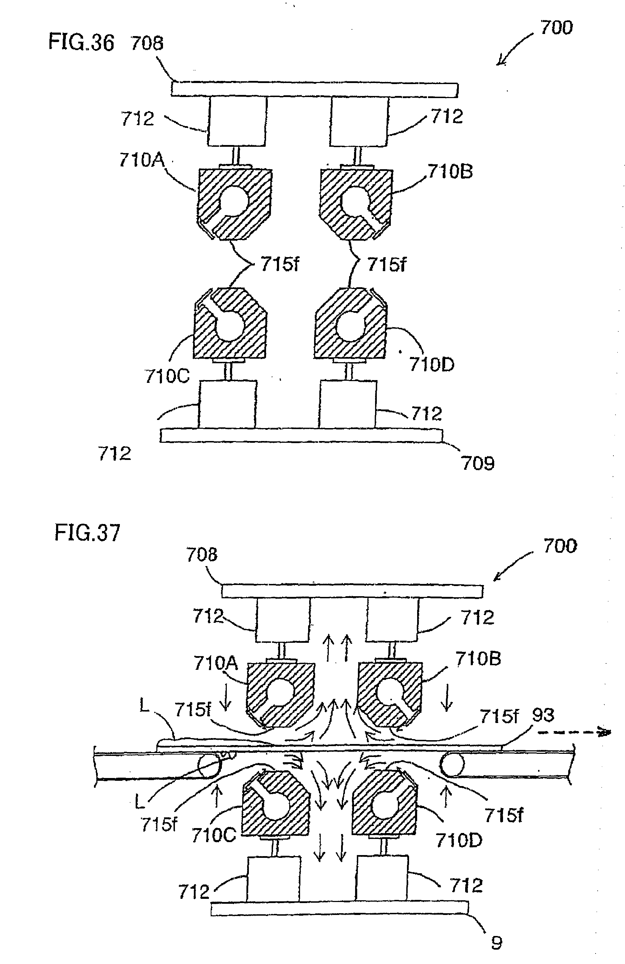

As shown in Figure **33,** the substrate **93** removed from the upper substrate cutting device **60** and the lower substrate cutting device **70** is mounted on an upstream conveyor and is transported to the substrate-adhered material removal device **700 .** Figure **36** is a diagram for explaining the state of air knife unit before the substrate **93** is transported to the substrate-adhered material device **700.** Before the substrate is transported, each air knife unit **710A** to **710D** is in a waiting state, with a distance of several millimeters from the transportation surface of the substrate **93** (bottom surface of the substrate **93).**

Figure **37** is a view for explaining the state of air knife unit when liquid adhered to top and bottom surfaces of the substrate **93** is being removed. When the substrate **93** is transported to the substrate-adhered material removal device **700** by the upstream conveyor in the direction indicated by the arrow in the figure, dried compressed air is supplied to the air knife units **710A** to **710D.** At the time when the substrate **93** passes by each laminar flow forming face **715f** of each air knife body **715** of the air knife units **710A** and **710C,** dried compressed air is flowed through the fluid lead-in path between the substrate **93** and each laminar flow forming face **715f** of the air knife units **710A** and **710C,** and therefore, negative pressure is created in the vicinity of both sides of the substrate **93** due to the Venturi effect. As a result, the air knife units **710A** and **710C** move close to or away from a position where the clearance of approximately 20 µm to 100 µm is maintained from top and bottom surfaces of the substrate **93.** Wall surfaces (air wall) are formed between the air knife unit **710A** and the air knife unit **710B** and between the air knife unit **710C** and the air knife unit **710D,** the wall surfaces being formed by air discharged from each fluid gushing slit **717** of the respective air knife units **710A** to **710D**. The dried compressed air discharged from each of air knife units **710A** and **710B** is blocked by the wall surface. The dried compressed air flows along the fluid lead-in path so as to move away from the top and bottom surfaces of the substrate **93**, the fluid lead-in path being formed between each of the air knife units **710A** and **710C** and the corresponding air wall surface. Furthermore, the dried compressed air discharged from the air knife units **710A** and **710C** passes through a fluid lead-in path between the substrate **93** and each laminar flow forming face **715f** of each air knife body **715** of the respective air knife units **710A** and **710C,** the cxoss-sectional area of the fluid lead-in path being extremely small of the dried compressed air is caused to gush and diffused from the fluid lead-in path, whose cross-sectional area is small, into a fluid lead-out path, whose cross-sectional area is large, with a great force. Thus, the compressed air causes liquid L adhered to both sides of the substrate **90** to become misty, mixes the liquid L adhered to the top and bottom surfaces of the substrate **93** and then, flows upward or downward so as to move away, along the fluid lead-out path, from top and bottom surfaces of the substrate **93.** Furthermore, when the dried compressed air caused to gush out of the narrow fluid lead-in path to the wide fluid lead-in path with a great force, then the flow speed of the compressed air containing the mist rises in one shot and the dried compressed air flows so as to move away from top and bottom surfaces of the substrate **90,** thereby preventing the mist being again adhered to the top and bottom surfaces of the substrate **93**.

Furthermore, when an air suction hole section (not shown) is provided in the vicinity of the substrate **93**, the compressed air containing the mist flows from the substrate **93** to the suction hole section. Thus, there is no possibility that the blown mist is again adhered to the substrate **93**.

Drying the substrate **93** using the substrate-adhered material removal device **700** according to the present invention is not like a conventional device which sweeps liquid to the rearwaxd of the substrate by using an air knife. In order to dry the surface of the substrate **93,** at least one pair of air knife units are arranged in the moving direction of the substrate. Dried compressed air discharged from one of the pair of air knife units which is provided facing the opposite direction with respect to the moving direction of the substrate **93** acts to push out the liquid **L** adhered to the substrate forward in the moving direction of the substrate **93** and to cause the liquid L to become misty. Furthermore, dried air discharged from the other of the pair of air knife units which is provided forward with respect to the moving direction of the substrate **93** causes the air (moisture) on the substrate to become misty, the air (moisture) being left behind by the dried compressed air discharged from the one of the pair of air knife units, and completely dries the substrate **93**. At the same time, the dried air discharged from the other of the pair of air knife units joins the dried compressed air discharged from the one of the pair knife units at the fluid lead-in path and acts to help the fluid to rise along the fluid lead-out path with great force so as to move away from the surface of the substrates **93**.

In the present embodiment, dried compressed fluid flows through the fluid lead-in path formed between the substrate **93** and each laminar flowing forming surface **715f** of the respective air knife units **710A** to **710D.** The fluid is compressed at the narrow fluid lead-in path and thereafter, the fluid is diffused at the wide fluid lead-out path. Therefore, the material adhered to top and bottom surfaces of the substrate **93** does not condense and is mixed into the fluid so as to reduce the size of the material (fineness), whereby the material adhered to the substrate 93 is easily removed from the top and bottom surfaces of the substrate **93**.

The wall surface formed by one of the air knife units **710A** to **710D** and/or the fluid is arranged on a position facing the one of air knife units **710A** to **710D** such that the cross-sectional area of the fluid lead-out path formed between the wall surface and one of the air knife units **710A** to **710D** is larger than the cross-sectional area of the fluid lead-in path. Thus, the pressurized fluid gushes out from the narrow fluid lead-in path to the wide fluid lead-out path with a great force. Therefore, the flow speed of the fluid increase in one shot. As a result, the effect, in which the capability of removing the adhered material from the top and bottom surfaces of the substrate **93** is further increased, is obtained (above, function of claim **26**).

At least one pair of air knife units are arranged facing each side where each fluid gushing slit **717** of the respective air knife units are formed. Thus, the fluid steadily flows so as to move away from bottom and top surfaces of the substrate **93** along the fluid lead-out path. As a result, the effect, in which the removal of the material adhered to the top and bottom surfaces of the substrate **93**, is facilitated.

Since at least one air knife is arranged on each of the top and bottom surfaces of the substrate 93, an effect that the material adhered to the top and bottom surfaces of the substrate **93** can be removed is obtained.

The unit holding sections **712** which support the air knife units **710A** to **710D** include clearance automatic adjustment means which adjusts the clearance between the air knife units **710A** to **710D** and the corresponding top and bottom surfaces of the substrate **93** using the Venturi effect which occurs when the fluid passes through the fluid lead-in path. Thus, an effect that the clearance can be adjusted in accordance with the material-to-be removed adhered to the top and bottom surfaces of the substrate **93** is obtained.

The clearance automatic adjustment means includes unit holding sections (elastic bodies) **712** and laminar flow forming faces **715f**, the supporting sections **712** supporting the air knife units **710A** to **710D** such that the air knife units **710A** to **710D** can oscillate between the supporting sections **712** and the respective top and bottom surfaces, and the laminar flow forming faces **715f** facing the respective top and bottom surfaces of the substrate **93**, forming portions of the fluid lead-in path on one side surface of the respective air knife main bodies **715** of the respective air knife units **710A** to **710D** and passing the fluid in laminar flow between the laminar flow forming faces **715f** and the respective top and bottom surfaces of the substrate **93.** Thus, the laminar flow passes through the fluid lead-in pass which is formed on the laminar flow forming faces **715f** and the respective top and bottom surfaces of the substrate **93.** As a result, negative pressure is created in the vicinity of the top and bottom surfaces of the substrate **93.** The compressive spring of the unit holding sections (elastic bodies) **712** for holding the air knife units **710A** to **710D** upward (holding force) and the negative pressure for attracting the air knife body (suction force) are balanced. Thus, the interval of the fluid lead-in path between the air knife units **710A** to **710D** and the respective top and bottom surfaces of the substrate **93** becomes narrower. The laminar flow which passes the fluid lead-in path is caused to gush out of the narrow path to a wide path with a great force, and therefore, the speed of fluid increases in one shot. As a result, the effect that the capability which removes the material adhered to the top and bottom surfaces of the substrate 90 is further increased is obtained.

As described above, the flow of dry gas is formed in the fluid lead-in path, the dry gas being uniformly compressed in a direction perpendicular to the moving direction of the substrate. The fluid material adhered to top and bottom surfaces of the substrate **90** is mixed with the dry gas in the fluid lead-in path and is guided to the fluid lead-out path whose sectional area is larger than that of the fluid lead-in path. The dry gas diffused in the fluid lead-out path forms the flow which accompanies the fluid adhered material in misty state and moves away from top and bottom surfaces of the substrate along the wall surfaces. Thus, the dry gas is compressed in the fluid lead-in path, and thereafter, the dry gas is diffused in the fluid lead-out path. Therefore, the material adhered to the top and bottom surfaces of the substrate **90** does not condense and is mixed into the fluid so as to reduce the size of the material (misty, fineness), whereby the material adhered to the substrate is removed. As a result, both sides of the substrate **90** can be completely dried (above, function of claim **25**).

Since a pair of air knife bodies **715** is arranged facing each side where the fluid gushing slit **717** is formed, the dry gas steadily flows along the fluid lead-out path so as to move away from the main surface of the substrate **90,** thereby facilitating the drying of the substrate (above, function of claims **29** and **30**).

Hereinafter, other embodiments of the clearance adjustment means will be described.

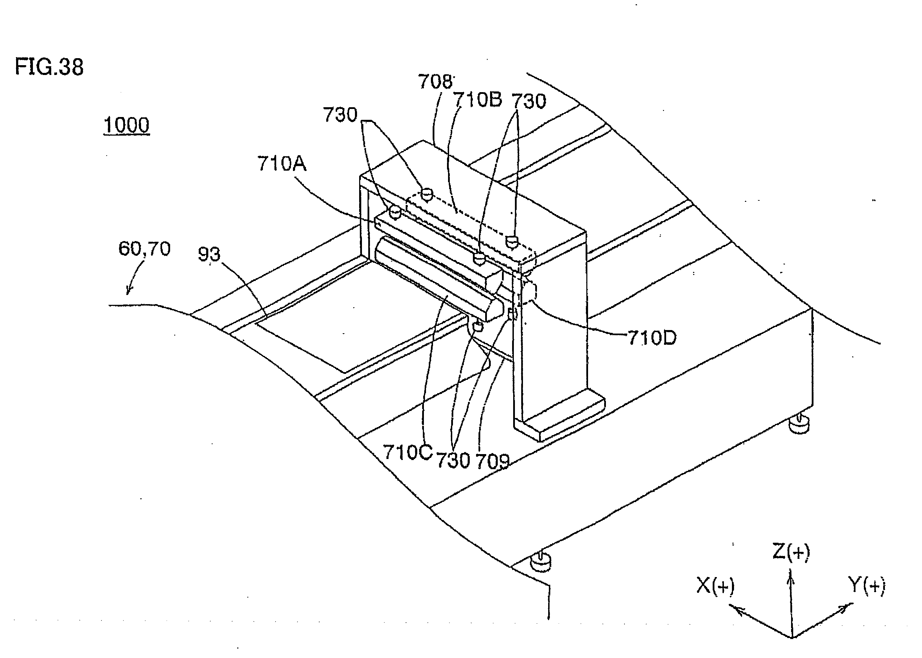

Figure **38** is a perspective view schematically showing a substrate-adhered material removal device 1000 according to an embodiment of the present invention. The substrate-adhered material removal device 1000 has the same structure as the substrate-adhered material removal device **700** except that unit holding sections **730** are used in the substrate-adhered material removal device **1000,** instead of the unit holding sections **712**. Thus, the explanation of each member in the substrate-adhered material removal device **1000** will be omitted by denoting the same reference numerals as in the substrate-adhered material removal device **700**.

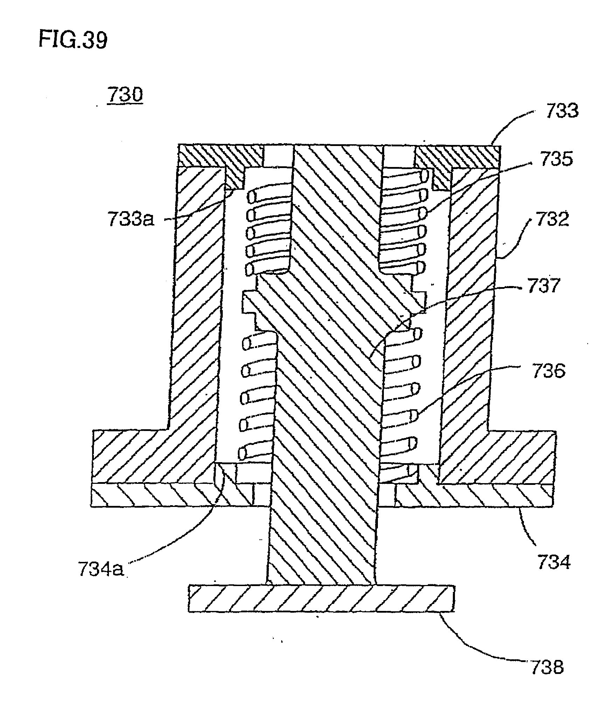

Figure **39** is a cross-sectional view schematically showing the structure of the unit holding section **730.** The unit holding section **730** will be described with reference to Figure **39**. The casing **732** is a cylindrical member with a flange **732a** integrally formed at the lower portion of the casing **732** and has a clearance in which the upper spring **735** and the lower spring **736** can freely deform inside the casing **732**. The flange section **732a** has a thickness such that a screw hole for fixing can be provided. The upper casing plate **733** has a first opening in the middle thereof. When the upper casing plate **733** holds the suction shaft **737** via the upper spring **735** and the lower spring **736** such that the shaft **737** can freely move in the upwards and downwards directions, the upper casing plate **733** fixes the upper portion of the upper spring **735.** The upper casing plate **733** is fixed to the upper end surface of the casing **732** by a screw. A protrusion **733a** in a ring shape is provided inside the upper casing plate **733.** The lower casing plate **734** is configured by a circular plate. The lower casing plate **734** has a second opening in the center thereof. A protrusion **734a** in a ring shape is provided inside the lower casing plate **734.** The protrusion **733a** controls the upper end position of the upper spring **735** so that the upper end position of the upper spring **735** is in the same axis as the upper casing spring plate **733**. The protrusion **734a** controls the lower end position of the lower spring **736** so that the lower end position of the lower spring **736** is in the same axis as the lower casing spring plate **734**. The shaft **737** contacts the inside of the first opening and the second opening, the inside being provided in the center of the upper casing plate **733** and in the center of the lower casing plate **734,** respectively, so that the tilt of the shaft **737** is controlled.

The flange in the center of the shaft **737** acts to press the upper spring **735** and the lower spring **736,** respectively.

An attachment metal fitting **738** is attached to the tip of the lower spring **736** side of the shaft **737** and is joined with one of the air knife units **710A** to **710D** using a bolt or the like. The upper casing plate **733** is joined with the upper attachment base **708** or the lower attachment base **709** using a bolt or the like.

By employing the unit holding section **730,** as shown in Figure **39,** in the substrate-adhered material removal device **1000** according to the present invention, in the case where the substrate-adhered material removal device **1000** is used for processing the substrate **93,** even when a tilt in the upwards and downwards directions (Z direction) along approximately the X direction occurs on the substrate **93** due to a condition of mounting an upstream conveyor or a down stream conveyor , the interval between each of the laminar flow forming face **715f** of the air knife units **710A** to **710D** and the respective corresponding top or bottom surfaces of the substrate can be maintained at about 20µm and 100µm.

Hereinafter, other embodiments of the air knife unit will be described.

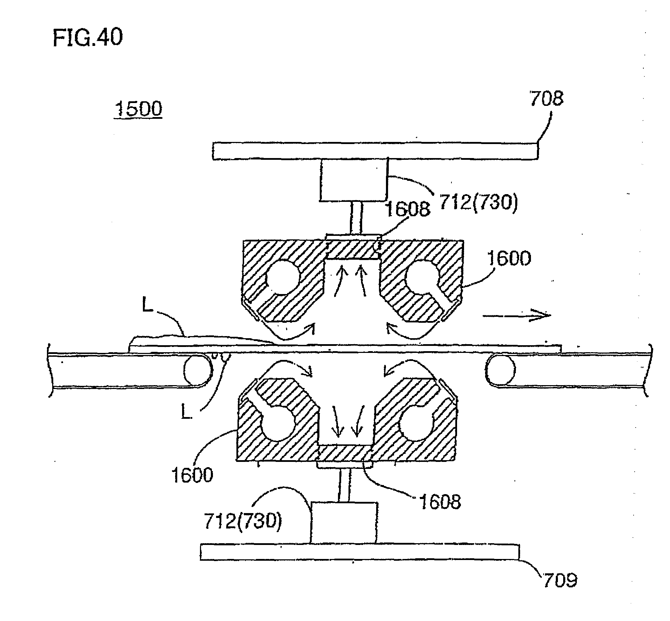

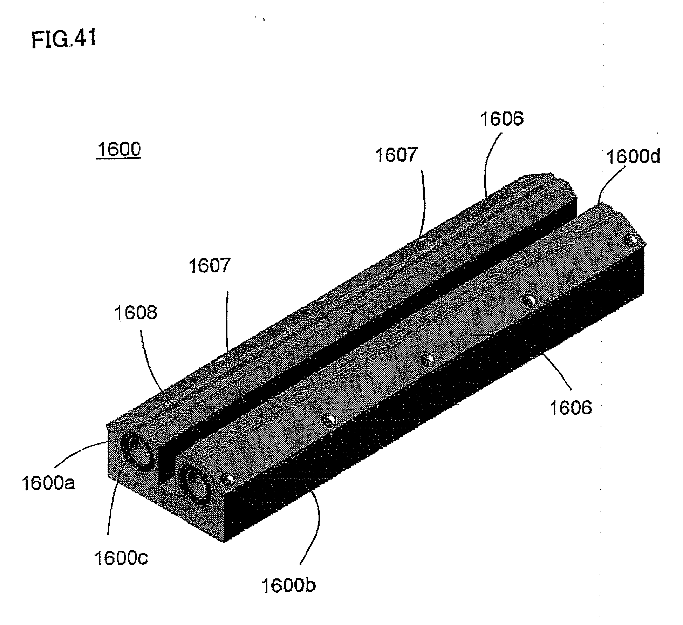

Figure **40** is a cross-sectional view schematically showing a substrate-adhered material removal device **1500** according to an embodiment of the present invention. Figure **41** is an external perspective view showing a connection air knife unit **1600** which is provided in the substrate-adhered material removal device **1500** according to an embodiment of the present invention. The connection air knife unit **1600** is held by the aforementioned pair of unit holding sections **712** and **712** or a pair of unit holding sections **730** and **730.** The connection air knife unit **1600** is coupled to the upper attachment base **708** or the lower attachment base **709** using a bolt and the like such so as to be along the X direction which is perpendicular to the moving direction (+Y direction) of the substrate **93**.

As shown in Figure **41**, the connection air knife unit **1600** includes a plurality of hole sections **1608** (broken line portion of Figure **40)** for fluid opening and integrally formed such that the air knife sections **1600a** and **1660b** face the corresponding fluid gushing slits **1607.** The air knife sections **1600a** and **1600b** are similar to the air knife body **715** (see Figure **35).** Referring to Figures **35** and **41,** penetration holes **715d** are provided penetrating in a longitudinal direction of the air knife sections **1600a** and **1600b**. Long holes **715e**, which are connected with the penetration holes **715d,** are provided on surfaces **1600c** and **1600d** of the corresponding air knife sections **1600a** and **1600b.** L-shaped covers **1606** are provided on the surfaces **1600c** and **1600d** of the corresponding air knife sections **1600a** and **1600b** of the connection air knife unit **1600.** The compressed fluid, which is supplied to the penetration holes **715d** of the air knife sections **1600a** and **1600b** from connectors (not shown) provided on the connection air knife unit **1600**, passes through the long holes **715e** and flows along each surface **1600c** and **1600d** of the corresponding air knife sections **1600a** and **1600b** of the connection air knife unit **1600,** and gush out of the corresponding fluid gushing slits **1607**.

As described above, in the substrate-adhered material removal device **1500** using the connection air knife unit **1600** shown in Figure **40** according to the present invention, since the number of the members which constitutes the substrate processing section is reduced, the time for assembling the substrate-adhered material removal device **1500** can be reduced.

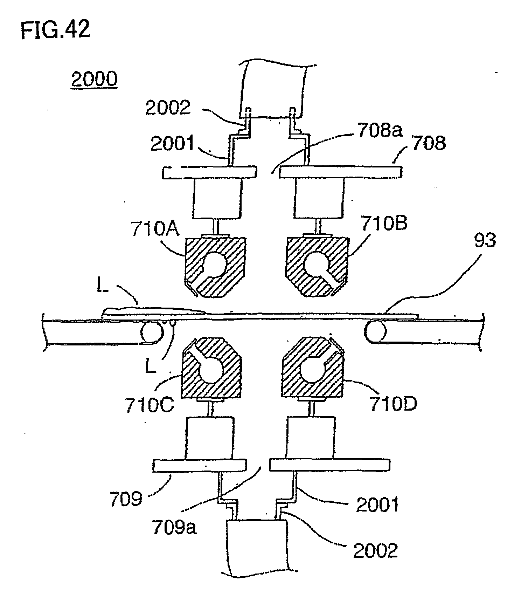

Hereinafter, an example is illustrated, in which a supplemental means for supplementing the fluid of the fluid lead-out path, which is lead-out from the main surfaces of the substrate, is attached. Figure **42** is aview schematically showing the structure of a substrate- adheredmaterial removal device **2000** according to an embodiment of the present invention. The substrate-adhered material removal device **2000** includes exhaust openings **708a** and **709a** with long holes. The exhaust openings **708a** and **709a** are respectively provided on the upper attachment base **708** and the lower attachment base **709** in the substrate-adhered material removal device **700,** the substrate-adhered material removal device **1000** and the substrate-adhered material removal device **1500** having been described with reference to Figures **33, 38** and **40.** Suction covers **2001** are provided to cover the exhaust openings **708a** and **708b.** Flanges **2002** are provided for connecting tubes to the suction covers **2001**, whereby the connecting tubes are connected to exhaust ducts (suction means) which are suctioned by suction motors (not shown).

In the substrate-adhered material removal device **2000**, the compressed air containing the mist can be effectively discharged out of the substrate-adheredmaterial removal device **2000**, the compressed air flowing upstream or downstream from the top and bottom surfaces of the substrate with a great force along the fluid lead-out path formed between the air knife units (air knife sections).

When the exhaust ducts suctioned by the suction motors or the like are connected to the fluid lead-in path, the fluid in the fluid lead-out path that is led out from the top and bottom surfaces of the substrate **93** is forceably supplemented. Thereby, the adhered material removed from the top and bottom surfaces of the substrate **93** is prevented from adhering again.

The shape of the air knife is hexagonal for the sake of convenience such that the compressed fluid is more likely to rise or fall along the shape of the air knife. However, the shape of the air knife unit is not limited to a hexagon, but can be any shape as long as the compressed air is likely to rise and the air knife unit has a face **715f** which is parallel to the substrate.

When a plurality of air knife units is arranged in the transportation path of the substrate **93**, with the side opposite to the side where the fluid gushing slit **717** of the air knife body **715** is formed being used as a wall face, the removal of the material adhered to the surfaces of the substrate is performed several times. Thus, the material adhered to the surfaces of the material can be almost completely removed.

Furthermore, the liquid that is discharged from the liquid gushing slit of at least one air knife unit of the plurality of the air knife units is cleaning liquid, and the liquid that is discharged from the liquid gushing slit of at least one air knife unit of the plurality of the air knife units is compressed gas. Thus, after the surfaces of the substrate are cleaned with the cleaning liquid for the substrate, the surfaces of the cleaned substrate can be dried.

The substrate processing apparatus and the substrate processing method can be applied to a panel substrate, such as a PDP (plasma display used for an FPD (flat panel display)), a liquid crystal display panel, a reflective projector panel, a transmissive projector panel, an organic EL device panel, an FED (field emission display) and the like, as a bonded mother substrate for which brittle material substrates are bonded to each other and a mother substrate of the panel substrate.

The aforementioned embodiment shows a structure in which air knife units are arranged above and/or below the main surface of the substrate with respect to the substrate whose main surface extends in a horizontal direction. However, the structure is not limited to such an embodiment. For example, the structure can be one in which air knife units are arranged on the one side and/or the other side (i.e., left side and/or right side) of the main surface of the substrate with respect to the substrate whose main surface extends in a perpendicular direction.

According to the substrate-adhered material removal device of the present invention, fluid flows through a fluid lead-in path formed between the substrate and each laminar flowing forming surface of the respective air knife units. The fluid is compressed at the narrow fluid lead-in path and thereafter , the fluid is diffused at the wide fluid lead-in path. Therefore, the material adhered to main surfaces of the substrate does not condense and is mixed into the fluid so as to reduce the size of the material (fineness), whereby the material adhered to the substrate is easily removed from the main surfaces of the substrate.

The substrate-adhered material removal device has been described in detail above.

The substrate cutting system **1**, according to Embodiment **1** of the present invention has been described with reference to Figure **1** to Figure **42**.

### <Embodiment 2>

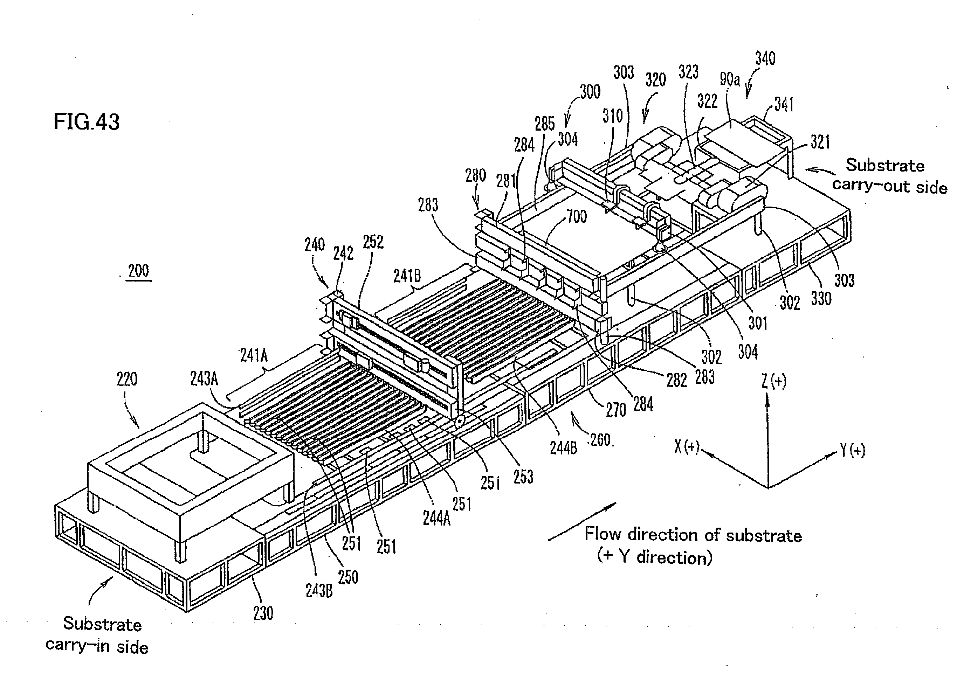

A substrate cutting system **200** according to Embodiment **2** of the present invention will be described with reference to Figure **43** to Figure **55.**

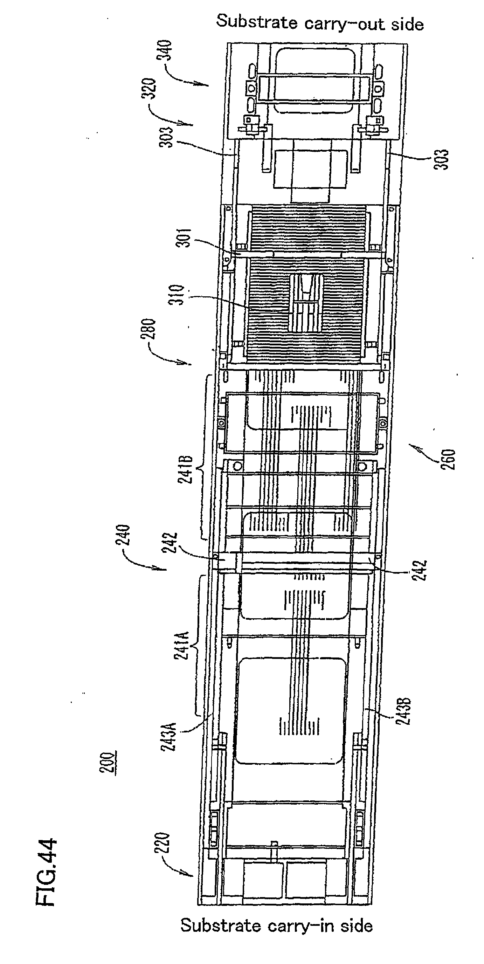

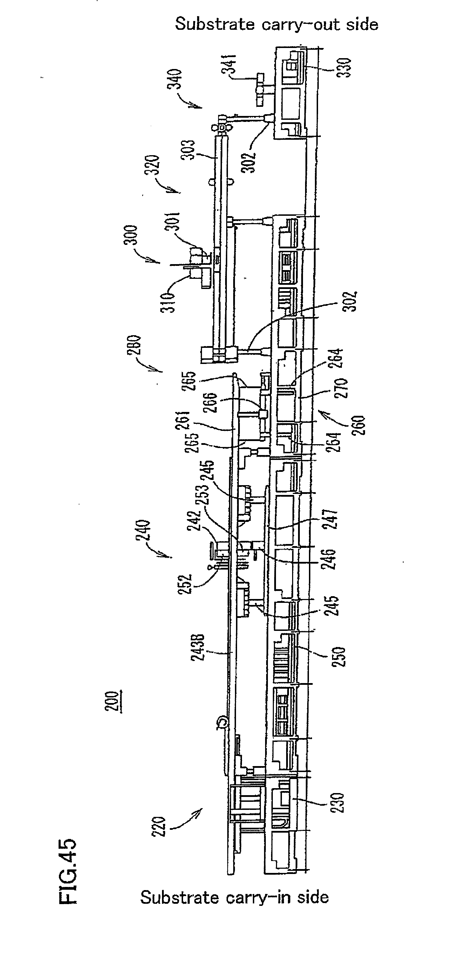

Figure **43** is a perspective view schematically showing the entire substrate cutting system **200** according to Embodiment **2** of the present invention. Figure **44** is a plan view of the substrate cutting system **200**. Figure **45** is a side view of the substrate cutting system **200**. In the present invention, the term "substrate" includes a single plate, such as a mother substrate cut into a plurality of substrates, a metal substrate (e.g., a steel plate), a wood plate, a plastic plate and a brittle material substrate (e.g., a ceramic substrate, a semiconductor substrate and a glass substrate). However , the substrate according to the present invention is not limited to such a single plate. Furthermore, the substrate according to the present invention includes a bonded substrate for which a pair of substrates is bonded to each other and a stacked substrate for which a pair of substrates is stacked on each other.

In the substrate cutting system in the present invention, for example, when a panel substrate (bonded substrate for display panel) for a liquid crystal device is manufactured from a pair of glass substrates bonded to each other, a plurality of panel substrates (bonded substrate for display panel) are cut, by the substrate cutting system according to the present invention, from the bonded mother substrate **90** for which a pair of mother glass substrates is bonded to each other.

The substrate cutting system **200** according to Embodiment **2** includes a positioning section **220**, a scribing unit section **240,** a lift conveyor section **260,** a steam break unit section **280,** a substrate transportation unit section **300**, a panel inversion unit section **320** and a panel terminal separation section **340**.

In a substrate cutting system **200** according to Embodiment **2** of the present invention, description will be made by referring to the side where a positioning unit section **220** is arranged as a "substrate carry-in side" and to the side where a panel terminal separation section **340** is arranged as a "substrate carry-out side", respectively. In the substrate cutting system **200** according to the present invention, the direction in which a substrate is transported (flow direction of the substrate) is +Y direction from the substrate carry-in side to the substrate carry-out side. The direction in which the substrate is transported is a bbdirection perpendicular to a scribing device guide body **242** of the scribing unit section **240** in a horizontal state. The scribing device body guide **242** is provided along the X direction.

A case in which a bonded mother substrate **90** used as a substrate is cut will be described as an example. The bonded mother substrate **90** is carried in the positioning section **220** by a transportation device (not shown), which is used for the previous step. Thereafter, the positioning unit section **220** mounts the bonded mother substrate **90** on a first substrate supporting section **241A** of the scribing unit section **240** and positions the bonded mother substrate **90** on the first substrate supporting section **241A.** The substrate cutting system **200** includes the positioning unit section **220**, so that the substrate cutting system **200** can accurately form scribing lines along lines to be scribed on the top and bottom surfaces of the substrate (above, function of claim **39**).

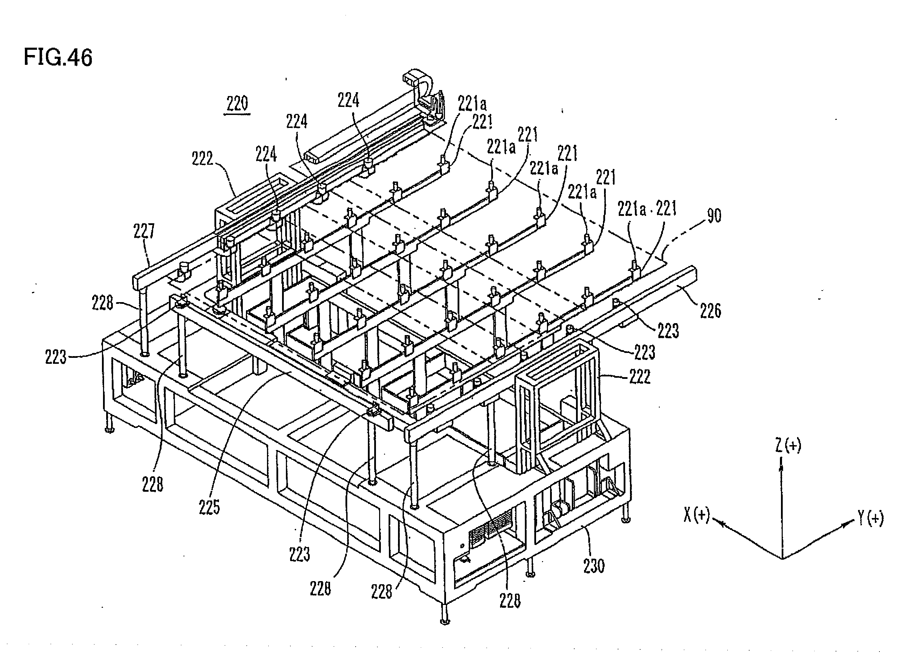

As shown in Figure **46**, the positioning unit section 22**0** includes a guide bar **226** and a guide bar **227** above a mounting base **230.** The guide bar **226** extends along one side edge of the mounting base **230** along a Y direction via a pillar **228**. The guide bar **227** extends along one side edge of the mounting base **230** in parallel to the guide bar **226**. The positioning unit section **220** includes a guide bar **225** above the mounting base **230** between the guide bar **226** and the guide bar **227** on the substrate carry-in side of the mounting base **230.** The guide bar **225** extends along an X direction via the pillar **228.**

A plurality of reference rollers **223** are provided on the guide bar **225** and the guide bar **226,** respectively, the plurality of reference rollers **223** are used as a reference when the bonded mother substrate **90** is positioned. The guide bar **227** includes a plurality of pushers **224.** The plurality of pushers **224** push the bonded mother substrate **90** toward the reference rollers **223** provided on the guide bar **226** when the bonded mother substrate **90** is positioned.

A plurality of suction pad bases **221** is provided, above the mounting base **230**, between the guide bar **226** and the guide bar **227** with a predetermined interval. The suction pad bases **221** are held by an up-and-down moving device **222** provided on the upper surface of the guide bar **226** side of the mounting base **230** and an up-and-down moving device **222** provided on the upper surface of the guide bar **227** side of the mounting base **230**.

The suction pad bases **221** each includes a plurality of suction pads **221a.** The plurality of suction pads **221a** receives the bonded mother substrate **90** from the transportation device (not shown) used for the previous step. The bonded mother substrate **90** is suctioned and adsorbed by a suction device (not shown).

In the plurality of suction pad bases **221** of the positioning unit section **220**, for example, the plurality of suction pads **221a** can be attached to a plurality of vacuum adsorption heads **600**, the vacuum adsorption heads **600** being described with reference to Figures **20** to **32.** In this case, the plurality of vacuum adsorption heads **600** firmly can receive the substrate **90** from the previous step and stably lift the substrate **90** so as to position the substrate **90** (above, function of claim **40**).

For example, the vacuum adsorption head each includes an adsorption pad for holding the substrate **90** by suction and lifting the substrate **90** by causing compressed air to gush. The vacuum adsorption heads position the substrate **90** between each of the plurality of respective adsorption pads and the substrate **90** while a laminar flow is formed. In this case, the compressed air is caused to gush out from the respective adsorption pads of the vacuum adsorption heads, and the adsorption pads follow undulations or bendings of the substrate due to the Venturi effect. The compressed air moves so as to maintain the interval constant, the interval being between the substrate and the adsorption pads. Thus, the flow of air between the substrate and the adsorption pads becomes a laminar flow, and the interval between the substrate and the adsorption pads are maintained constant. As a result, the substrate is not damaged and can be accurately positioned (above, function of claim **44**).

The first substrate supporting section **241A** of the scribing unit section **240** moves to the substrate carry-in side and is in a state of waiting at the position of the positioning unit section **220**. The plurality of suction pad bases **221** holding the bonded mother substrate 90 lowers, by the up-and-down'moving device **222,** in the first substrate supporting section **241A** in the state of waiting, and the bonded mother substrate **90** is mounted on the first substrate supporting section **241A**.

The scribing unit section **240** has a similar structure to the substrate cutting system **1** in Embodiment **1** except that the substrate carry-out device **80** and the steam unit section **160** are removed from the substrate cutting system in Embodiment **1**.

A scribing device guide body **242** of the scribing unit section **240** is coupled to a first substrate supporting section **241A** and a second substrate supporting section **241B**. Along with the movement of the scribing device guide body **242** in a Y direction, the first substrate supporting section **241A** and the second substrate supporting section **241B** move in the same direction as the scribing device guide body **242,** simultaneously.

The first substrate supporting section **241A** and the second substrate supporting section **241B** includes a plurality of substrate supporting units **244A** and a plurality of second substrate supporting units **244B,** respectively. Each of the plurality of substrate supporting units **244A** and the plurality of second substrate supporting units **244B** are movable in the same direction as the movement of the scribing device guide body **242.** The plurality of substrate supporting units **244A** and the plurality of second substrate supporting units **244B** are arranged in line in an X direction along a direction (Y direction) parallel to frames **243A** and **243B,** respectively.

One of the plurality of first substrate supporting units **244A** provided on the first substrate supporting section **241A** is similar to the first substrate supporting unit **21A** in Embodiment **1** shown in Figure **6.** A timing belt provided on the first substrate supporting unit **244A** is caused to circle when a clutch provided on the first substrate supporting section **241A** is connected to a driving axis.

The first substrate supporting unit **244A** is provided in plurality with a predetermined interval. The first substrate supporting unit **244A** moves in the Y direction along the frames **243A** and **243B** together with the scribing device guide body **242**.

The mechanism for causing the timing belt of the first substrate supporting unit **244A,** having such a structure, to circle is similar to that in Embodiment **1** shown in Figures **7** to **9**. The frames **11A** and **11B** in Figure **7** are the frames **243A** and **243B** in Embodiment 2, respectively.

Clamp units are provided on the frames **243A** and **243B** sides, respectively, the clamp units including clutches for causing the timing belts to circle by rotating timing pulleys for driving of the plurality of the first substrate supporting units **244A** provided on the first substrate supporting section **241A**, as shown in Figure **7**.

As shown in Figure **45**, a pillar **245** on the frame **243A** side and a pillar **245** on the frame **243B** side for supporting the first substrate supporting unit **244A** are held by a guide base **247**, and movers (not shown) for a linear motor are attached to guide bases **247** for holding pillars **246** which supports both ends of the scribing device guide body **242**. Thus, the scribing device guide body **242** moves to the substrate carry-in side and at same time, the plurality of the first substrate supporting units **244A** of the first substrate supporting section **241A** moves to the substrate carry-in side due to the drive of the linear motor.

When the scribing device guide body **242** moves, a pinion of a clutch unit on the frame **243A** side and a pinion on the frame **243B** side are caused to rotate along the frame **243A** and the frame **243B**, the pinions being engaged with the respective racks attached in a similar manner as shown in Figure **8**.

In order to cause the timing belt to circle by rotating the timing pulley for driving of the first substrate supporting unit **244A**, both clutches of the frame **243A** and the frame **243B** can be connected to a driving axis, to which the rotation of pinions are transmitted. Alternatively, either one of the clutch of the frame **243A** or the clutch of the frame **243B** can be connected to the driving axis, to which the rotation of pinions is transmitted.

The second supporting section **241B** includes a plurality of second substrate supporting units **244B** which are capable of moving in the same direction as the moving direction of the scribing device guide body **242.** The second substrate supporting unit **244B** has a similar structure to the first substrate supporting unit **244A.** The second substrate supporting unit **244B** is held by the pillar **245** on the frame **243A** side and the pillar **245** on the frame **243B** side, each of the pillars **245** being held by the guide base **247**, such that the second substrate supporting unit **244B** is symmetrical to the first substrate supporting unit with respect to the scribing device guide body **242** and the mounting direction of the second substrate supporting unit **244B** is opposite to that of the first substrate supporting unit **244A** in the Y direction.

Movers (not shown) for a linear motor are attached to guide bases **247** for holding the pillars **246**, which support both ends of the scribing device guide body **242.** Thus, the scribing device guide body **242** moves to the substrate carry-in side and at same time, the plurality of the second substrate supporting units **244B** of the second substrate supporting section **241B** moves to the substrate carry-in side due to the drive of the linear motor.

Clutch units similar to those in the first substrate supporting section **241A** are provided in the frame **243A** side and the frame **243B** side of the second substrate supporting section **241B**. When the scribing device guide body **242** moves, a pinion of a clutch unit on the frame **243A** side and a pinion on the frame **243B** side are caused to rotate along the frame **243A** and the frame **243B,** the pinions being engaged with the respective racks attached.

In order to cause the timing belt to circle by rotating the timing pulley for driving of the second substrate supporting unit **244B,** both clutches of the frame **243A** side and the frame **243B** side can be connected to a driving axis, to which the rotation of pinions are transmitted. Alternatively, either one of the clutch of the frame **243A** or the clutch of the frame **243B** can be connected to the driving axis, to which the rotation of pinions is transmitted.

Furthermore, a clamp device **251** is provided above the mounting base **250**, the clamp device clamping the bonded mother substrate **90** supported by the first substrate supporting section **241A.** For example, the clamp device **251**, as shown in Figure **43**, includes a plurality of clamp devices **251**, which is attached to the frame **243B** with a predetermined interval therewith, for clamping the side edge of the bonded mother substrate **90** along the frame **243B** and a plurality of clamp devices **251,** which is arranged with a predetermined interval along a direction perpendicular to the frame **243B**, for clamping the side edge of the bonded mother substrate **90** on the substrate carry-in side.

The operation of each clamp device **251** is similar to that described in Embodiment **1** in Figures **12** and **13.** Thus, description of the operation of the clamp device **251** will be omitted herein.

The arrangement of the clamp devices **251** is not limited to a case when the clamp devices **251** for holding the bonded mother substrate **90** are provided on the frame **243B** and on the substrate carry-in side in a direction perpendicular to the frame **243B.** However, even when the clamp devices **251** are provided only on the frame **243B**, the bonded mother substrate **90** is held without sustaining any damage.

The clamp device **251** described above only shows one example used in a substrate cutting system according to the present invention. Thus, the clamp devices **251** are not limited to these. In other words, a clamp device can be arbitrary, as long as the clamp device has a structure for gripping or holding the side edge of the bonded mother substrate **90**. For example, when the size of the substrate is small of the substrate is held by clamping one part of the side edge of the substrate, and the substrate can be cut without causing any defect to the substrate.

An upper substrate cutting device **60** in Embodiment 1 shown in Figure **3** is attached to the upper guide rail **252** of the scribing device guide body **242.** A lower substrate cutting device **70** is attached to the lower guide rail **253,** the lower substrate cutting device **70** having a similar structure to the upper substrate cutting device **70** in Embodiment **1** shown in Figure **4** and being in a state of inversion to the upper substrate cutting device **60** in a vertical direction. The upper substrate cutting device **60** and the lower substrate cutting device **70** slide along the upper guide rail **252** and the lower guide rail **253,** respectively, due to a linear motor.

For example, in the upper substrate cutting device **60** and the lower substrate cutting device **70,** cutter wheels **62a** for scribing a bonded mother substrate **90** are rotatably attached to tip holders **62b,** respectively, the cutter wheels being similar to those shown in Embodiment 1 in Figures **3** and **4.** Furthermore, the tip holders **62b** are rotatably attached to respective cutter heads **62c** with a direction vertical to top and bottom surfaces of the bonded mother substrate 90 held by the clamp devices **251** at its axis. The cutter heads **62c** are movable along a direction vertical to top and bottom surfaces of the bonded mother substrate **90** by a driving means (not shown). A load is applied to the cutter wheels **62a**, as appropriate, by an energizing means (not shown).

As the cutter wheel **62a** held by the tip holder **62b,** a cutter wheel which has a blade edge with the center in the width direction protruded in an obtuse V shape is used as disclosed in Japanese Laid-Open Publication No. 9-188534. The protrusions with a predetermined height are formed on the blade edge with a predetermined pitch in the circumferential direction.

The lower substrate cutting device **70** provided on the lower side guide rail **253** has a structure similar to the upper substrate cutting device **60**, but is provided in an inverted state thereto. The cutter wheel **62a** (see Figure **4**) of the lower substrate cutting device **70** is arranged so as to face the cutter wheel **62a** of the upper substrate cutting device **60.**

The cutter wheel **62a** of the upper substrate cutting device **60** is pressed so as to make contact onto the top surface of the bonded mother substrate **90** by the aforementioned energizing means and the moving means of the cutter head **62c.** The cutter wheel **62a** of the lower substrate cutting device **70** is pressed so as to make contact onto the bottom surface of the bonded mother substrate **90** by the aforementioned energizing means and the moving means of the cutter head **62c**. When the upper substrate cutting device **60** and the lower substrate cutting device **70** are simultaneously moved in the same direction, the bonded mother substrate **90** is cut.

As described above, the first substrate supporting section **241A** includes the plurality of substrate supporting units **244A**. The plurality of substrate supporting units **244A** moves in parallel along the moving direction of the scribing device guide body **242**. The plurality of first substrate supporting units **244A** moves together with the scribing device guide body **242** along with the movement of the scribing device guide body **242.** Thus, with a structure such that a space is provided between the scribing device guide body **242** and the first substrate supporting unit **244A**, and the space is moved in the Y direction, and the substrate **90** is fixed by the clamping device **251,** when the space is moved or scribing is performed on both mains surfaces of the substrate **90**, the first substrate supporting unit **244A** does not rub the substrate **90** or exert any force on the substrate. As a result, when a vertical crack is created within the substrate **90** by the cutter wheel **62a**, there is no possibility that an undesired crack will result from the cutter wheel **62a** (above, function of claim **5**).

Furthermore, the first substrate supporting units **244A** include the timing belts for supporting the substrate **90.** Thus, the first substrate supporting unit **244A** does not rub the substrate **90** or does not exert any force on the substrate **90** when the timing belts **21e** move in the Y direction As a result, when a vertical crack is created within the substrate **90** by the cutter wheel **62a,** there is no possibility that an undesired crack will result from the cutter wheel **62a** (above, function of claim **6**).

The first substrate supporting unit **244A** may include a plurality of cylindrical rollers. In this case, the substrate **90** is better supported (above, function of claim **7**) . For example, the plurality of cylindrical rollers is rotated by the clutch **116.** The clutch **116** rotates the plurality of cylindrical rollers in accordance with the movement of the scribing device guide body **242**. The clutch 116 can select the direction of rotation or stop the rotation of the plurality of cylindrical rollers in accordance with the movement of the space. In this case, when the clamping of the substrate **90** by the clamping device **251** is released, the substrate supporting device (first substrate supporting section **241A** and second substrate supporting section **241B**) can be used for transporting the substrate 90 (above, function of claim **8**).

The clutch unit **110** rotates the plurality of cylindrical rollers in accordance with the movement of the scribing device guide body **242.** For example, the outer circumferentialspeedof thepluxalityof cylindrical rollers is controlled so as to match the moving speed of the scribing device guide body in the Y direction. Therefore, when the plurality of cylindrical rollers moves in the Y direction, the plurality of cylindrical rollers does not rub the substrate **90** or does not exert any force on the substrate **90**. As a result, when a vertical crack is created within the substrate **90** by the cutter wheels **62a**, there is no possibility that an undesired crack will result from the cutter wheels **62a** (above, function of claim 9).

When the first substrate supporting unit **244A** is the timing belt, the surface of the substrate is supported on a surface of the timing belt **21e** compared to when a cylindrical roller is used. As a result, the substrate is stably supported (above, function of claim **10**).

As described above, even when the first substrate supporting unit **244A** is the timing belt, the clutch **116** can circle the plurality of belts in accordance with the movement of the scribing device guide body **244.** In this case, the belt can select, by the clutch **116**, the direction of the circling movement or stop the circling movement of the belt **21e** in accordance with the movement of the space. Therefore, when the clamping of the substrate **90** by the clamping device **251** is released, the substrate supporting device (first substrate supporting section **241A** and second substrate supporting section **241B)** can be used for transporting the substrate **90** (above, function of claim **11**).

The clutch unit **110** circles the plurality of belts in accordance with the movement of the scribing device guide body **244**. As described above, the circling speed of the plurality of belts is controlled so as to match the moving speed of the scribing device guide body **242** in the Y direction. Therefore, when the plurality of belt moves in the Y direction, the plurality of belts does not rub the substrate **90** or does not exert any force on the substrate **90.** As a result, when a vertical crack is created within the substrate **90** by the cutter wheel **62a**, there is no possibility that an undesired crack will result from the cutter wheel **62a** (above, function of claim **12**).

The structure and the function of the first substrate supporting section **241A** have been described above. The second substrate supporting section **241B** may have a structure and a function similar to those of the first substrate supporting section **241A** (above, function of claims **14** to **21**).

It is preferred that the cutter wheel **62a** is rotatably supported by the cutter head **65** using the servo motor disclosed in WO 03/011777.

Figure **14** shows a side view of the cutter head **65** and Figure **15** shows a front view of the important constituents thereof as one example of the cutter head **65** using the servo motor. The servo motor **65b** is supported in an invertedmanner between a pair of side walls **65a**. A holder holding member 65c is provided below the pair of side walls **65a** so as to be rotatable via a supporting axis **65d**, the holder holding member **65c** having an L shape when viewed from the side. A tip holder **62b** is attached in front (on the right-hand side in Figure **15**) of the holder holding member **65c.** The tip holder **62b** is attached to rotatably support the cutter wheel **62a** via an axis **65e**. Flat bevel gears **65f** are mounted on the rotation axis of the servo motor **65b** and the supporting axis **65d** so as to engage with each other. Thus, the holder holding member **65c** performs an upwards and downwards tilt operation with the supporting axis **65d** as its supporting point and the cutter wheel **62a** moves upwards and downwards due to the forward and reverse rotation of the servo motor **65b.** The cutter heads **65** themselves are provided on the upper substrate cutting device **60** and the lower substrate cutting device **70**.

Figure **16** is a front view showing another example of cutter head using a servo motor. The rotation axis of the servo motor **65b** is directly connected to the holder member **65c**.

The cutter heads shown in Figures **14** and **16** move the cutter wheels **62a** upwards and downwards by rotating the servo motors using the position control so as to position the cutter wheel **62a..** The cutter heads transmit the scribing pressure for the brittle material substrate to the cutter wheel **62a** by controlling the rotation torque. The rotation torque acts to return the cutter wheel **62a** to the set position when the position of the cutter wheel **62a** is shifted from the positions set in the servo motors **65b** beforehand during the scribing operation for forming a scribing line on the bonded mother substrate **90** by moving the cutter heads in a horizontal direction. In other words, the servo motor **65b** controls the position in the perpendicular direction of the cutter wheel **62a**, and at the same time, the servo motor **65b** is an energizing means for the cutter wheel **62a.**

Byusing the cutter head including the aforementioned servo motor, when the bonded mother substrate **90** is being scribed, the rotation torque of the servo motor is corrected immediately in response to the change of the scribing pressure by the change in resistive force received by the cutter wheel **62a**. Thus, scribing is stably performed and a scribing line with excellent quality can be formed.

A cutter head is effectively applied to cutting the mother substrate in the substrate cutting system according to the present invention. The cutter head includes a mechanism for vibrating a scribing cutter (e.g., a diamond point cutter or a cutter wheel) which scribes the bonded mother substrate **90** so as to periodically change the pressure force of the scribing cutter on the bonded mother substrate **90**.

The structure of the upper substrate cutting device **60** and the lower substrate cutting device **70** is not limited to the aforementioned structure. In other words, any structure can be used, as long as the device has a structure for processing the top and bottom surfaces of the substrate so as to cut the substrate.

For example, the upper substrate cutting device **60** and the lower substrate cutting device **70** can be a device which cuts the mother substrate by using such as a laser light, a dicing saw, a cutting saw, a cutting blade or a diamond cutter.

When the mother substrate is made of a metal substrate (e.g., a steel plate), a wood plate, a plastic substrate or a brittle material substrate (e.g. , a ceramic substrate, glass substrate or semiconductor substrate), a substrate cutting device for cutting the mother substrate by using, for example, a laser light, a dicing saw, a cutting saw, a cutting blade or diamond cutter is used.

Furthermore, when a bonded mother substrate for which a pair of mother substrate is bonded to each other, a bonded mother substrate for which different types of mother substrates are bonded to each other or a stacked substrate for which a plurality of mother substrates are stacked on each other is cut, a substrate cutting device similar to the one used for cutting the aforementioned mother substrate can be used.

The upper substrate cutting device **60** and the lower substrate cutting device **70** may include a cutting assistance means for assisting the cutting of the substrate. As a cutting assistance means, for example, a means for pressing (e.g., a roller on the substrate), a means for spraying compressed air onto the substrate, a means for irradiating a laser onto the substrate or a means for warming (heating) the substrate by spraying such as heated air onto the substrate is used.

Furthermore, in the description above, the upper substrate cutting device **60** and the lower substrate cutting device **70** have the same structure. However, the upper substrate cutting device **60** and the lower substrate cutting device **70** can have structures different from each other, depending on the cutter pattern of the substrate or the cutting condition of the substrate.

The lift conveyor section **260** transports the processed bonded mother substrate **90** to the steam break unit section **280**, the bonded mother substrate **90** being mounted on the plurality of substrate supporting units **244B** of the second substrate supporting section **241B** after the bonded mother substrate **90** is scribed by the upper substrate cutting device **60** and the lower substrate cutting device **70** of the scribing device guide body **242** of the scribing unit section **240** and the clamping (holding) of the bonded mother substrate **90** by the clamp devices **251** are released.

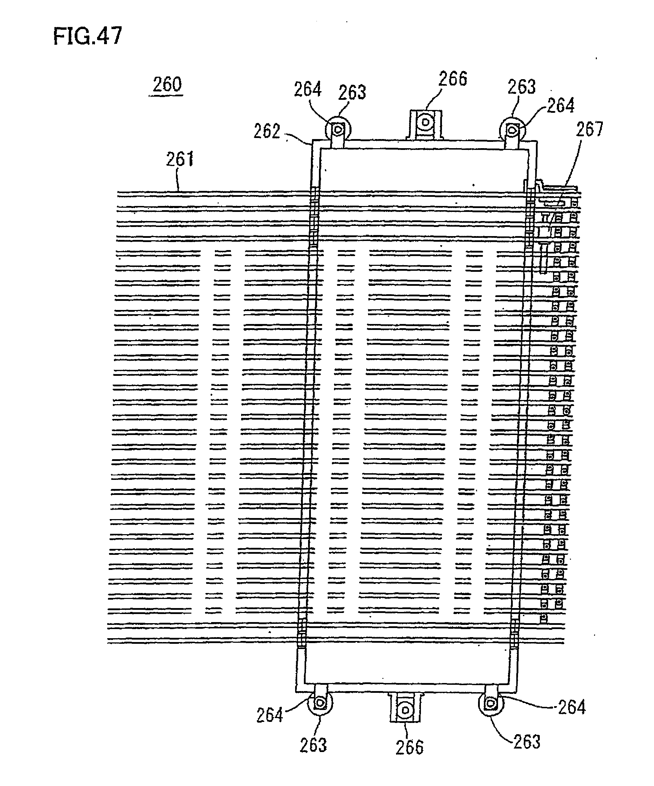

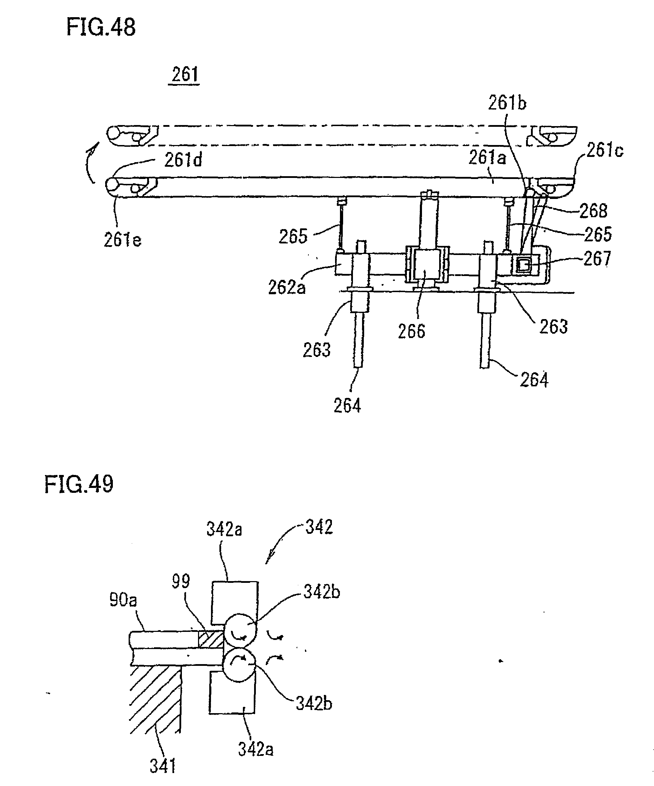

Figure **47** is a plan view of the lift conveyor section **260.** Figure **48** is a side view of third substrate supporting units **261** which constitute the lift conveyor section **260**.

The third substrate supporting unit **261** includes a supporting body section **261a**, which linearly extends along a direction (Y direction) parallel to the frame **243A.** and the frame **243B.** Timing pulleys **261c** and **261d** which, for example, guide a timing belt **261e**, are attached to each end of the supporting body section **261a**, respectively. The timing pulley **216b** for driving is connected to a driving axis to which the rotation of the rotating motor **267** is transmitted by the belt **268**, so as to cause the timing belt **261e** to circle.

The plurality of third substrate supporting units **261** is arranged in the lift conveyor section **260** with a predetermined interval. The plurality of third substrate supporting units **261** is held by a holding frame **262** via the pillars **265** such that the plurality of second substrate supporting units **244B** of the second substrate supporting section **241B** of the scribing unit section **240** is inserted into each respective interval.

Cylinders **266** are provided in the center of each frame **262a** of the holding frame **262** of the frame **243A** side and the frame **244B** side. Bodies of the cylinders **266** are respectively joined to the upper surface of the mounting base **270**, and rods of the cylinders **266** are respectively joined to each frame **262a** of the holding frame **262**. Guide shafts **264** are provided on both sides of the respective frames **262a of** the holding frame **262,** and the guide shafts are inserted into respective linear guides **263** which are provided on the upper surface of the mounting base **270.**

After the bonded mother substrate **90** is scribed by the upper substrate cutting device **60** and the lower substrate cutting device **70** of the scribing device guide body **242** of the scribing unit section **240,** the clamping (holding) of the bonded mother substrate **90** by the clamp devices **251** is released. The scribed bonded mother substrate **90** mounted on the plurality of second substrate supporting units **244B** of the second substrate supporting section **241B** is transported to the steam break unit section **280** when a rotating motor **267** is rotated and the plurality of timing belts **261e** is moved after the scribed bonded mother substrate 90 mounted on the plurality of the third substrate supporting units **261** is moved to a predetermined position, which is located above, (+Z direction) along a perpendicular direction due to the drive of the cylinders **266**.

The steam break unit section **280** has a structure similar to the steam unit section **160** in Embodiment **1** shown in Figure **10** except that the steam break unit section **280** does not move along the Y direction and is fixed. In the steam break unit section **280,** an upper steam unit attachment bar **281** and a lower steam unit attachment bar **282** are attached to pillars **283**, respectively, along the x direction, parallel to the scribing device guide body **242**. The upper steam unit attachment bar **281** attaches a plurality of steam units **284** for spraying steam onto the mother substrate **91** on the upper side of the bonded mother substrate **90.** The lower steam unit attachment bar **282** attaches a plurality of steam units **284** for spraying steam onto the mother substrate **92** on the lower side of the bonded mother substrate **90**.

Each pillar **283** on the respective frame **243A** and **243B** sides of the steam break unit section **280** is joined to the upper surface of the mounting base **270**, respectively. A belt conveyor **285** is provided on the substrate carry-out side of the steam break unit section **280** after the steam is sprayed onto top and bottom surfaces of the bonded mother substrate **90** from the steam unit **284.** The belt conveyor is provided with, for example, a sheet belt which circles, and supports and transports the completely cut bonded mother substrate **90.**

The circling speed of the belt conveyor **285** provided on the substrate carry-out side of the steam break unit section **280** is set at approximately the same circling speed of each timing belt **261e** of the plurality of the respective third substrate supporting units **261** of the lift conveyor **260** and moves in synchronization therewith.

The steam break unit section **280** has a structure similar to the steam unit section **160** in Embodiment **1** shown in Figure **10**. A plurality of steam units **284** is attached to the upper steam unit attachment bar **281.** The plurality of steam unit attachment bar **284** is attached to the lower steam unit attachment bar **282** with a gap GA with respect to the plurality of steam unit **284** on the upper side. The gap GA is adjusted such that the bonded mother substrate **90** passes through the gap GA.

The structure of the steam unit **284** is similar to that of the steam unit section **261** in Embodiment **1** shown in Figure **11**. The steam unit **284** is almost entirely constructed by an aluminum material. A plurality of heaters **161a** is embedded in the steam unit **284** in a perpendicular direction. When an open/close valve, which automatically opens and closes, is opened, water flows into the steam unit **284** from a water supplying mouth **161b.** The water is heated by the heater **161a** and the supplied water vaporizes into steam. The steam is sprayed toward the surface of the mother substrate from a gushing mouth **161d** through a conducting hole **163c.**

An air knife (any one of substrate adhesion removal devices **700**, **1000**, **1500** and **2000**) is provided on the carry-out side of the upper stem unit attachment bar **281.** The air knife (any one of substrate adhesion removal devices **700, 1000, 1500** and **2000)** is provided for removing the moisture that remains on the surface of the mother substrate **90** after the steam is sprayed onto the upper surf ace of the mother substrate **90.** A steam unit **284** and any one of the substrate-adhered material removal device **700, 1000, 1500, 2000** similar to those attached to the upper steam unit attachment bar **281** are provided in the lower steam unit attachment bar **282.**

After the scribed bonded mother substrate **90** that is mounted on the second substrate supporting units is moved mounted on the third substrate supporting units **261** to a predetermined position, which is located above, (+Z direction) along a perpendicular direction, when the belt conveyor **285** provided on the substrate carry-out side of the steam break unit section **280** is moved at the circling speed at approximately the same circling speed of each timing belt **261e** of the plurality of the respective third substrate supporting units **261**, the scribed bonded mother substrate **90** passes through the steam break unit section **280**, is cut into panel substrates **90a** and is held by the belt conveyor **285**.

The substrate transportation unit section **300** lifts the panel substrates **90a,** which is moving or stopped, supported by the belt conveyor **285,** and mounts the panel substrates **90a** on a panel supporting section **322** of an inversion transportation robot **321** of a panel inversion unit section **320**, when the bonded mother substrate **90** passes through the steam break unit section **280** and is cut.

Above the mounting base **270** and the mounting base **330** of the substrate transportation unit section, a substrate carry-out device guide **301** is constructed. The substrate transportation device guide **301** is capable of moving the transportation robot **310**, which transports the panel substrates cut from the bonded mother substrate **90,** in the X direction in parallel to the steam break unit section **280** and the scribing device guide body **242,** perpendicular to the flow direction of the substrate in the Y direction.

In the substrate carry-out unit section **300**, along guides **303** on the frame **243A** side and on the frame **243B** side provided on each respective top surface of the mounting base **270** and the mounting base **330** via pillars **302,** both ends of the substrate carry-out device guide **301** slide due to linear motors via respective supportingmembers **304.** In this case of the linear motors, movers (not shown) of the linear motors are inserted in the stators for the linear motors, provided on the respective guides **303.** The movers for the linear motors are attached to the supporting members **304.**

An adsorption section (not shown) is provided on the carry-out robot **310.** The adsorption section adsorbs, by suction, each panel substrate **90a** that is cut from the bonded mother substrate. While the panel substrate **90a** is in a state of being adsorbed by the adsorption section, when the transportation robot **310** is slid to the substrate carry-out side, each panel substrate **90a** is mounted on the panel supporting section **322** of the inversion transportation robot **321** in the panel inversion unit section **320**.

The structure of the carry-out robot **310** in the substrate transportation unit section **300** is similar to that of the carry-out robot **140** or the carry-out robot **500** in Embodiment 1 shown in Figure **5A** to Figure **5E.** Thus, the detailed description thereof will be omitted herein. The carry-out robot **310** is attached to the substrate carry-out device guide **301.** The carry-out robot **310** is movable by a moving mechanism in a direction (X direction) along the substrate carry-out device guide **301**, the moving mechanism combining a driving means due to a linear motor or a servo motor and a straight-line guide. In the transportation of the panel substrate **93** that is cut from the bonded mother substrate **90** by the transportation robot **310**, the cut panel substrate **90a** is held by the adsorption pads on the carry-out robot due to the suction of a suction mechanism (not shown). After the entire carry-out robot **310** is moved upward by an up-and-down moving mechanism (not shown) once, the cut substrate **93** is transported to the inversion transportation robot **321** in the panel inversion unit section **320** for the next step. Thereafter, the carry-out robot **310** is moved downward by the up-and-down moving mechanism (not shown) again and then, the cut substrate **93** is mounted on a predetermined position of the panel holding section **322** of the inversion transportation robot **321** in the panel inversion unit section **320** in a predetermined state in the next step.

An inversion panel robot **321** is provided in the panel inversion unit section **320**. The inversion panel robot **321** receives the panel substrate 90a from the carry-out robot **310** of the substrate transportation unit section **300**, inverts the sides (top and bottom) of the panel substrates **90a** and mounts the panel substrate **90a** on a separation table **341** of a panel terminal separation section **340.** Thus, when it is necessary to invert the substrate (invert the sides of a unit panel) for a device of the next step, it is easily handled (above, function of claim **38**).

The panel holding section **322** of the inversion transportation robot **321** includes, for example, a plurality of adsorption pads. The panel holding section **322** is rotatably supported with respect to a robot body section **323** of the inversion transportation robot **321**.

Referring to the panel substrates **90a** mounted, by the inversion transportation robot **321,** on the separation table **341** of the panel terminal separation section **340,** for example, an undesired portion **99** of the panel substrates **90a** is separated from the panel substrate **90a** by an undesired portion removal mechanism **342** which is provided in the vicinity of each side edge of the separation table **341**, as shown in Figure **49**, whereby the undesired portion removal mechanism **342** is provided by an insertion robot (not shown).

In the undesired portion removal mechanism **342,** as shown in Figure **49,** a plurality of removal roller sections **342a** is arranged with a predetermined pitch along each side edge of the separation table **341**, each of the plurality of removal roller section **342a** having a pair of rollers **342b** facing each other. Each roller **342b**, facing each other, provided on each removal roller section **342a** is energized in a direction so as to approach each other. The undesired portion **99** on the upper side of the panel substrate **90a** of the substrate and the side edge on the lower side of the panel substrate **90a** are inserted between each roller **342b** by the insertion robot (not shown). Each roller **342b** rotates only in one direction in which the panel substrate **90a** is inserted between each roller **342b.** The pair of rollers **342b** facing each other is set such that the rotating directions thereof are opposite with respect to each other. As described above, the undesired portion removal mechanism **342** can easily remove undesired portions remaining on unit substrates cut from the substrate (above, function of claim **45**)

The operation of the substrate cutting system, having such a structure, according to Embodiment **2** will be described, mainly using a case in which a bonded substrate for which large-sized glass substrates are bonded to each other is cut.

When a bonded mother substrate **90** for which large-sized glass substrates are bonded to each other is cut into a plurality of panel substrates **90a** (see Figure **18**), a plurality of adsorption pads **221a** receive the bonded mother substrate **90** from a transportation device (not shown) in the previous step and adsorb the bonded mother substrate **90**, the plurality of adsorption pads **221a** provided in a plurality of adsorption pad bases **221** of a positioning unit section **220** according to Embodiment **2**.

Four clutches of a first substrate supporting section **241A** and a second substrate supporting section **241B** of a scribing unit section **240** release the coupling with a driving axis such that timing pulleys, which cause each timing belt of respective first substrate supporting units **244A** and respective second substrate supporting units **244B** to circle, do not rotate (hereinafter, this state is referred to as "clutch off").

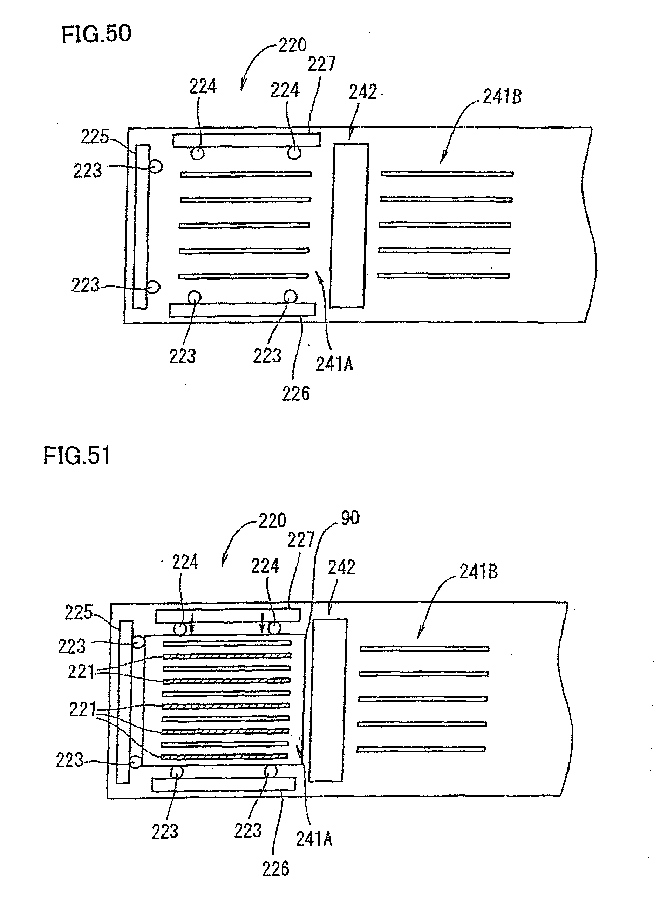

With the clutches off, as shown in Figure **50**, the first substrate supporting section **241A** moves, together with the scribing device guide body **242** and the second substrate supporting section **241B**, to the substrate carry-in side and waits at the positioning unit section **220.**

Thereafter, as shown in Figure **51**, a plurality of adsorption pad bases **221**, which holds the bonded mother substrate **90**, lower in the first substrate supporting section 241A in a state of waiting, by an up-and-down moving device **222.** Adsorption of the bonded mother substrate by the plurality of adsorption pads is released, and the bonded mother substrate **90** is mounted on the first substrate supporting section **241A.**

As describedabove, while the bonded mother substrate **90** is mounted on the first substrate supporting section **241A** and the four clutches of the first substrate supporting section **241A** and the second substrate supporting section **241B** are off, the first substrate supporting section **241A** slightly moves, together with the scribing device guide body **242** and the second substrate supporting section **241B,** to the substrate carry-in side, and the side edge of the bonded mother substrate **90** on the substrate carry-in side is contacted to a plurality of reference rollers **223** provided in a guide bar **225** of the positioning unit section **220**.

After the side edge of the bonded mother substrate **90** on the substrate carry-in side is contacted to a plurality of reference rollers **223** provided in the guide bar **225** of the positioning unit section **220**, the bonded mother substrate **90** is pushed toward reference rollers **223** of a guide bar 2**2**6 by pushers **224** of a guide bar **227** of the positioning unit section **220**, and the side edge of the bonded mother substrate **90** on the guide bar **226** is contacted to the reference roller **223** provided on the guide bar **226**. Thus, the bonded mother substrate **90** is positioned within the first substrate supporting section **241A** of the scribing unit section **240**.

Thereafter , the push of the bonded mother substrate **90** toward the reference rollers **223** of the guide bar **226** by pushers **224** of a guide bar **227** of the positioning unit section **220** is stopped. While the four clutches of the first substrate supporting section **241A** and the second substrate supporting section **241B** are off, the first substrate supporting section **241A** moves together with the scribing device guide body **242** and the second substrate supporting section **241B.** After the bonded mother substrate **90** is moved to a position where the bonded mother substrate **90** is to be held by a clamp device **251**, the side edges of the bonded mother substrate **90** are clamped by the clamp device **251**.

When each side edge of the bonded mother substrate **90** is clamped by the clamp device **251**, each side edge being perpendicular to each other, each clamp member, which clamps the side edge of the bonded mother substrate **90,** lowers at approximately the same time due to the weight of the bonded mother substrate **90.** Therefore, the bondedmother substrate **90** is additionally supported by the timing belts of all of the first substrate supporting units **244A**.

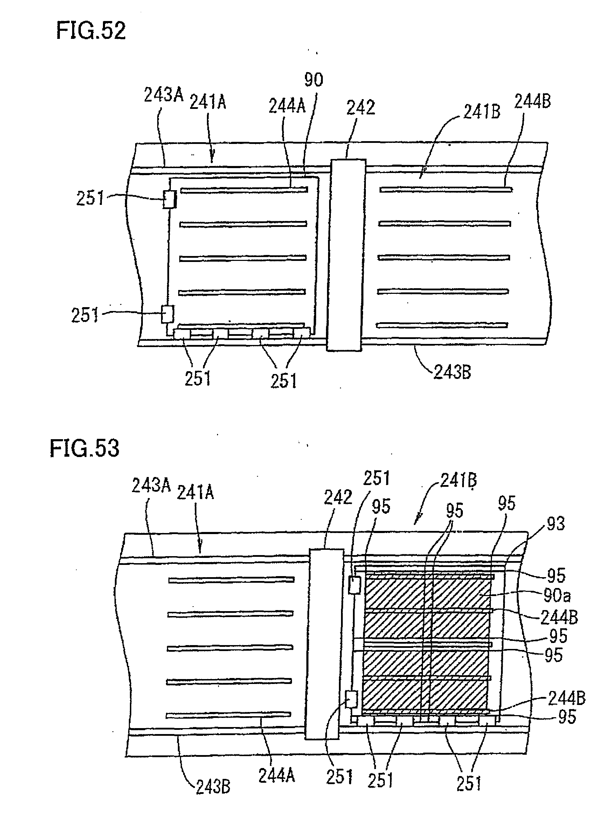

As shown in Figure **52**, when each side edge of the bonded mother substrate **90** perpendicular to each other is clamped by the clamp device **251**, and is supported by each first substrate supporting unit **244A,** the four clutches of the first substrate supporting section **241A** and the second substrate supporting section **241B** of the scribing unit section **240** are coupled to the driving axis such that the timing pulleys, which cause each timing belt of respective first substrate supporting units **244A** and respective second substrate supporting units **244B** to circle (hereinafter, this state is referred to as "clutch on").

After the four clutches of the first substrate supporting section **241A** and the second substrate supporting section **242B** are on, the scribing device guide body **242** is slid to the substrate carry-in side so as to be at a predetermined position above the side edge of the bonded mother substrate **90** on the substrate carry-out side, the bonded mother substrate **90** being clamped by the clamp devices in a horizontal direction. A first optical device **38** and a second optical device **39** provided on the scribing device guide body **242**, move along the scribing device guide body **242** from respective waiting positions and capture a first alignment mark and a second alignment mark, respectively, provided on the bonded mother substrate **90**.

When the scribing guide body **242** slides, the first substrate supporting section **241A** is slid to the substrate carry-in side and the second substrate supporting section **241B** is slid to the substrate carry-in side, and at the same time, the timing belts of the first substrate supporting units **244A** of the first substrate supporting section **241A** and the timing belts of the second substrate supporting units **244B** of the second substrate supporting section **241B** try to move the bonded glass substrate in a direction opposite to the moving direction of the scribing device guide body **242** at the same speed as the moving speed of the scribing device guide body **242.** Therefore, the bonded mother substrate **90** does not move. Thus, the bonded mother substrate **90** remains held by the clamp device **251,** and the bonded mother substrate **90** is also supported by the timing belts **21e** of the first substrate supporting units **244A** of the first substrate supporting section **241A** and the timing belts of the second substrate supporting units **244B** of the second substrate supporting section **241B** without being rubbed.

Next, based on the result of the captured first alignment mark and second alignment mark, the inclination of thebondedmother substrate **90** with respect to the direction along the scribing device guide body **242**, the starting position of cutting the bonded mother substrate **90** and the ending position of cutting the bonded mother substrate **90** are calculated by an operational processing device (not shown), the bonded mother substrate **90** being supported by the clamp device **251** in a horizontal state. Based on the result of the operation, the upper substrate cutting device 60 and the lower substrate cutting device **770** are moved in the X direction corresponding to the inclination of the bonded mother substrate **90,** and at the same time, the scribing device guide body **242** is moved so as to cut the bonded mother substrate **90** (which is referred to as "scribing by linear interpolation" or "cutting" by linear interpolation).

In this case, each cutter wheel **62a** facing each other is pressed so as to make contact onto the top surface and the bottom surface of the bonded mother substrate **90** and rolled on the top surface and the bottom surface of the bonded mother substrate **90**, respectively, so as to form scribing lines **95** on the top surface and the bottom surface of the bonded mother substrate **90**.

Figure **53** is a diagram showing a state in which the bonded mother substrate is supported by the second substrate supporting section **241B** when the forming of the scribing line **95** on each side edge of the respective four panel substrates **90a** is completed in order to cut the four panel substrates **90a** from the bonded mother substrate **90,** by pressing so as to make contact onto the bondedmother substrate **90** and rolling the cutter wheel **62a** of the upper substrate cutting device **60** and the cutter wheel **62a** of the upper substrate cutting device **70**.

The bonded mother substrate **90** is, for example, as shown in Figure **53,** cut so that two panel substrates **90a** are cut into two lines in a direction along the upper guide rail **252** and the lower guide rail **253.** The cutter wheel **62a** of the upper substrate cutting device **60** and the cutter wheel **62a** of the lower substrate cutting device **70** are pressed so as to make contact and rolled along the side edge of the panel substrates **90a** in order to cut four panel substrates 90a from the bonded mother substrate **90**.

In this case, vertical cracks are created, by the cutter wheel **62a** of the upper substrate cutting device **60** and the cutter wheel **62a** of the lower substrate cutting device **70** on the part where each cutter wheel **62a** is respectively pressed so as to make contact each glass substrate and rolled on each glass substrate. As a result, scribing lines **95** are formed thereon. Protrusions are formed, with a predetermined pitch, on the blade edge of each cutter wheel **62a** in a circumferential direction. Thus, a vertical crack having about 90% of thickness of the glass substrate in the thickness direction is formed on each glass substrate.

A scribing method is effectively applied to cutting the bondedmother substrate **90** in the substrate cutting system according to the present invention, the scribing method using the cutter head including a mechanism for vibrating a scribing cutter (e.g., a diamond point cutter or a cutter wheel), which scribes the bonded mother substrate **90** so as to periodically change the pressure force of the scribing cutter on the bonded mother substrate **90.**

When scribing of the top and bottom surfaces of the bonded mother substrate **90** is completed and the state shown in Figure **53** is formed. The clamping (holding) of the bonded mother substrate **90** by the clamp devices **251** are released, the bonded mother substrate **90** is mounted on the second substrate supporting section **241B,** and at the same time, each clutch in the four clutch units of the second substrate supporting section **241B** is turned off.

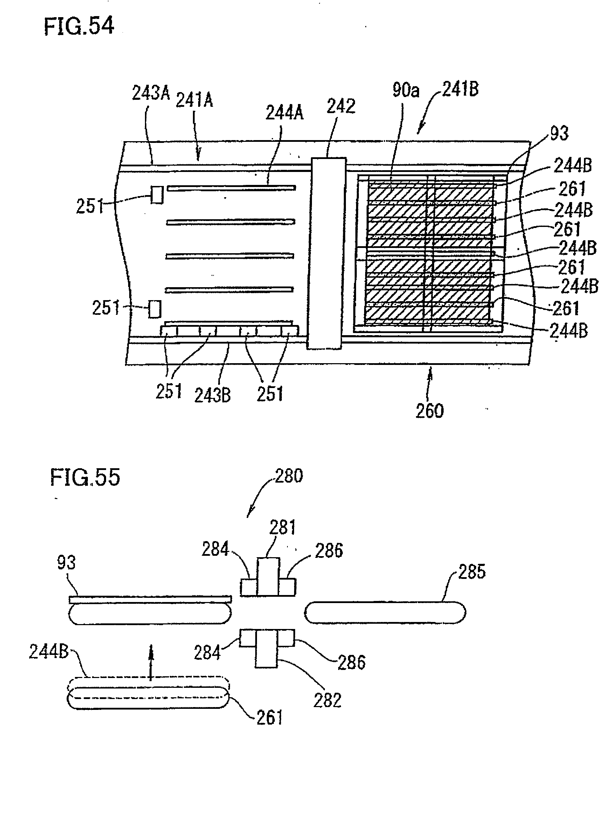

Thereafter, as shown in Figure **54**, the second substrate supporting section **241B,** on which the scribed bonded mother substrate **90** is mounted, moves to the substrate carry-out side together with the first substrate supporting section **241A** and the scribing device guide body **242**, and the second substrate supporting section **241** is moved to a position on intervals of a plurality of third substrate supporting units **261** which is arranged with a predetermined interval in a lift conveyor section **260**. As a method of forming a scribing line on each side edge of the respective four panel substrates **990a** in order to cut the four panel substrates from the bonded mother substrate **90** by pressing so as to make contact the bonded mother substrate **90** and rolling the cutter wheel **62a** of the upper substrate cutting device **60** and the cutter wheel **62a** of the upper substrate cutting device 70, a scribing method in Embodiment **1** shown in Figure **19**, which is different from the one shown in Figure **53**, can be effectively applied to the substrate cutting system according to Embodiment **2**.

The plurality of third substrate supporting units **261** is arranged in the lift conveyor section **260** with a predetermined interval. The plurality of third substrate supporting units **261** is held by a holding frame **262** via the pillars **265** as shown in Figure **48** such that the plurality of second substrate supporting units **244B** of the second substrate supporting section **241B** of the scribing unit section **240** is inserted into each respective interval. As shown in Figure **55**, the plurality of third substrate supporting units **261** is arranged such that the faces of the respective timing belts **261e**, which receive the scribed bonded mother substrate **90**, are positioned below the face of the second substrate supporting units **244B** where the scribed bonded mother substrate **90** is mounted.

The scribed bonded mother substrate **90** mounted on the plurality of substrate supporting units **244B** of the second substrate supporting section **241B** is transported to the steam break unit section **280** when a rotating motor **267** is rotated and the plurality of timing belts **261e** is moved after the scribed bonded mother substrate **90** mounted on the plurality of the third substrate supporting units **261** is moved to a predetermined position, which is located above, (+Z direction) along a perpendicular direction due to the drive of the cylinders **266.**

In the steam break unit section **280,** an upper steam unit attachment bar **281** and a lower steam unit attachment bar **282** are attached to pillars **283** along the x direction in parallel to the scribing device guide body **242.** The upper steam unit attachment bar **281** attaches a plurality of steam units **284** for spraying steam onto the mother substrate **91** on the upper side of the bonded mother substrate **90.** The lower steam unit attachment bar **282** attaches a plurality of steamunits **284** for spraying steam onto the mother substrate **92** on the lower side of the bonded mother substrate **90**.

The circling speed of the belt conveyor **285** provided on the substrate carry-out side of the steam break unit section **280** is set at approximately the same circling speed of each timing belt 261e of the plurality of the respective third substrate supporting units **261** of the lift conveyor **260** and moves in synchronization therewith, and the scribed bonded mother substrate **90** passes through the steam break unit section **280**.

An air knife 286 is provided on an upper steam unit attachment bar **281** on the substrate carry-out side. An air knife **284** and an air knife **286** that are similar to the air knife attached to the upper steam unit attachment bar **282** are provided on the lower steam unit attachment bar **282**. Thus, after steam is sprayed on the top and bottom surfaces of the bonded mother substrate **90,** the moisture remaining on the top and bottom surfaces of the bonded mother substrate **90** is completely removed.

When the steam is sprayed onto the top and bottom surfaces of the substrate **90** where a scribing line is formed, the heated moisture infiltrates inside a vertical crack of each scribing line, and the vertical crack extends due to the expanding force. As a result, the substrate can be cut (above, function of claim **23**).

When the scribed bonded mother substrate **90** passes through the steam break unit section **280**, the bonded mother substrate **90** is cut into panel substrates **90a** and held by the belt conveyor **285**.

When the bonded mother substrate **90** passes through the steam break unit section **280,** the bonded mother substrate **90** is cut into a plurality of panel substrates **90a.** The panel substrates **90a,** which is moving or stopped, supported by the belt conveyor **285** are lifted by the transportation robot **310**, and are mounted on the panel supporting section **322** of an inversion transportation robot **321** in a panel inversion unit section **320**.

The inversion transportation robot **321** of the panel inversion unit section **320** receives the panel substrates 90a from the transportation robot **310** of the substrate transportation unit section robot **310,** inverts the top and bottom surfaces of the panel substrates **90a**, and mounts them on the separation table **341** of the panel terminal separation section **340**.

Referring to the panel substrates **90a** mounted, by the inversion transportation robot **321**, on the separation table **341** of the panel terminal separation section **340**, for example, an undesired portion **99** of the panel substrates **90a** are separated from the panel substrate **90a** by an undesired portion removal mechanism **342** which is provided in the vicinity of each side edge of the separation table **341** as shown in Figure **49,** the undesired portion removal mechanism **342** being provided by an insertion robot (not shown).

The substrate includes a bonded substrate for which mother substrates are bonded to each other, a bonded substrate for which different mother substrates are combined and bonded to each other, and a stacked substrate for which mother substrates are combined and stacked on each other, other than the mother substrate.

The substrate cutting system **200** according to Embodiment **2** of the present invention has been described above with reference to Figures **43** to **55.**

### <Embodiment 3>

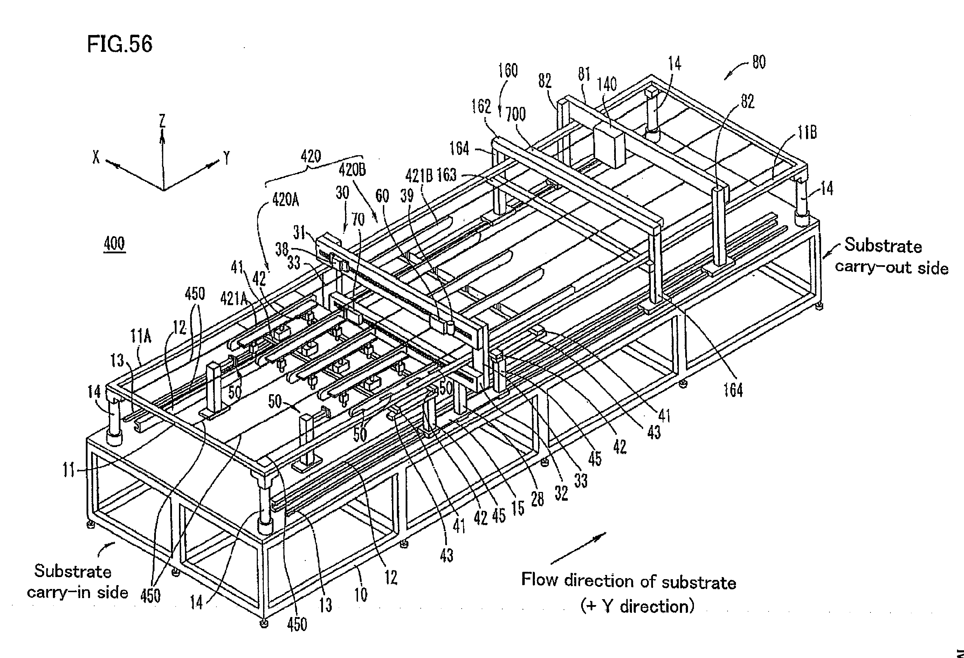

Hereinafter, a substrate cutting system 400 according to Embodiment 3 of the present invention will be described with reference to Figures **56** to **62.**

Figure 56 is a perspective view schematically showing the entire cutting substrate system **400** according to Embodiment 3 of the present invention. In the present invention, the term "substrate" includes a single plate, such as a mother substrate cut into a plurality of substrates, a metal substrate (e.g., a steel plate), a wood plate, a plastic plate and a brittle material substrate (e.g., a ceramic substrate, a semiconductor substrate and a glass substrate). However, the substrate according to the present invention is not limited to such a single plate. Furthermore, the substrate according to the present invention includes a bonded substrate for which a pair of substrates is bonded to each other and a stacked substrate for which a pair of substrates is stacked on each other.

In the substrate cutting system of the present invention, for example, when a panel substrate (bonded substrate for display panel) for a liquid crystal device is manufactured from a pair of glass substrates bonded to each other, a plurality of panel substrates (bonded substrate for display panel) are cut, by the substrate cutting system according to the present invention, from the bonded mother substrate **90** for which a pair of mother glass substrates is bonded to each other.

The substrate cutting system 400 according to Embodiment **3** has a structure similar to the one in Embodiment **1** except that the substrate supporting device **20** in the substrate cutting system **1** according to Embodiment **1** is replaced with a substrate supporting device **420** in Embodiment **3**, and a plurality of supporting belts **450** are wound in the substrate cutting system according to Embodiment **3**. The same members in Figure **56** as used in Embodiment **1** are denoted by the same reference numerals as used in Embodiment 1 and the detailed explanation thereof will be omitted.

In a substrate cutting system **400** according to Embodiment **3** of the present invention, description will be made by referring the side where a first substrate supporting section **420A** is arranged, as a "substrate carry-in side", and the side where a substrate carry-out device **80** is arranged, as a "substrate carry-out side", respectively. In the substrate cutting system **400** according to the present invention, the direction in which a substrate is transported (flow direction of the substrate) is +Y direction from the substrate carry-in side to the substrate carry-out side. The direction in which the substrate is transported is perpendicular to a direction of a scribing device guide body **30** in a horizontal state. The scribing device body guide **30** is provided along the X direction.

The first substrate supporting section **420A** and the second substrate supporting section **420B** of the substrate supporting device **420** include, for example, five first substrate supporting units **421A** and five second substrate supporting units **421B**, respectively. The first substrate supporting units **421A** and second substrate supporting units **421B** are movable in the same direction as the moving direction of the scribing device guide body **30**, respectively. Each first substrate supporting unit **421A** and each second substrate supporting unit **421B** are arranged in line in the X direction along a direction (Y direction) parallel to the frames 11A and **11B** in the longitudinal direction of the main frame **11,** respectively.

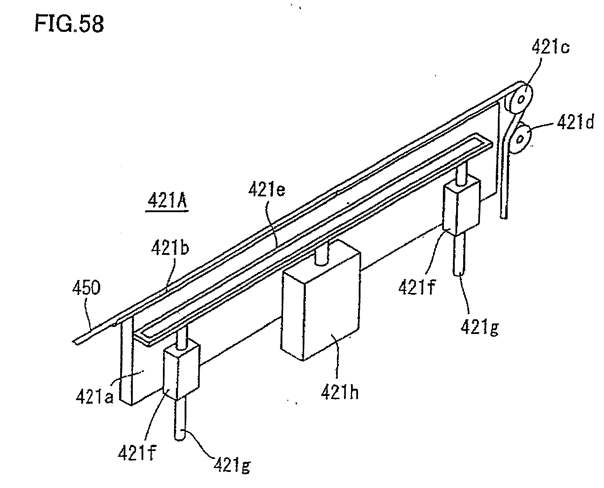

Figure **58** is a perspective view showing one first substrate supporting unit **421A** provided in the first substrate supporting section **420A.** The first substrate supporting unit **421A** includes a supporting body section **421a** which linearly extends along a direction (Y direction) in parallel to a main frame **11.** A belt holder **421b** which guides a supporting belt **450** is provided on the upper portion of the supporting body section **421a.** Pulleys **421c** and **421d** are attached to the end of the supporting body section **421a** on the substrate carry-out side. A cylinder **421h** is provided in the center of a bottom portion of the supporting body section **421a.** A cylinder rod of the cylinder **421h** is joined with a suction plate **421e**. Furthermore, linear guides 421f are provided on both ends of the bottom portion of the supporting body section **421a**. One end of each shaft **421g**, which is inserted into the linear guides **421f,** is joined with the suction plate **421e.**

The suction plate **421e** moves to a position above the supporting belt **450** due to the drive of the cylinder **421h** and receives a bonded mother substrate **90** which is transported to the first substrate supporting section **420** from the previous step by a transportation device (not shown). The bonded mother substrate **90** is suctioned and adsorbed by a suction mechanism (not shown) and is mounted on the supporting belt **450** of the first substrate supporting unit **421A.**

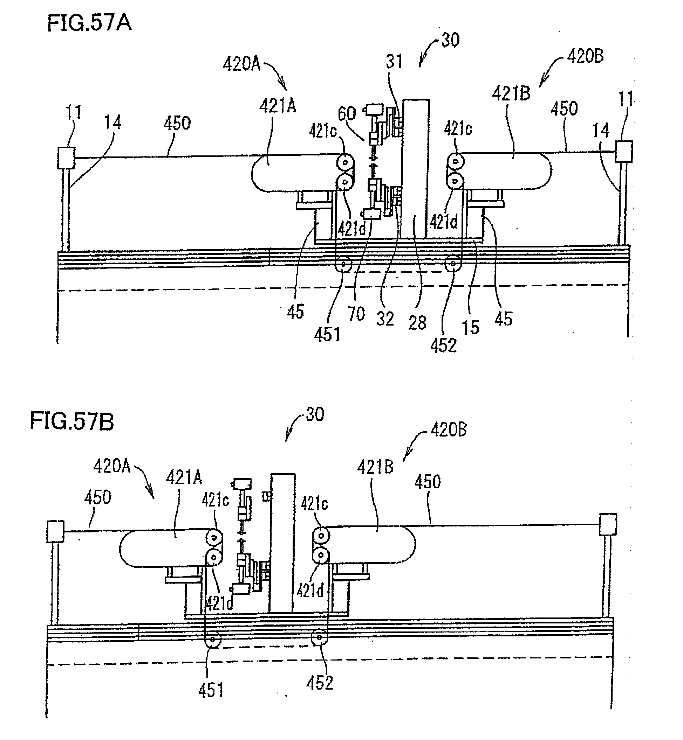

The cylinder **421h** has a two-step cylinder structure. When a pattern for injecting compressed air into the cylinder is controlled by an electromagnetic valve (not shown), the suction plate **421e** selectively is positioned at a lowermost position below the supporting belt **450**, at a uppermost position of receiving the bonded mother substrate **90**, and at a middle position of mounting the bonded mother substrate **90** on the supporting belt **450** shown in Figure **57.**

Pillars **45** are provided on the upper surface of guide bases 15 held by respective movement units of a pair of guide rails **13** which is provided on the upper surface of the mounting base **10.** Supporting members **43** are provided above the pillars **45,** the supporting members **43** being parallel to the Y direction along frames **11A** and **11B** of the main frame **11.** Supporting body sections **21a** are attached to respective two unit attachment members **41** and **42** through joining members **46** and **47**, the respective two unit attachment members **41** and **42** being constructed on respective supporting members **43** in the X direction perpendicular to the frames **11A** and **11B** of the main frame **11**.

Figures **57A** and **57B** are diagrams for explaining the state that the first substrate supporting unit **421A** has moved to the substrate carry-in side together with a scribing device guide body **30** and a second substrate supporting unit **421B.** The supporting belt **450** connected to the main frame **11** on the substrate carry-in side as shown in Figure **57A** is supported by the belt holder **421b** of the first substrate supporting unit **421A** and is wound around the pulleys **421c** and **421d** of the first substrate supporting unit **421A.** Thereafter, the supporting belt **450** is wound around a pulley **451** below the first substrate supporting unit **421A** and thereafter, it is wound around a pulley **452** below the second substrate supporting unit **421B.** Thereafter, the supporting belt **450** is wound around the pulleys **421d** and **421c** of the second substrate supporting unit **421B**, and it is supported by the belt holder **421b** of the second substrate supporting unit **421B.** Thereafter, the supporting belt **450** is connected to the main frame **11** on the substrate carry-out side and tensioned.

The pillar **45** on the side of the frame **11A** and the pillar **45** on the frame **11B** side which support the first substrate supporting units **421A** are held by the guide bases **15**. Movers (not shown) for the linear motor are connected to the guide bases **15** holding the pillars **28**. The pillars **28** support both ends of the scribing device guide body **30**. Thus, due to the drive of the linear motor, the scribing device guide body **30** moves to the substrate carry-in side, and at the same time, the five first substrate supporting units **421A** of the first substrate supporting section **420A** move to the substrate carry-in side.

A plurality (five in the description of the present embodiment) of first substrate supporting units **421A** are arranged with a predetermined interval, and move together with the scribing device guide body **30** in the Y direction along the frames **11A** and **11B** of the main frame **11**.

The second substrate supporting section **420B** of the substrate supporting device **420** includes, for example, five second substrate supporting units **421B**. The second substrate supporting units **421B** are movable in the same direction as the moving direction of the scribing device guide body **30.** The second substrate supporting unit **421B** has a structure in which an adsorption plate **421e,** a cylinder **421h** for moving the adsorption plate **421e** upward and downward, a linear guide **421f** and a shaft **421g** are removed from the first substrate supporting unit **421A**. The second substrate supporting unit **21B** is supported by the pillars **45** on the frame **11A** side and on the frame **11B** side so as to be attached opposite to the Y direction with respect to the scribing device guide body **30.** Each pillar is supported by the guide base **15.**

Movers (not shown) for the linear motor are connected to the guide bases **15** which hold the pillars **28,** the pillars **28** supporting the both ends of the scribing device guide body **30.** Thus, due to the drive of the linear motor, the scribing device guide body **30** moves to the substrate carry-in side, and at the same time, the five second substrate supporting units **421B** of the second substrate supporting section **4420B** move to the substrate carry-in side.

When the first substrate supporting unit **421A** moves to the substrate carry-in side together with the scribing device guide body **30** and the second substrate supporting unit **421B** as shown in Figure **57B**, the supporting belts **450** of the first substrate supporting unit **421A** lower below the scribing device guide body, and the supporting belts **450** of the second substrate supporting units **421B** emerge on the belt holders **421b** of the second substrate supporting units **421B** from under the scribing device guide body **30.** As described above, the first substrate supporting section **421A** does not rub the bonded mother substrate **90** and it does not exert any force on the substrate. Therefore, when a vertical crack is created within the substrate **90** by the cutter wheel **62a**, there is no possibility that an undesired crack will result from the cutter wheel **62a** (above, function of claim **46**).

When the second substrate supporting unit **421B** moves to the substrate carry-in side together with the scribing device guide body **30** and the first substrate supporting unit **421A**, the supporting belts **450** of the second substrate supporting unit **421B** lower below the scribing device guide body **30**, and the supporting belts **450** of the first substrate supporting units **421A** emerge on the belt holders **421b** of the first substrate supporting units **421A** from the under the scribing device guide body **30.** As described above, the second substrate supporting section **421B** does not rub the substrate **90** and it does not exert any force on the substrate. Therefore, when a vertical crack is created within the substrate **90** by the cutter wheel **62a,** there is no possibility that an undesired crack will result from the cutter wheel **62a** (above, function of claim **47**).

The operation of the substrate cutting system having such a structure according to Embodiment **3** will be mainly described as an example for the case where a bonded substrate for which large-sized glass plates are bonded to each other is cut.

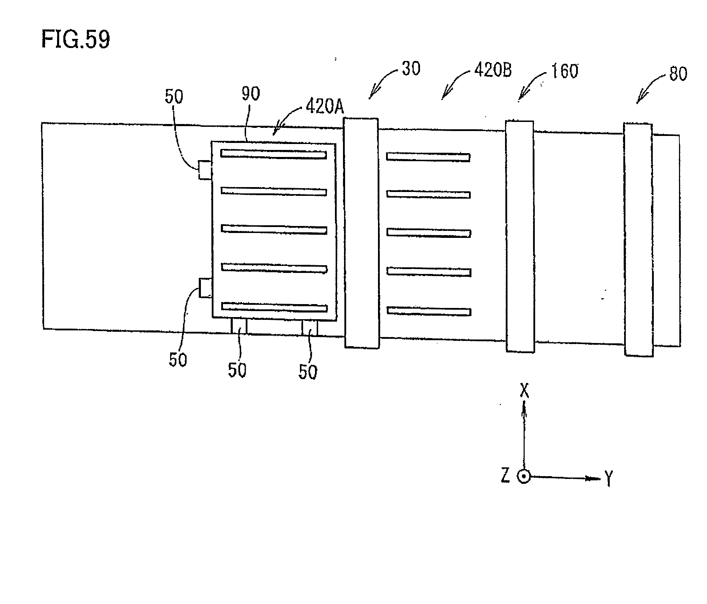

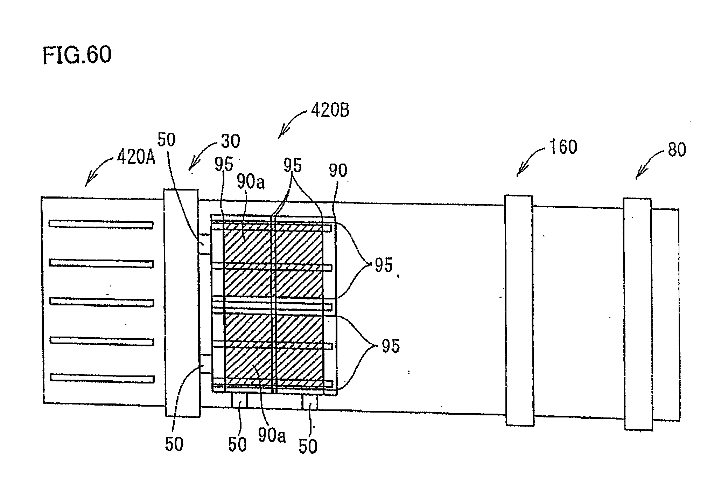

When the bonded mother substrate **90** for which large-sized glass substrates are bonded to each other is cut into a plurality of panel substrates **90a** (see Figure **60**), first, as shown in Figure **59,** the bonded mother substrate **90** is carried in, by a transportation robot, etc., from the end of the substrate carry-in side to the present substrate cutting system. Thereafter, the bonded mother substrate 90 is mounted, in a horizontal state, on each supporting belt 450 of all of the first substrate supporting units **421A** of the first substrate supporting section **420A**.

In this state, the bonded mother substrate **90** is pushed by pushers (not shown) similar to Embodiment **1** so as to contact positioning pins (not shown) arranged along the frame **11B** of the main frame **11**, and at the same time, the bonded mother substrate **90** is pushed by pushers (not shown) so as to contact positioning pins (not shown) arranged along the direction perpendicular to the frame **11B.** Thereby, the bonded mother substrate **90** is positioned in a predetermined position in the mounting base **10** in the substrate cutting system.

Thereafter, as shown in Figure **59,** the side edge of the bonded mother substrate **90** being positioned on the substrate carry-in side is clamped by each clamp member **51** of the clamp device **50,** the side edge being along the frame **11B** of the main frame **11**, and at the same time, the side edge of the bonded mother substrate **90** is clamped by each clamp member **51** of the clamp device **50** which is arranged on the substrate carry-in side in order to be perpendicular to the frame **11B.**

When the side edge of the bonded mother substrate **90** is clamped by the clamp device **50**, the side edge being perpendicular to each other, each clamp member **51** which clamps the side edge of the bonded mother substrate **90** lowers at approximately the same time due to the weight of the bonded mother substrate **90.** Therefore, the bondedmother substrate **90** is additionally supported by the supporting belts **450** of all of the first substrate supporting units **421A**.

In this state, the scribing device guide body **30** is slid to the substrate carry-in side so as to be positioned at a predetermined position which is above the side edge of the bonded mother substrate **90** clamped by the clamp device **50** on the substrate carry-out side in a horizontal state. When the first optical device **38** and the second optical device **39** provided on the scribing device guide body **30** are moved along the scribing device guide body **30** from respective waiting positions, the first optical device **38** and the second optical device **39** capture the first alignment mark and the second alignment mark provided on the bonded mother substrate **90**, respectively.

When the scribing guide body **30** slides, the first substrate supporting section **420A** is slid to the substrate carry-in side and the second substrate supporting section **420B** is slid to the substrate carry-in side. Simultaneously, the supporting belts **450** of the first substrate supporting units **421A** on the scribing device guide body **30** side lower below the scribing device guide body **30**, and the supporting belts **450** of the second substrate supporting units **421B** emerge on the belt holders **421b** of the second substrate supporting units **421B,** respectively, from under the scribing device guide body **30.** Thus, the supporting belts **450** do not rub the lower surface of the bonded mother substrate **90**.

Next, based on the result of the captured first alignment mark and second alignment mark, the inclination of the bonded mother substrate **90** with respect to the direction along the scribing device guide body **30** and the starting and ending position of cutting the bonded mother substrate **90** are calculated by an operational processing device (not shown). The bonded mother substrate **90** is supported by the clamp devices **50** in a horizontal state. Based on the result of the operation, the upper substrate cutting device **60** and the lower substrate cutting device **70** are moved in the X direction corresponding to the inclination of the bonded mother substrate **90,** and at the same time, the scribing device guide body **30** is moved in the Y direction so as to cut the bonded mother substrate **90** (which is referred to as "scribing by linear interpolation" or "cutting" by linear interpolation). In this case, as shown in Figure **60**, each cutter wheel 62a facing each other is pressed so as to make contact onto the top surface and the bottom surface of the bonded mother substrate **90** and rolled on the top surface and the bottom surface of the bonded mother substrate **90,** respectively, so as to form scribing lines **95** on the top surface and the bottom surface of the bonded mother substrate **90.**

The bonded mother substrate **90** is, for example, cut so that two panel substrates **90a** are cut forming two lines in a line direction along the upper guide rail **31** and the lower guide rail **32.** The cutter wheel **62a** of the upper substrate cutting device **60** and the cutter wheel **62a** of the lower substrate cutting device **70** are pressed so as to make contact and rolled along the side edge of the panel substrates 90a in order to cut four panel substrates **90a** from the bonded mother substrate **90.**

In this case, vertical cracks are created, by the cutter wheel **62a** of the upper substrate cutting device **60** and the cutter wheel **62a** of the lower substrate cutting device **70** on the part of the glass substrate where each cutter wheel **62a** is pressed so as to make contact and rolled. As a result, scribing lines **95** are formed thereon. Protrusions are formed, with a predetermined pitch, on the outer circumferential ridge of the blade edge of each cutter wheel **62a.** Thus, a vertical crack having about 90% of the thickness of the glass substrate in the thickness direction is formed on each glass substrate.

A scribing method is effectively applied to cutting the bonded mother substrate **90** in the substrate cutting system according to the present invention. The scribing method uses a cutter head including a mechanism for vibrating a scribing cutter (e.g., a diamond point cutter or a cutter wheel) which scribes the bonded mother substrate **90** so as to periodically change the pressure force of the scribing cutter on the bonded mother substrate **90.**

Furthermore, as a scribing method for forming scribing lines on respective side edges of four panel substrates **90a** in order to cut the four panel substrates **90a** from the bondedmother substrate **90** by pressing and rolling the cutter wheel **62a** of the upper substrate cutting device **60** and the cutter wheel **62a** of the lower substrate cutting device **70** the scribing method according to Embodiment **1** shown in Figure **19** is effectively applied to the substrate cutting system according to Embodiment **2**, other than the one shown in Figure **44**.

During the scribing by the cutter wheel **62a** of the upper substrate cutting device **60** and the lower substrate cutting device **70**, all of the first substrate supporting units **421A** of the first substrate supporting section **420A** and all of the second substrate supporting unit **421B** of the second substrate supporting section **420B** move to the substrate carry-in side and the substrate carry-out side. However, when all of the first substrate supporting units **421A** of the first substrate supporting section **420A** and all of the second substrate supporting unit **421B** of the second substrate supporting section **420B** move to the substrate caimy-in side, the supporting belts **450** of the first substrate supporting units **421A** on the scribing device guide body **30** side lower below the scribing device guide body **30**, and the supporting belts **450** of the second substrate supporting units **421B** emerge on the belt holders **421b** of the second substrate supporting units **421B** from under the scribing device guide body **30.** When all of the first substrate supporting units **421A** of the first substrate supporting section **420A** and all of the second substrate supporting unit **421B** of the second substrate supporting section **420B** move to the substrate carry-out side, the supporting belts **450** of the second substrate supporting units **421B** lower below the scribing device guide body **30,** and the supporting belts **450** of the first substrate supporting units **421A** emerge on the belt holders **421b** of the first substrate supporting units **421A** from under the scribing device guide body **30.** Thus, there is no possibility that the supporting belts **450** rub the lower surface of the bonded mother substrate **90**.

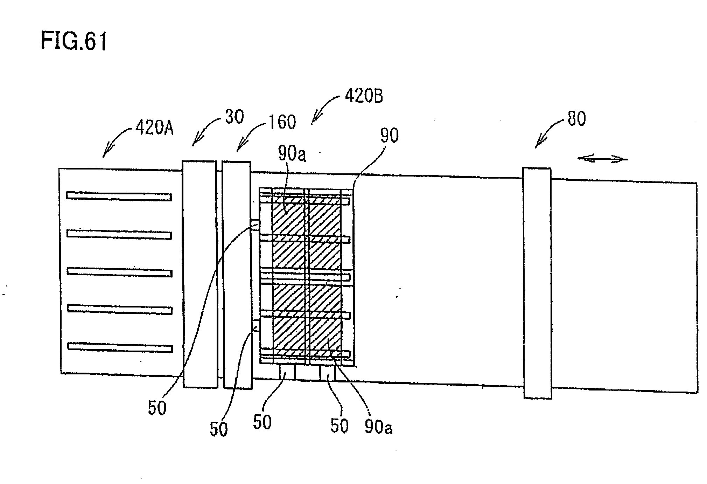

After the scribing line is formed on the bonded mother substrate using the scribing method described above, as shown in Figure **61,** while the bonded mother substrate **90,** on which the scribing line **95** is formed, is supported by the supporting belts **450** of the second substrate supporting units **421B**, a steam unit section **160** moves to the substrate carry-in side. The steam unit section **160** sprays steam on the entire top and bottom surfaces of the bonded mother substrate **90,** on which the scribing line is formed, and completely cuts the bonded mother substrate **90**. After the steam is sprayed, a substrate-adhered material removal device **700** removes the moisture remaining on the top and bottom surfaces of the bonded mother substrate **90**.

When the steam is sprayed on the entire top and bottom surfaces of the bonded mother substrate **90** on which the scribing line is formed, the scribing line formed by the cutter wheel **62a** expands in volume when the upper surface portion of the mother bonded substrate **1** is heated. Thus, a vertical crack extends in the thickness direction of the mother substrate, and the bonded mother substrate **90** is completely cut.

Thereafter, as shown in Figure **61,** all of the panel substrates 90a cut from the bonded mother substrate **90** on the supporting belts 450 of all of the second substrate supporting units **421B** of the second substrate supporting section **420B** are carried out by the carry-out robot **140** or the carry-out robot **500** of the substrate carry-out device **80,** thereby the substrate **93** (edge member) being supported.

The substrate carry-out device **80** and the steam unit section **160** move to the end of the substrate carry-out side.

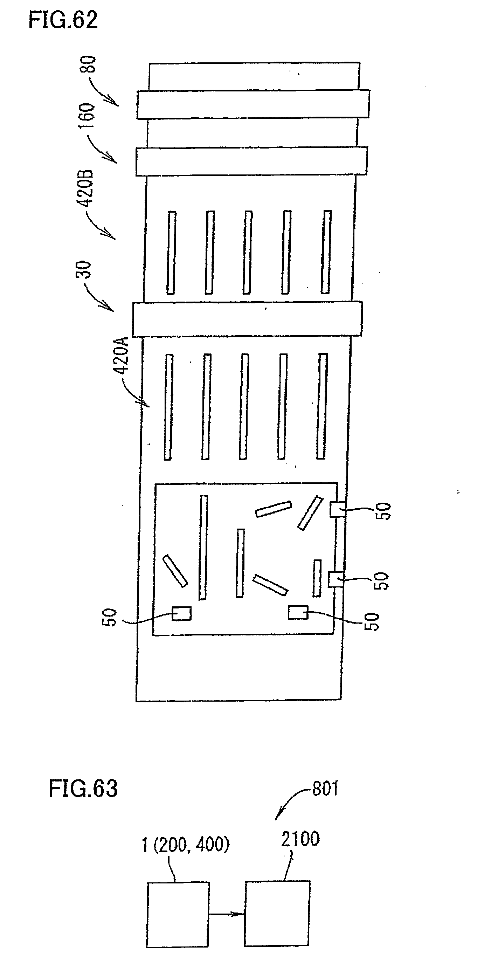

Thereafter, as shown in Figure **62,** the scribing device guide body **30,** the second substrate supporting section **420B** and the first substrate supporting section **420A** are slid to the substrate carry-out side. Simultaneously, the supporting belts **450** of the second substrate supporting units **421B** on the scribing device guide body **30** side lower below the scribing device guide body **30**, and the supporting belts **450** of the first substrate supporting units **421A** emerge on the belt holders **421b** of the first substrate supporting units **421A** from under the scribing device guide body **30**. Thus, there is no possibility that the lower surface of the cut substrate **93** (edge member) rubs the supporting belts **450**.

Thus, the supporting belts **450** of the first substrate supporting units **421A** of the first substrate supporting section **420A** and the supporting belts **450** of the second substrate supporting units **421B** of the second substrate supporting section **420B** sequentially become in a non-contact state from the lower surface of the substrate **93** without rubbing thereof. Therefore, the support of the cut substrate **93** by each supporting belt **450** is sequentially released. Thereafter, the holding of the substrate **93** (edge member) by the clamping device **50** is released. As a result, the cut substrate **93** (edge member) falls down. In this case, the substrate **93** (edge member) thus fallen is guided by a guide plate arranged in a slanted state so as to be accommodated into a cullet accommodation box.

When the mother substrate is made of a metal substrate (e.g., a steel plate), a wood plate, a plastic substrate or a brittle material substrate (e.g. , a ceramic substrate, glass substrate or semiconductor substrate), a method for cutting the mother substrate by using, for example, a laser light, a dicing saw, a cutting saw, a cutting blade or diamond cutter is used.

Furthermore, the substrate includes a bonded substrate for which mother substrates are bonded to each other, a bonded substrate for which different mother substrates are combined and bonded to each other, and a stacked substrate for which mother substrates are combined and stacked on each other, other than the mother substrate.

The substrate cutting system **400** according to Embodiment **3** of the present invention has been described above with reference to Figures **56** to **62.**

### <Embodiment 4>

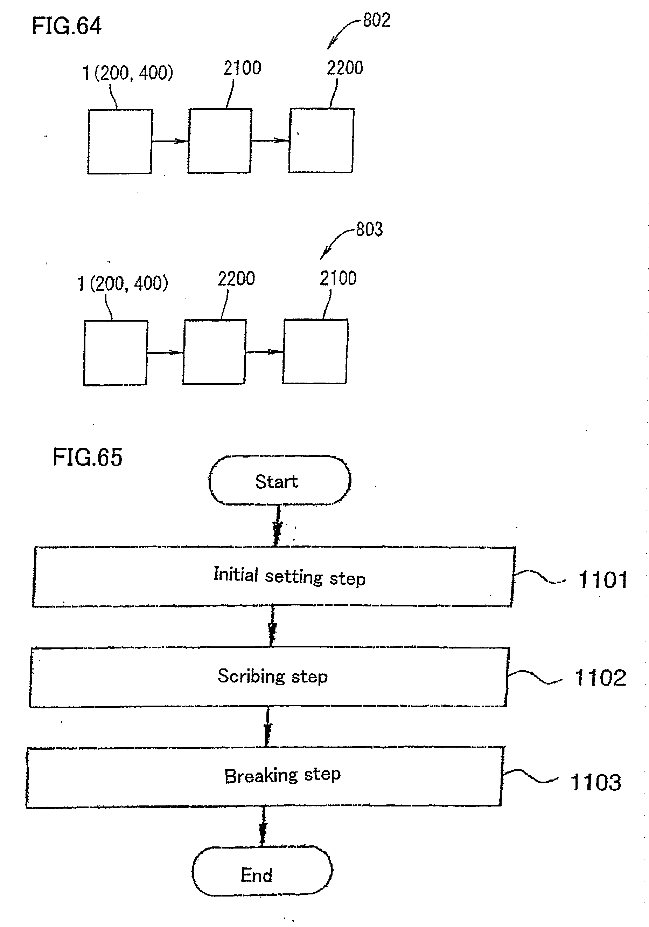

Hereinafter, a substrate manufacturing apparatus according to Embodiment 4 of the present invention will be described with reference to Figures **63** and **64**.

Figure **63** shows a substrate manufacturing apparatus **801** according to Embodiment **4** of the present invention.

A substrate manufacturing apparatus **801** is obtained by connecting a substrate chamfering system **2100** for chamfering end surfaces of the cut substrates to one of the substrate cutting systems **1**, **200** and **400** according to the present invention.

When a cut unit substrate is transported to a device for the next or later step, an edge of an end face of the cut unit substrate can be chipped and a micro fissure cab be created. As a result, a crack resulting from the chip or the fissure can extend in the entire unit substrate and damage the substrate. However, according to the substrate manufacturing apparatus **801,** a chamfering system is connected to the substrate cutting system according to the present invention so as to chamfer end faces of the unit substrate. Thus, it is possible to prevent the damage to the substrate (above, the function of claim **49**).

Figure **64** shows a substrate manufacturing apparatus **802** and a substrate manufacturing apparatus **803** according to Embodiment **4** of the present invention.

The substrate manufacturing apparatuses **802** and **803** are obtained by incorporating an inspection system **220** for inspecting the size, conditions of the top and bottom surf aces, end surfaces, and the like of the cut substrates and for inspecting the functions of the substrates into the substrate manufacturing apparatus **801** described above.

When a cut unit substrate is transported to a device for the next or later step, an edge of an end face of the cut unit substrate can be chipped and a micro fissure can be created. As a result, an undesired crack resulting from the chip or the fissure can extend in the entire unit substrate and damage the substrate. However, according to the substrate manufacturing apparatus **802** or the substrate manufacturing apparatus **803,** a chamfering system is connected to the substrate cutting system according to the present invention so as to chamfer end faces of the unit substrate. Thus, it is possible to prevent the damage to the substrate

Furthermore, powder (cullet powder) created when the substrate is cut into the unit substrates damages the top surface of the substrate and cuts an electrode formed on the unit substrate. However, according to the substrate manufacturing apparatus **802** and the substrate manufacturing apparatus **803,** the inspection system is connected to the substrate cutting system so as to be able to detect a defect in the substrate (e.g., a scratch or cut of the electrode) at an early stage. Thus, the cost for the unit substrate in manufacture can be reduced (above, function of claim **51**).

In the above description of the operations of the substrate cutting systems according to Embodiments **1** to **3**, examples in which the bonded mother glass substrate formed by bonding glass substrates to each other is cut have been described. However, the present invention is not limited to these. For example, operations different from the above description may be performed depending on the types of the substrates to be cut or in order to enhance the functionalities of the devices which constitute the substrate cutting system.

In the above description of Embodiments **1** to **3**, the substrate cutting systems for cutting the bonded mother substrate formed by bonding glass substrates to each other into a plurality of display panels have been mainly described. However, the substrate which can be applied to the present invention is not limited to this.

The substrate used in the substrate cutting system according to the present invention includes a metal substrate (e.g., a steel plate), a wood plate, a plastic plate and a brittle material substrate (e.g., a ceramic substrate, a semiconductor substrate and a glass substrate) as a mother substrate. Furthermore, the substrate used in the substrate cutting system according to the present invention includes a bonded substrate for which mother substrates are bonded to each other, a bonded substrate which different mother substrates are combined and bonded to each other, and a stacked substrate for which mother substrates are combined and stacked on each other.

The substrate cutting system can be applied to the cutting of the mother substrate for a PDP (plasma display) used for an FPD (flat panel display)), a liquid crystal display panel, a reflective projector panel, a transmissive projector panel, an organic EL device panel, an FED (field emission display) and the like as a bonded brittle mother substrate for which brittle material substrates are bonded to each other.

The substrate cutting system and the substrate manufacturing apparatus according to the present invention has been described above with reference to Figures **1** to **64**.

### <Embodiment 5>

Hereinafter, a substrate cutting method according to Embodiment **55** of the present invention will be described with reference to Figures **65** to **67**.

For example, a substrate cutting process is performed by the substrate cutting system **1** which has been described with reference to Figure **1**.

According to the substrate cutting method according to Embodiment **5** of the present invention, scribing lines can be formed with a single stroke on both surfaces of the bonded mother substrate **90.** Herein, the "scribing line with the single stroke" means only one scribing line formed in order to retrieve a plurality of unit substrates from the bonded mother substrate **90.** The scribing line with the single stroke is formed without detaching a scribing cutter from the bonded mother substrate **90**, from the start point to the end point of the scribing line with the single stroke, while the state of pressing the bonded mother substrate **90** from the start point to the end point of the scribing line with the single stroke is maintained.

An upper substrate cutting device **60** forms a scribing line with a single stroke on the upper surface (first surface) of the bonded mother substrate **90.** A lower substrate cutting device **70** forms a scribing line with a single stroke on the lower surface (second surface) of the bonded mother substrate **90.**

Figure **65** shows a cutting processing procedure for cutting the bonded, mother substrate **90** according to an embodiment of the present invention. The execution of the cutting processing is, for example, controlled by a computer included in the substrate cutting system **1**. The computer controls the movement of the upper substrate cutting device **60**, the lower substrate cutting device **70**, the scribing device guide body **30** and a substrate supporting device **20.**

Hereinafter, a procedure for cutting the bonded mother substrate **90** using the substrate cutting system **1** will be described step by step.

The procedure for cutting the bonded mother substrate 90 using the substrate cutting device **1** includes a scribing step and a breaking step. As necessary, an initial setting step is performed.

Step **1101:** The initial setting step is performed. The initial setting step is a step for setting an initial state of the substrate cutting system **1** before the scribing step is started.

After the initial setting step is completed, the process continues to step **1102.**

Step **1102:** The scribing step is performed. The scribing step is a step for forming a scribe line on the bonded mother substrate **90.** The scribing step will be described later in detail.

After the scribing step is completed, the process continues to step **1103**.

Step **1103:** The breaking step is performed. The breaking step is a step for breaking the bonded mother substrate **90** along the scribe line.

After the breaking step is completed, the process is terminated.

Hereinafter, the scribing step performed in step **1102** (see Figure **65)** will be described in detail.

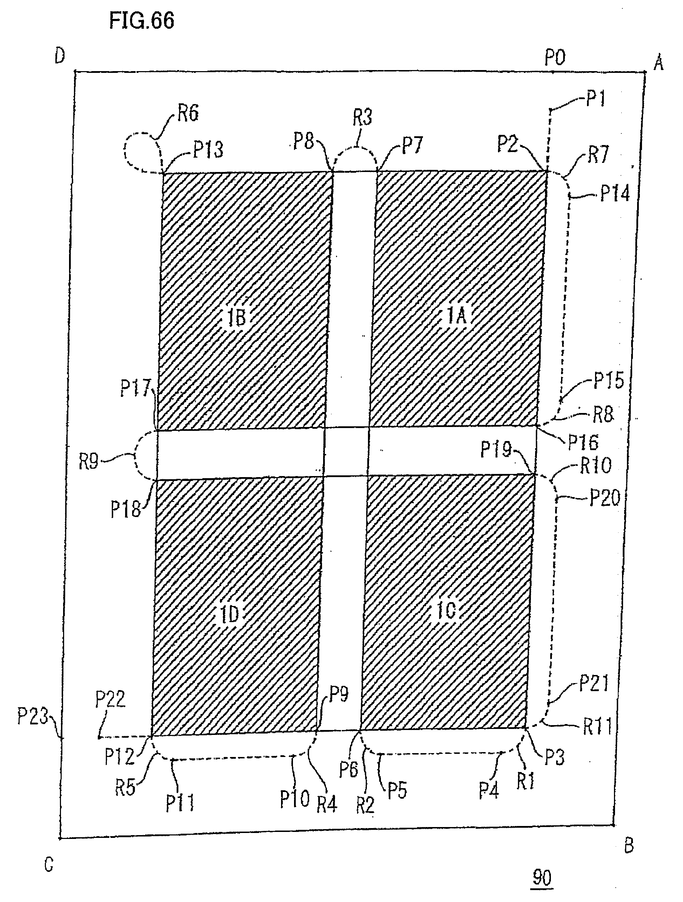

Figure **66** shows the upper surface of the bonded mother substrate **90** which is used in the scribing step performed in step **1102** (Figure **65**). A line to be scribed is formed in the upper surface of the bonded mother substrate **90.** When the upper substrate cutting device **60** and the lower substrate cutting device **70** are moved along the line to be scribed, a scribing line is formed the upper surface of the on the bonded mother substrate **90**. A line to be scribed is also formed on the lower surface of the bonded mother substrate **90**, the line to be scribed corresponding to the line to be scribed on the upper surface of the bonded mother substrate **90.**

The line to be scribed formed on the upper surface of the bonded mother substrate **90** includes a plurality of straight lines (straight line **P1P2,** straight line **P2P3**, straight line **P4P5**, straight line **P6P7,** straight line **P8P9**, straight line **P10P11,** straight line **P12P13,** straight line **P13P2,** straight line **P14P15,** straight line **P16P17,** straight line **P18P19,** straight line **P20P21,** straight line **P3P12** and straight line **P12P22)** and a plurality of curves (curve **R1** to curve **R11).**

When the substrate cutting system **1** forms the scribing line along the line to be scribed and breaks the scribing line along the bonded mother substrate **90**, it cuts the bonded mother substrate **90** to retrieve unit substrates **1A, 1B, 1C** and **1D.**

Of the bonded mother substrate **90,** the unit substrate **1A** is a portion circumscribed by the straight line **P2P3,** the straight line **P6P7**, the straight line **P13P2** and the straight line **P16P17.** Of the bonded mother substrate **90,** the unit substrate **1B** is a portion circumscribed by the straight line **P8P9,** the straight line **P12P13,** the straight line **P13P2** and the straight line **P16P17**. Of the bonded mother substrate **90,** the unit substrate **1C** is a portion circumscribed by the straight line **P2P3,** the straight line **P6P7 ,** the straight line **P18P19** and the straight line **P3P12.** Of the bonded mother substrate **90,** the unit substrate **1D** is aportion circumscribed by the straight line **P8P9,** the straight line **P12P13,** the straight line **P18P19** and the straight line **P3P12.** The unit substrates **1A, 1B, 1C** and **1D** are arranged with appropriate spaces between each other.

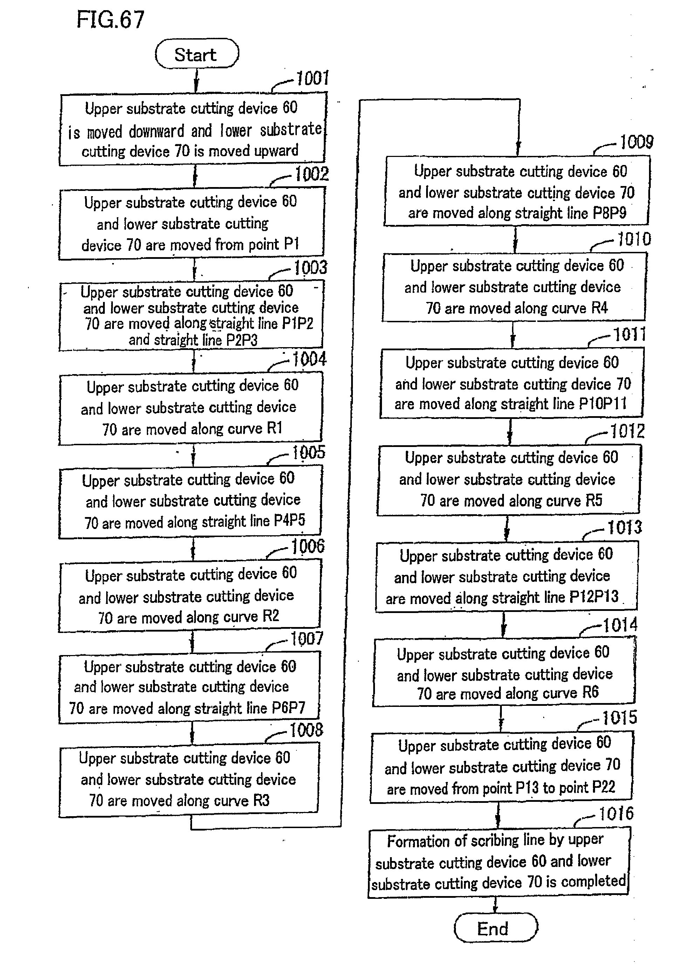

Figure **67** is a scribing procedure which is performed during the scribing step performed in step **1102** (see Figure **65**).

Hereafter, the scribing procedure will be described step by step with reference to Figures **66** and **67**.

Step **1001:** The computer controls the upper substrate cutting device **60** and the lower substrate cutting device **70** such that the upper substrate cutting device **60** moves downward and the lower substrate cutting device **70** moves upward, both of which are at predetermined waiting positions. When the upper substrate cutting device **60** moves downward to a position of 0.1mm to 0.2mm from the upper surface of the bonded mother substrate **90** and the lower substrate cutting device **70** moves upward to a position of 0.1mm to 0.2mm from the lower surface of the bonded mother substrate **90**, the cutter wheels **62a**, respectively, press the bonded mother substrate **90** so as to sufficiently respond to concave-convex portions of both main surfaces of the bonded mother substrate **90.** The upper substrate cutting device **60** and the lower substrate cutting device **70** are moved along an upper guide rail **31** and a lower guide rail **32**, respectively.

Step **1002**: Formation of the scribing line starts from the outer circumferential edge (an area circumscribed by an area **ABCD** and an area **P2P3P12P13)** of the bonded mother substrate **90.** Specifically, while each cutter wheel **62a** is pressed onto the bonded mother substrate **90,** each cutter wheel **62a** is moved along the line to be scribed from point **P1** (a point within the outer circumferential edge of the mother substrate). Thus, scribing lines are formed on both main surfaces of the bonded mother substrate **90**.

Step **1003**: Scribing lines are formed along an outside' side of the unit substrate. Specifically, while each cutter wheel **62a** is pressed onto the bonded mother substrate **90,** the upper substrate cutting device **60** and the lower substrate cutting device **70** are moved along the straight line **P1P2** and the straight line **P2P3**. Thus, scribing lines are formed on both main surfaces of the bonded mother substrate **90**.

Step **1004**: Scribing lines are formed at an outer circumferential edge of the bonded mother substrate **90**. Specifically, while each cutter wheel **62a** is pressed onto the bonded mother substrate **90**, the upper substrate cutting device **60** and the lower substrate cutting device **70** are moved along the curve **R1.** Thus, scribing lines are formed on both main surfaces of the bonded mother substrate **90.** The upper substrate cutting device **60** and the lower substrate cutting device **70** are moved such that the track of each cutter wheel **62a** has an arc (curve **R1**) with a central angle of **90** degrees.

Step **1005**: Scribing lines are formed at an outer circumferential edge of the bonded mother substrate **90**. Specifically, while each cutter wheel **62a** is pressed onto the bonded mother substrate **90**, the upper substrate cutting device **60** and the lower substrate cutting device **70** are moved along the straight line **P4P5.** Thus, scribing lines are formed on both main surfaces of the bonded mother substrate **90.**

Step **1006:** Scribing lines are formed at an outer circumferential edge of the bonded mother substrate **90.** Specifically, while each cutter wheel **62a** is pressed onto the bonded mother substrate **90,** the upper substrate cutting device **60** and the lower substrate cutting device **70** are moved along the curve **R2.** Thus, scribing lines are formed on both main surfaces of the bonded mother substrate **90.** The upper substrate cutting device **60** and the lower substrate cutting device **70** are moved such that the track of each cutter wheel **62a** has an arc (curve **R2)** with a central angle of 90 degrees.

Step **1007**: While each cutter wheel **62a** is pressed onto the bonded mother substrate **90**, the upper substrate cutting device **60** and the lower substrate cutting device **70** are moved within the area between the unit substrates. Thus, scribing lines are formed along the inside' side of the unit substrates. Specifically, while each cutter wheel **62a** is pressed onto the bonded mother substrate **90**, the upper substrate cutting device **60** and the lower substrate cutting device **70** are moved along the straight line **P6P7**. Thus, scribing lines are formed on both main surfaces of the bonded mother substrate **90**.

Step **1008:** Scribing lines are formed at an outer circumferential edge of the bonded mother substrate **90.** Specifically, while each cutter wheel **62a** is pressed onto the bonded mother substrate **90,** the upper substrate cutting device **60** and the lower substrate cutting device **70** are moved along the curve **R3.** Thus, scribing lines axe formed on both main surfaces of the bonded mother substrate **90.** The upper substrate cutting device **60** and the lower substrate cutting device **70** are moved such that the track of each cutter wheel **62a** has an arc (curve **R3**) with a central angle of 180 degrees.

Step **1009**: While each cutter wheel **62a** is pressed onto the bonded mother substrate **90**, the upper substrate cutting device **60** and the lower substrate cutting device **70** are moved within the area between the unit substrates. Thus, scribing lines are formed along the inside' side of the unit substrates. Specifically, while each cutter wheel **62a** is pressed onto the bonded mother substrate **90**, the upper substrate cutting device **60** and the lower substrate cutting device **70** are moved along the straight line **P8P9**. Thus, scribing lines are formed on both main surfaces of the bonded mother substrate **90.**

Step **1010**: Scribing lines are formed at an outer circumferential edge of the bonded mother substrate **90**. Specifically, while each cutter wheel **62a** is pressed onto the bonded mother substrate **90,** the upper substrate cutting device **60** and the lower substrate cutting device **70** are moved along the curve **R4**. Thus, scribing lines are formed on both main surfaces of the bonded mother substrate **90**. The upper substrate cutting device **60** and the lower substrate cutting device **70** are moved such that the track of each cutter wheel **62a** has an arc (curve **R4**) with a central angle of **90** degrees

Step **1011:** Scribing lines are formed at an outer circumferential edge of the bonded mother substrate **90.** Specifically, while each cutter wheel **62a** is pressed onto the bonded mother substrate **90,** the upper substrate cutting device **60** and the lower substrate cutting device **70** are moved along the straight line **P10P11.** Thus, scribing lines are formed on both main surfaces of the bonded mother substrate **90**.

Step **1012:** Scribing lines are formed at an outer circumferential edge of the bonded mother substrate **90.** Specifically, while each cutter wheel **62a** is pressed onto the bonded mother substrate **90,** the upper substrate cutting device **60** and the lower substrate cutting device **70** are moved along the curve **R5**. Thus, scribing lines are formed on both main surfaces of the bonded mother substrate **90**. The upper substrate cutting device **60** and the lower substrate cutting device **70** are moved such that the track of each cutter wheel **62a** has an arc (curve **R5**) with a central angle of 90 degrees.

Step **1013:** Scribing lines are formed along an outside' side of the unit substrate. Specifically, while each cutter wheel **62a** is pressed onto the bonded mother substrate **90**, the upper substrate cutting device **60** and the lower substrate cutting device **70** are moved along the straight line **P12P13.** Thus, scribing lines are formed on both main surfaces of the bonded mother substrate **90**.

Step **1014:** Scribing lines are formed at an outer circumferential edge of the bonded mother substrate **90.** Specifically, while each cutter wheel **62a** is pressed onto the bonded mother substrate **90**, the upper substrate cutting device **60** and the lower substrate cutting device **70** are moved along the curve **R6.** Thus, scribing lines are formed on both main surfaces of the bonded mother substrate **90.** The upper substrate cutting device **60** and the lower substrate cutting device **70** are moved such that the track of each cutter wheel **62a** has a smooth arc (curve **R6**)**.**

Step **1015**: The control section presses each cutter wheel **62a** onto the bonded mother substrate **90,** and moves the upper substrate cutting device **60** and the lower substrate cutting device **70**, in the following order, along the straight line **P13P2**, the curve **R7**, the straight line **P14P15**, the curve R8, the straight line **P16P17**, the curve **R9**, the straight line **P18P19**, the curve **R10**, the straight line **P20P21**, the curve **R11,** the straight line **P3P12** and the straight line **P12P22.** Thus, scribing lines are formed on both main surfaces of the bonded mother substrate **90.**

Step **1016:** Formation of the scribing line is completed at point **P22**.

When the upper substrate cutting device **60** is moved upward to the predetermined position and the lower substrate cutting device **70** is moved downward to the predetermined position, the scribing step is completed.

As shown in steps **1001** to **1016,** while each cutter wheel **62a** is pressed onto the bonded mother substrate **90** such that the pressing of each cutter wheel **62a** onto the bonded mother substrate **90** is not interrupted, the upper substrate cutting device **60** and the lower substrate cutting device **70** are moved from point **P1** to point **P22.** As a result, the scribing lines are formed on the bonded mother substrate **90** for cutting the unit substrates **1A, 1B, 1C** and **1D** from the bonded mother substrate **90.** Thus, the scribing line for cutting the unit substrate **1A** from the bondedmother substrate **90** and the scribing line for cutting the unit substrate **1B** from the bonded mother substrate **90** are formed without stopping the movement of pressure onto the bonded mother substrate **90.** Thus, the scribing processing time for forming the scribing lines can be reduced. The scribing lines formed on the bonded mother substrate **90** can prevent the bonded mother substrate **90** from being cut by an external factor (e.g., the movement of the substrate supporting device). Furthermore, since the mother substrate is unlikely to be cut into two or more portions during forming the scribing lines, it is unlikely that a chip, an oblique cut face or the like will be created on the cut faces of the unit substrate onto which steam is sprayed by the steam unit section (above, function of claims 52 to 55).

According to the scribing procedure, the upper substrate cutting device **60** and the lower substrate cutting device **70** are moved along a curve (e.g., 2.0R to 6. OR) for cutting the unit substrate **1A** from the bondedmother substrate **90** such that a scribing line formed along a first direction and a scribing line to be formed along a second direction, which is different from the first direction, are connected by a curve. Thus, scribing lines are formed on both main surfaces of the bonded mother substrate **90.** For example, where the moving direction of the upper substrate cutting device 60 and the lower substrate cutting device **70** changes to a direction along the straight line **P4P5** from a direction along the straight line **P2P3** (curve **R1),** while each cutter wheel **62a** is pressed onto the bonded mother substrate **90,** the upper substrate cutting device 60 and the lower substrate cutting device **70** are moved along the curve **R1.** Thus, scribing lines are formed on both main surfaces of the bonded mother substrate **90** (see Figure **66**).

As described above, the pressure onto the bonded mother substrate **90** can be moved such that the scribing line formed along the first direction and the scribing line to be formed along the second direction are connected by a curve. Thus, damage to each cutter wheel **62a** can be reduced, the damage being created when the direction of each cutter wheel **62a** is changed from the first direction to the second direction (above, function of claim 57) .

Furthermore, as described with reference to Figure **14,** when a cutter head **65** including a servo motor is used, the response to the strength of the load to be transmitted to each cutter wheel **62a** can be quicker. Thus, when the pressure of each cutter wheel **62a** moves from an inside' side of a unit substrate or an outside' side of the unit substrate to an outer circumferential edge of the bonded mother substrate **90**, the load onto each cutter wheel **62a** can be reduced. Furthermore, when the pressure of each cutter wheel **62a** is moved on the outer circumferential edge of the bonded mother substrate **90**, the load onto each cutter wheel **62a** can be reduced compared to the load when each cutter is moving on other portions.

Specifically, when each cutter wheel **62a** is moved on a broken line (the straight line **P1P2,** the curve **R1,** the straight line **P4P5,** the curve **R2,** the curve **R3,** the curve **R4,** the straight line **P10P11,** the curve **R5,** the curve **R6,** the curve **R7,** the straight line **P14P15,** the curve **R8,** the curve **R9,** the curve **R10,** the straight line **P20P21,** the curve **R11** and the straight line **P12P22:** see Figure **66)** of the line to be scribed, the load onto each cutter wheel **62a** can be reduced.

As described above, in the case where the cutter head **65** including the servo motor is used, when each cutter wheel **62a** scribes the bonded mother substrate **90,** the pressure of each cutter wheel **62a** onto the bonded mother substrate **90** can be reduced at an arbitrary location. Thus, abrasion, damage or the like of the cutter wheel **62a** can be suppressed, and the cutter wheel **62a** can be stably used for a long period of time (above, function of claim 56).

The substrate cutting system, substrate manufacturing apparatus and the substrate cutting method according to the present invention have been described above with reference to Figures **1** to **67.** However, the present invention should not be interpreted solely based on the embodiments described above. It is understood that the scope of the present invention should be interpreted solely based on the claims. It is also understood that those skilled in the art can implement equivalent scope of technology, based on the description of the present invention and common knowledge from the description of the detailed preferred embodiments of the present invention. Furthermore, it is understood that any patent, any patent application and any references cited in the present specification should be incorporated by reference in the present specification in the same manner as the contents are specifically described therein.

### INDUSTRIAL APPLICABILITY

The substrate cutting system according to the present invention is capable of simultaneously performing a cutting processing in two directions orthogonal to each other on the top and bottom surfaces of the substrate with one setting of the substrate since the substrate cutting system according to the present invention has a structure that the substrate is held by clamp devices and is supported by a substrate supporting device which slides in accordance with to the movement of a cutting guide body. Thus, the size of the entire system can be reduced, and a variety of substrates can be effectively cut.

In the field of a substrate cutting system and a substrate cutting line system which are used for cutting a variety of mother substrate materials, such as a glass substrate used for a display panel of a liquid crystal display device, etc., the objective thereof is to make the footprint of the substrate cutting system and the substrate cutting line system reduced and compact and to efficiently cut a variety of mother substrates.

## Claims

1. A substrate cutting system, comprising:
a pair of scribing line forming means arranged facing each other;
a pair of scribing devices for supporting the pair of scribing forming line means such that one of the pair of scribing forming line means moves on a first surface of a substrate in an X axial direction and the other of the pair of scribing forming means moves on a second surface of the substrate in the X axial direction;
a scribing device guide body for supporting the pair of scribing devices such that the pair of scribing devices moves in a Y axial direction; and
a substrate supporting means for supporting the substrate in an X-Y plane such that the pair of scribing forming line means scribes the first surface of the substrate and the second surface of the substrate.

2. A substrate cutting system according to claim 1, wherein the substrate supporting means includes:
a substrate supporting device being supporting by the scribing device guide body and moving together with the pair of scribing devices in the Y axial direction; and
a fixing device for fixing the substrate in the X-Y plane.

3. A substrate cutting system according to claim 2, wherein the substrate supporting device supports the substrate such that the substrate supporting device does not rub the substrate or exert any force on the substrate when the pair of scribing devices and the scribing device guide body move in the Y axial direction.

4. A substrate cutting system according to claim 2, wherein the substrate supporting device includes:
a first substrate supporting section being provided on one side of the substrate supporting device with respect to a moving direction of the scribing device guide body.

5. A substrate cutting system according to claim 4, wherein the first substrate supporting section includes a plurality of first substrate supporting units, the plurality of first substrate supporting units moving in parallel along the moving direction of the scribing device guide body, and
the plurality of first substrate supporting units moves together with the scribing device guide body along with the movement of the scribing device guide body.

6. A substrate cutting system according to claim 5, wherein the first substrate supporting unit includes a substrate supporting means for supporting the substrate.

7. A substrate cutting system according to claim 6, wherein the substrate supporting section is a plurality of cylindrical rollers.

8. A substrate cutting system according to claim 7, comprising at least one rotation transmission means for rotating the plurality of cylindrical rollers in accordance with the movement of the scribing device guide body.

9. A substrate cutting system according to claim 7, comprising a control section for rotating the plurality of cylindrical rollers in accordance with the movement of the scribing device guide body.

10. A substrate cutting system according to claim 6, wherein the substrate supporting means is a plurality of belts.

11. A substrate cutting system according to claim 10, comprising at least one rotation transmission means for circling the plurality of belts in accordance with the movement of the scribing device guide body.

12. A substrate cutting system according to claim 10, comprising a control section for circling the plurality of belts using a motor in accordance with the movement of the scribing device guide body.

13. A substrate cutting system according to claim 2, wherein the substrate supporting device includes:
a second substrate supporting section being provided on another side of the substrate supporting device with respect to a moving direction of the scribing device guide body.

14. A substrate cutting system according to claim 13, wherein the second substrate supporting section includes a plurality of second substrate supporting units, the plurality of second substrate supporting units moving in parallel along the moving direction of the scribing device guide body.

15. A substrate cutting system according to claim 14, wherein the second substrate supporting unit includes a substrate supporting means for supporting the substrate.

16. A substrate cutting system according to claim 15, wherein the substrate supporting section is a plurality of cylindrical rollers.

17. A substrate cutting system according to claim 16, comprising at least one rotation transmission means for rotating the plurality of cylindrical rollers in accordance with the movement of the scribing device guide body.

18. A substrate cutting system according to claim 16, comprising a control section for rotating the plurality of cylindrical rollers in accordance with the movement of the scribing device guide body.

19. A substrate cutting system according to claim 15**,** wherein the substrate supporting means is a plurality of belts.

20. A substrate cutting system according to claim 19, comprising at least one rotation transmission means for circling the plurality of belts in accordance with the movement of the scribing device guide body.

21. A substrate cutting system according to claim 19, comprising a control section for circling the plurality of belts using a motor in accordance with the movement of the scribing device guide body.

22. A substrate cutting system according to claim 1, wherein the pair of scribing devices each includes a cutter head for transmitting a pressing force of the scribing forming means onto the substrate using a servo motor.

23. A substrate cutting system according to claim 1, comprising a steam unit section for spraying steam onto the first surface and the second surface of the substrate.

24. A substrate cutting system according to claim 23, wherein a substrate drying means is provided in the steam unit section, the substrate drying means being for drying the first surface and the second surface of the substrate.

25. A substrate cutting system according to claim 24, wherein the substrate drying means includes:
at least one air knife body having a slit section formed thereon, the slit section capable of discharging a pressurized gas;
an air knife supporting section for supporting the at least one air knife body such that a fluid lead-in path is formed between the at least one air knife body and a main surface of the substrate in a substrate transportation path, the at least one air knife body and the substrate move relative to each other in the substrate transportation path, the fluid lead-in path having approximately a uniform shape in a direction perpendicular to the relative moving direction: and
a wall face, arranged facing the at least one air knife body in the relative moving direction, for constituting a fluid lead-out path, the fluid lead-out path leading out the dry gas such that the dry gas, which has been discharged from the slit section and passed through the fluid lead-in path, moves away from the main surface of the substrate.

26. A substrate cutting system according to claim 25, wherein the wall face is arranged at a position facing the at least one air knife unit body such that a fluid-sectional area of the fluid lead-out path is larger than fluid-sectional area of the fluid lead-in path.

27. A substrate cutting system according to claim 25, wherein the air knife supporting section includes a clearance adjustment means for adjusting a clearance between the at least one air knife body and the main face of the substrate using the Venturi effect which occurs when the dry gas passes through the fluid lead-in path.

28. A substrate cutting system according to claim 27 , wherein the clearance adjustment means includes:
an elastic member for supporting the at least one air knife body between the elastic member and the main surface of the substrate in an oscillating manner; and
a laminar flow forming face for passing the dry gas between the laminar flow forming face and the main surface of the substrate in a laminar flow state, the laminar flow forming face being formed on one side surface of the at least one air knife body, the one side surface facing the main surface of the substrate and forming a portion of the fluid lead-in path.

29. A substrate cutting system according to claim 25, wherein each side of the at least one pair of air knife bodies on which the slit section is formed is arranged facing each other.

30. A substrate cutting system according to claim 26, wherein each side of the at least one air knife body on which the slit section is formed is arranged facing each other.

31. A substrate cutting system according to claim 23, comprising a substrate carry-out device for retrieving the substrate cut by the steam unit section.

32. A substrate cutting system according to claim 31, wherein the substrate carry-out device includes a carry-out robot,
the carry-out robot includes:
a substrate holding means for holding the substrate;
a substrate rotating means for rotating the substrate holdingmeans, having the substrate supported thereby, around a first axis vertical to the substrate; and
a substrate circling means for circling the substrate rotating means around a second axis, the second axis being different from the first axis vertical to the substrate held by the substrate holding means.

33. A substrate cutting system according to claim 32, wherein the circling of the substrate holding means by the substrate circling means is transmitted to the substrate rotatingmeans by a dynamic power transmission mechanism which results in the rotation of the substrate rotating means to rotate.

34. A substrate cutting system according to claim 33, wherein the rotating direction of the substrate holding means by the substrate rotating means is opposite to the circling direction of the substrate holding means by the substrate circling means.

35. A substrate cutting system according to claim 34, wherein the rotating angle, of the substrate holding means by the substrate rotating means is twice the circling angle of the substrate holding means by the substrate circling means.

36. A substrate cutting system according to claim 32, wherein the rotating drive of the substrate holding means by the substrate rotating means and the circling drive of the substrate holding means by the substrate circling means are independent from each other.

37. A substrate cutting system according to claim 36, wherein the dynamic power supply of the substrate rotating means and the dynamic power supply of the substrate circling means are independent from each other.

38. A substrate cutting system according to claim 31, further comprising a substrate inversion device for inverting the top and bottom surfaces of the substrate transported by the substrate transportation device.

39. A substrate cutting system according to claim 1, comprising a positioning unit section for positioning the substrate.

40. A substrate cutting system according to claim 39, wherein the positioning unit section includes a plurality of vacuum adsorption heads for holding the substrate.

41. A substrate cutting system according to claim 32, wherein the substrate holding means is a plurality of vacuum adsorption heads for holding the substrate.

42. A substrate cutting system according to claim 40, wherein the vacuum adsorption head includes:
a vacuum adsorption pad for vacuum-adsorbing the substrate;
a suction shaft for holding the suction pad and having an exhaust hole provided thereon, the exhaust hole for exhausting air into the adsorption pad;
a casing section for regulating the moving range of the suction shaft to hold the suction shaft such that the suction shaft is slightly movable; and
an elastic supporting member for elastically holding the suction shaft such that the suction shaft is slightly movable within the casing section in its axial direction and in a direction oblique to the axial direction.

43. A substrate cutting system according to claim 42, wherein the suction shaft includes the step section in a shape of handguard provided at approximately in the middle of the casing section,
the casing section includes:
a cylindrical section having a space therewithin, the space for holding the elastic supporting member such that the elastic supporting member is deformable;
an upper casing plate for closing an upper end of the cylindrical section with a first opening remaining open; and
a lower casing plate for closing a lower end of the cylindrical section with a second opening remaining open,
the elastic supporting section includes:
an upper spring held between the upper casing plate and the step section;
a lower spring held between the lower casing plate and the step section.

44. A substrate cutting system according to claim 40, wherein the plurality of vacuum adsorption heads includes a plurality of adsorption pads for holding the substrate by suction or causing compressed air to gush so as to float the substrate, and
the plurality of vacuum adsorption heads positions the substrate in a state in which a laminar flow is formed between each of the plurality of adsorption pads and the substrate.

45. A substrate cutting system according to any one of claims 31, 32 and 38, comprising a removal means for removing an unnecessary portion of the cut substrate.

46. A substrate cutting system according to claim 10, wherein the plurality of belts is wound around between a frame on a carry-in side of the substrate and a frame on a carry-out side of the substrate, and
the plurality of belts lowers below the scribing device guide body or emerges above the scribing device guide body from under the scribing device guide body while the first substrate supporting section is moving.

47. A substrate cutting system according to claim 19, wherein the plurality of belts is wound around between a frame on a carry-in side of the substrate and a frame on a carry-out side of the substrate, and
the plurality of belts lowers below the scribing device guide body or emerges above the scribing device guide body from under the scribing device guide body while the second substrate supporting section is moving.

48. A substrate cutting system according to claim 1, wherein the substrate is a bonded mother substrate for which a pair of mother substrates are bonded to each other.

49. A substrate manufacturing apparatus, comprising:
a substrate cutting system according to claim 1; and
a chamfering system for chamfering an edge face of a cut substrate,
wherein the substrate cutting system is connected to the chamfering system.

50. A substrate manufacturing apparatus, comprising:
a substrate cutting system according to claim 1; and
an inspection system for inspecting the function of a cut substrate,
wherein the substrate cutting system is connected to the inspection system.

51. A substrate manufacturing apparatus according to claim 49, further comprising an inspection system for inspecting the function of the cut substrate.

52. A method for cutting a plurality of unit substrates from a mother substrate, the method comprising:
a forming step of forming scribing lines on a first surface of the mother substrate and a second surface of the mother substrate by a pair of scribing line forming means,
the forming step includes the step of forming, on the mother substrate, a first scribing line for cutting a first unit substrate from the mother substrate and a second scribing line for cutting a second unit substrate from the mother substrate by moving the pressure onto the mother substrate by each of the pair of scribing line forming means such that the pressure onto the mother substrate is not interrupted.

53. A substrate cutting method according to claim 52 wherein the forming step further includes the step of forming number N scribing line for cutting number N unit substrate from the mother substrate by moving the pressure onto the mother substrate such that the pressure onto the mother substrate is not interrupted, and N is an integer which is larger than or equal to 3.

54. A substrate cutting method according to claim 52 wherein the forming step includes the steps of:
(1) forming the scribing line on the mother substrate by moving the pressure onto the mother substrate along the outside' side of the first unit substrate and the outside' side of the second unit substrate;
(2) forming the scribing line on the mother substrate by moving the pressure onto the mother substrate on an edge of an outer circumference of the mother substrate; and
(3) forming the scribing line on the mother substrate by moving the pressure onto the mother substrate along the inside' side of the first unit substrate and the inside' side of the second unit substrate.

55. A substrate cutting method according to claim 54 wherein the inside' side of the second unit substrate faces the inside's side of the first unit substrate,
the step (3) includes the steps of:
(3a) forming the scribing line on the mother substrate by moving the pressure onto the mother substrate along the inside' side of the first unit substrate;
(3b) after performing (3a), forming the scribing line on the mother substrate by moving the pressure onto the mother substrate on an edge of an outer circumference of the (mother) substrate;
(3c) after performing (3b), forming the scribing line on the mother substrate by moving the pressure onto the mother substrate along the inside' side of the second unit substrate;
(3d) after performing (3c), forming the scribing line on the mother substrate by moving the pressure onto the mother substrate on an edge of an outer circumference of the (mother) substrate;

56. A substrate cutting method according to claim 52 wherein the forming step further includes the step of reducing the pressure onto the mother substrate.

57. A substrate cutting method according to claim 52 wherein the forming step includes the steps of:
forming the scribing line along a first direction; and
moving the pressure onto the mother substrate such that a scribing line formed along the first direction and a scribing line to be formed along a second direction are connected to each other by a curve, the second direction being different from the first direction.

58. A method for cutting a brittle material substrate, the brittle material substrate being cut by a device,
the device including:
a substrate supporting device for supporting a lower surface of the brittle material substrate and fixing at least one end of the brittle material substrate; and
a pair of scribing line forming means arranged on both sides of the brittle material substrate's surface, the pair of scribing forming section facing each other with the brittle material substrate therebetween,
the substrate supporting device has a space in the center of the substrate supporting device,
the pair of scribing line forming means is arranged in the space in the middle of the substrate supporting device,
the method comprising the step of:
moving the pair of scribing line forming means in at least one direction of an X axial direction and a Y axial direction and further moving the substrate supporting device in at least one direction of the X axial direction and the Y axial direction so as to cut the brittle material substrate.

59. A substrate cutting method according to claim 58, wherein the substrate supporting device supports the brittle material substrate so as not to rub the substrate or exert any force on the brittle material substrate.
